# EUROPEAN PATENT APPLICATION

(11) **EP 4 711 074 A1**
(43) Date of publication of application: **18.03.2026**
(21) Application number: 23960095.0
(22) Date of filing: 27.11.2023
(51) Int. Cl.: B23P 23/02, B23P 23/00, B23Q 1/48, B23Q 1/50, B23Q 1/62, B25J 21/00

(54) **MACHINE TOOL AND WORKPIECE PROCESSING METHOD**

(71) Applicant: Yamazaki Mazak Corporation, Niwa-gun, Aichi 480-0197 (JP)
(72) Inventor: HORIBE, Kazuya, Niwa-gun, Aichi 480-0197 (JP); MATSUBARA, Eiji, Niwa-gun, Aichi 480-0197 (JP); TOONNO, Kaoru, Niwa-gun, Aichi 480-0197 (JP); KITAHARA, Takashi, Niwa-gun, Aichi 480-0197 (JP)
(74) Representative: TBK
(86) International application number: PCT/JP2023/042370
(87) International publication number: WO 2025/115072

(57) **Abstract**

A machine tool includes a work holder, a first machiner, and a first robot. The work holder includes a table configured to support a workpiece. The first machiner includes a machining head and a plurality of linear movers. The machining head is configured to hold a first rotation tool that is configured to machine the workpiece supported by the table. The plurality of linear movers are configured to move the machining head three-dimensionally. The first robot includes a multi-joint arm that is configured to change a position and an orientation of a second rotation tool. The first robot is configured to machine the workpiece supported by the table using the second rotation tool. The work holder includes a first driver configured to turn the table about a first axis.

## Description

### Technical Field

The present invention relates to a machine tool and a method of machining a workpiece.

### Background Art

The use of a machine tool equipped with a plurality of machining heads to improve production efficiency is known.

As a related technique, Patent Literature 1 discloses a machining center. The machining center recited in Patent Literature 1 includes a first machining head and a second machining head.

As another related technique, Patent Literature 2 discloses a machine working system. The machine working system recited in Patent Literature 2 includes a platform and a plurality of machining units. The platform is formed by connecting a plurality of track modules. The plurality of machining units move on a track of the platform.

### Citation List

### Patent Literature

PTL1: JP 2000-296429 A.
PTL2: JP 2023-134393 A.

### Summary of Invention

### Technical Problem

It is an object of the present invention to provide such a machine tool and such a method of machining a workpiece that are capable of improving machining efficiency, eliminating or minimizing installation space expansion, and maintaining machining accuracy. Solution to Problem

According to some embodiments of the present invention, a machine tool includes a work holder, a first machiner, and a first robot. The work holder includes a table configured to support a workpiece. The first machiner includes a machining head and a plurality of linear movers. The machining head is configured to hold a first rotation tool that is configured to machine the workpiece supported by the table. The plurality of linear movers are configured to move the machining head three-dimensionally. The first robot includes a multi-joint arm that is configured to change a position and an orientation of a second rotation tool. The first robot is configured to machine the workpiece supported by the table using the second rotation tool. The work holder includes a first driver configured to turn the table about a first axis.

According to some embodiments of the present invention, a method of machining a workpiece includes a step of mounting a workpiece directly or indirectly on a table of a work holder. A first machining step is performed of machining the workpiece supported by the table using a first group of rotation tools sequentially held by a machining head of a first machiner. A second machining step is performed of machining the workpiece supported by the table using a second group of rotation tools sequentially held by a multi-joint arm of a first robot. A step of turning the table supporting the workpiece about a first axis is performed. The first machining step includes moving the machining head using a plurality of linear movers. after a part of the first machining step and a part of the second machining step have been simultaneously performed, the table supporting the workpiece is turned about the first axis. after the table supporting the workpiece has been turned about the first axis, the part of the first machining step and the part of the second machining step are simultaneously performed.

### Effects of Invention

The present invention provides such a machine tool and such a method of machining a workpiece that are capable of improving machining efficiency, eliminating or minimizing installation space expansion, and maintaining machining accuracy.

### Brief Description of Drawings

[FIG. 1] FIG. 1 is a schematic perspective view of a machine tool according to the first embodiment.
[FIG. 2] FIG. 2 is a schematic perspective view of the machine tool according to the first embodiment.
[FIG. 3] FIG. 3 is a schematic perspective view of the machine tool according to the first embodiment.
[FIG. 4] FIG. 4 is a schematic top view of the machine tool according to the first embodiment.
[FIG. 5] FIG. 5 is a schematic top view of the machine tool according to the first embodiment.
[FIG. 6] FIG. 6 is a schematic top view of the machine tool according to the first embodiment.
[FIG. 7] FIG. 7 is a schematic top view of the machine tool according to the first embodiment.
[FIG. 8] FIG. 8 is a schematic top view of a machine tool according to a first modification of the first embodiment.
[FIG. 9] FIG. 9 is a schematic side view of a part of a machining head.
[FIG. 10] FIG. 10 is a schematic perspective view of an example of a first robot and an example of a support base.
[FIG. 11] FIG. 11 is an enlarged schematic perspective view of an example of a tool holder mounted on a multi-joint arm.
[FIG. 12] FIG. 12 is a schematic top view of the machine tool according to the first embodiment.
[FIG. 13] FIG. 13 is a schematic top view of a machine tool according to a second modification of the first embodiment.
[FIG. 14] FIG. 14 is a flowchart of an example method according to the first embodiment of machining a workpiece.
[FIG. 15] FIG. 15 is a flowchart of another example method according to the first embodiment of machining a workpiece.
[FIG. 16] FIG. 16 is a schematic top view of the machine tool according to the first embodiment.
[FIG. 17] FIG. 17 is a schematic perspective view of the machine tool according to a second embodiment.
[FIG. 18] FIG. 18 is a schematic side view of a machining head according to a modification.
[FIG. 19] FIG. 19 is a schematic top view of the machine tool according to the second embodiment.
[FIG. 20] FIG. 20 is a schematic perspective view of an example of a second robot and an example of a support base.
[FIG. 21] FIG. 21 is an enlarged schematic perspective view of an example of a second tool holder mounted on a second multi-joint arm.
[FIG. 22] FIG. 22 is a schematic top view of a machine tool system according to the second embodiment.
[FIG. 23] FIG. 23 is a schematic top view of the machine tool according to the second embodiment.
[FIG. 24] FIG. 24 is a schematic illustration of a situation in which at least one tool changer is able to replace a first rotation tool held by a machining head with another first rotation tool.
[FIG. 25] FIG. 25 is a schematic illustration of a situation in which at least one tool changer is able to replace a second rotation tool held by the tool holder of the first robot with another second rotation tool.
[FIG. 26] FIG. 26 is a schematic illustration of a situation in which at least one tool changer is able to replace a third rotation tool held by the second tool holder of the second robot with another third rotation tool.
[FIG. 27] FIG. 27 is a schematic perspective view of the machine tool according to the second embodiment.
[FIG. 28] FIG. 28 is a schematic perspective view of the machine tool according to the second embodiment.
[FIG. 29] FIG. 29 is a schematic illustration of a situation in which a controller is able to control a plurality of control target instruments.
[FIG. 30] FIG. 30 is an enlarged schematic perspective view of how a step of the method of machining a workpiece is performed.
[FIG. 31] FIG. 31 is an enlarged schematic perspective view of how a step of the method of machining a workpiece is performed.
[FIG. 32] FIG. 32 is an enlarged schematic perspective view of how a step of the method of machining a workpiece is performed.
[FIG. 33] FIG. 33 is an enlarged schematic perspective view of how a step of the method of machining a workpiece is performed.
[FIG. 34] FIG. 34 is an enlarged schematic perspective view of how a step of the method of machining a workpiece is performed.
[FIG. 35] FIG. 35 is an enlarged schematic perspective view of how a step of the method of machining a workpiece is performed.
[FIG. 36] FIG. 36 is an enlarged schematic perspective view of how a step of the method of machining a workpiece is performed.
[FIG. 37] FIG. 37 is a flowchart of an example method according to the second embodiment of machining a workpiece.
[FIG. 38] FIG. 38 is a flowchart of another example method according to the second embodiment of machining a workpiece.
[FIG. 39] FIG. 39 is an enlarged schematic front view of a part of a movable wall.
[FIG. 40] FIG. 40 is a schematic top view of a first machiner and a first robot, illustrating an example arrangement relationship between the first machiner and the first robot.
[FIG. 41] FIG. 41 is a schematic top view of the first machiner and the first robot, illustrating an example arrangement relationship between the first machiner and the first robot.
[FIG. 42] FIG. 42 is a schematic top view of the first machiner, the first robot, and a second robot, illustrating an example arrangement relationship between the first machiner, the first robot, and the second robot.
[FIG. 43] FIG. 43 is a schematic top view of the first machiner, the first robot, and the second robot, illustrating an example arrangement relationship between the first machiner, the first robot, and the second robot.
[FIG. 44] FIG. 44 is a schematic top view of the first machiner and the first robot, illustrating an example arrangement relationship between the first machiner and the first robot. Description of Embodiments

By referring to the accompanying drawings, a machine tool 1 according to an embodiment and a method of machining a workpiece according to the embodiment will be described. It is noted that in the following description of the embodiments, identical reference numerals are used to denote identical portions, members, or components having identical functions, and redundant description of identical portions, members, or components will be eliminated or minimized.

### (Definition of Terms)

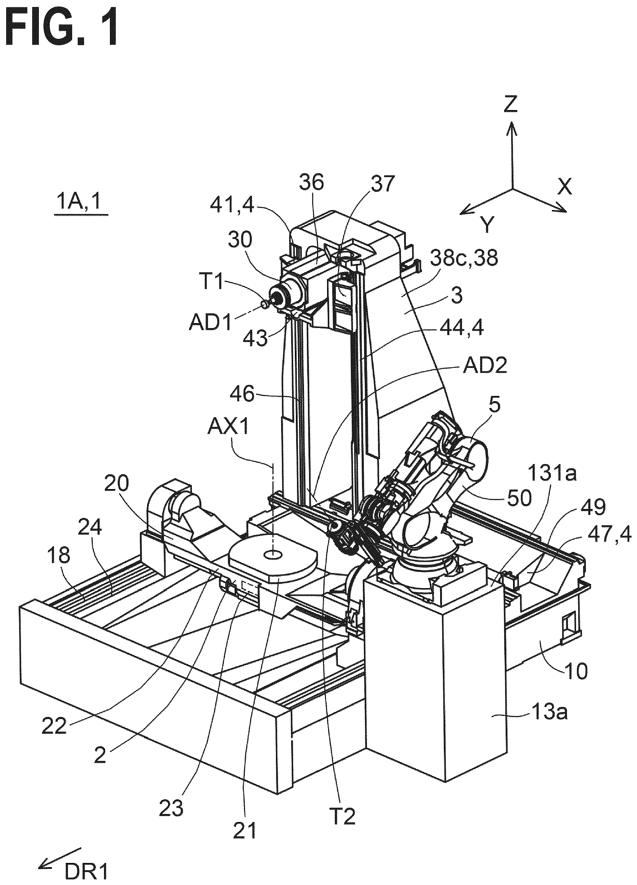

In the example illustrated in FIG. 1, a machining head 30 of a first machiner 3 is capable of supporting a rotation tool. In this specification, rotation tools held by the machining head 30 will be collectively referred to as a first rotation tool. Also in this specification, a plurality of rotation tools sequentially held by the machining head 30 will be referred to as a first group of rotation tools.

In the example illustrated in FIG. 1, a multi-joint arm 50 of a first robot 5 is capable of supporting a rotation tool. In this specification, rotation tools held by the multi-joint arm 50 will be collectively referred to as a second rotation tool. Also in this specification, a plurality of rotation tools sequentially held by the multi-joint arm 50 will be referred to as a second group of rotation tools.

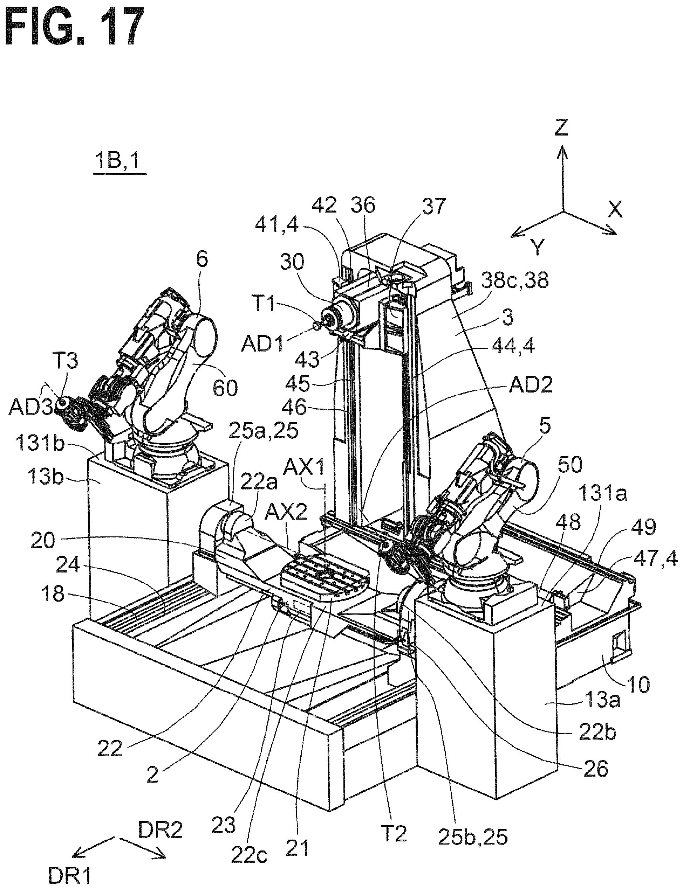

In the example illustrated in FIG. 17, a second multi-joint arm 60 of a second robot 6 is capable of supporting a rotation tool. In this specification, rotation tools supported by the second multi-joint arm 60 will be collectively referred to as a third rotation tool. Also in this specification, a plurality of rotation tools sequentially held by the second multi-joint arm 60 will be referred to as a third group of rotation tools.

In this specification, the term "parallel" encompasses substantial parallelism even when the term is not modified by "substantial" or "substantially". Achieving strict mathematical parallelism is challenging due to tolerances, manufacturing errors, wear, clearance between components, and similar factors. Accordingly, in this specification, any occurrence of the term "parallel" without the modifier "substantial" or "substantially" is to be interpreted as "substantially parallel".

In this specification, the term "vertical" encompasses substantial verticality even when the term is not modified by "substantial" or "substantially". Achieving strict mathematical verticality is challenging due to tolerances, manufacturing errors, wear, clearance between components, and similar factors. Accordingly, in this specification, any occurrence of the term "vertical" without the modifier "substantial" or "substantially" is to be interpreted as "substantially vertical".

### (Definitions of Directions)

In this specification, a direction from the first machiner 3 toward a work holder 2 in a plan view (more specifically, a direction from the first machiner 3 toward a table assembly 20 in a plan view) is defined as first direction *DR1.* As exemplified in FIG. 17, in this specification, a direction from a first support base 25a toward a second support base 25b is defined as second direction *DR2.* In the example illustrated in FIG. 17, the second direction *DR2* is perpendicular to the first direction *DR1.*

### (First Embodiment)

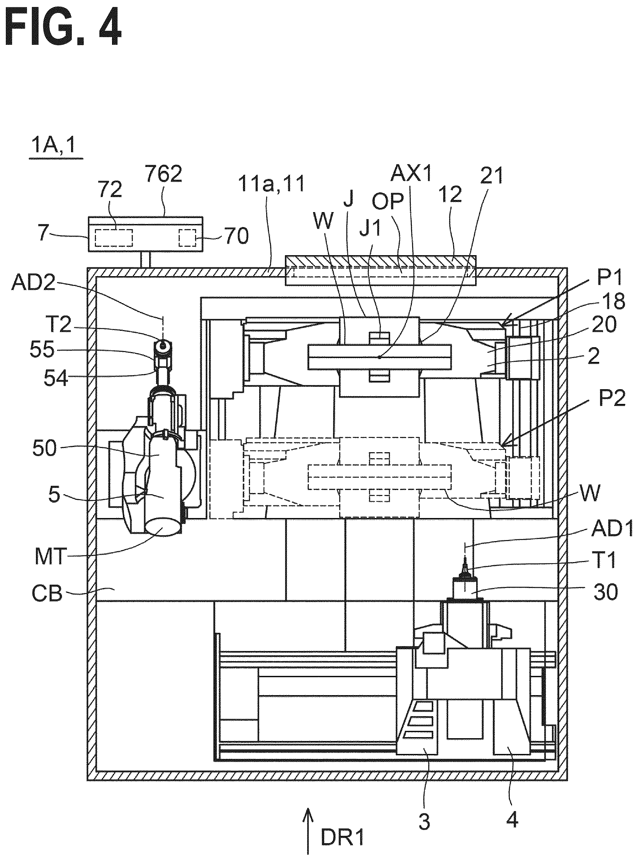

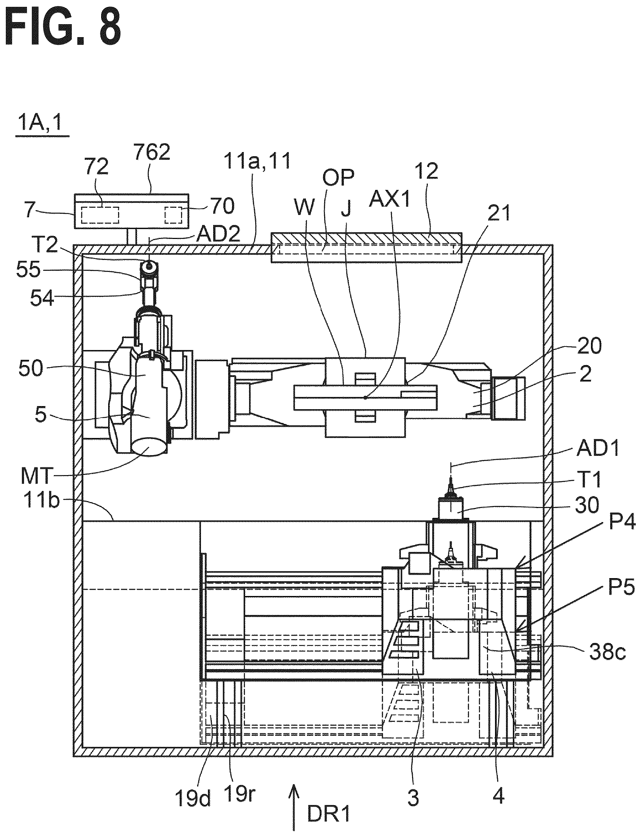

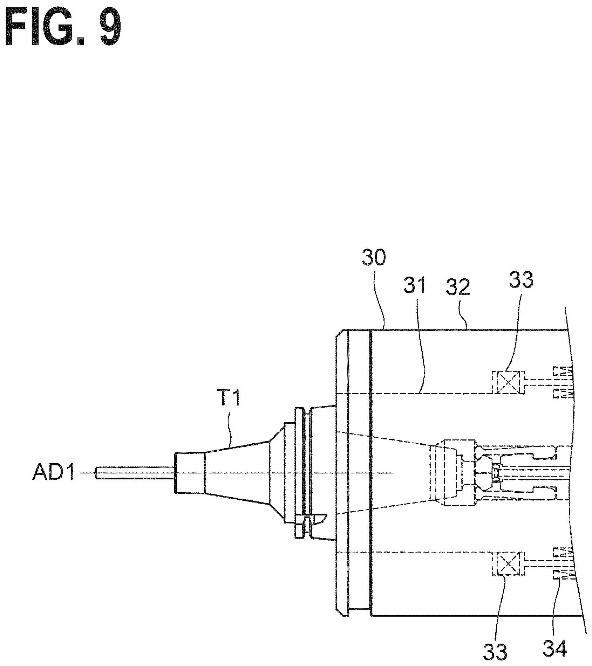

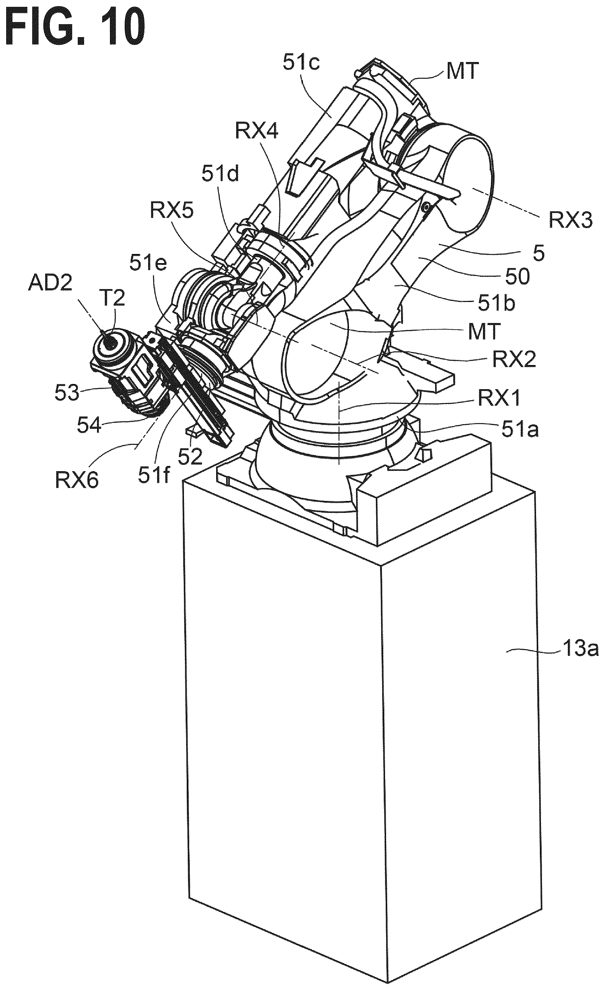

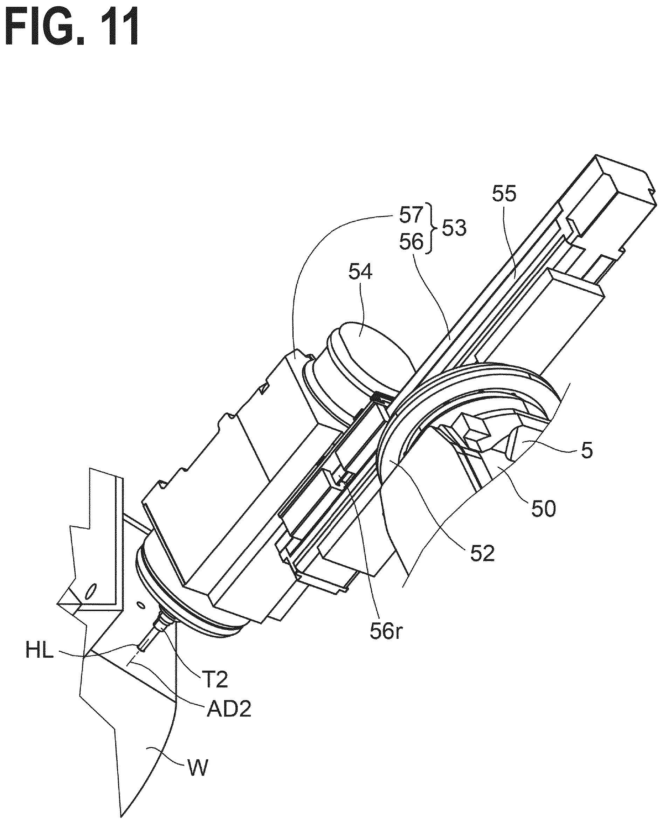

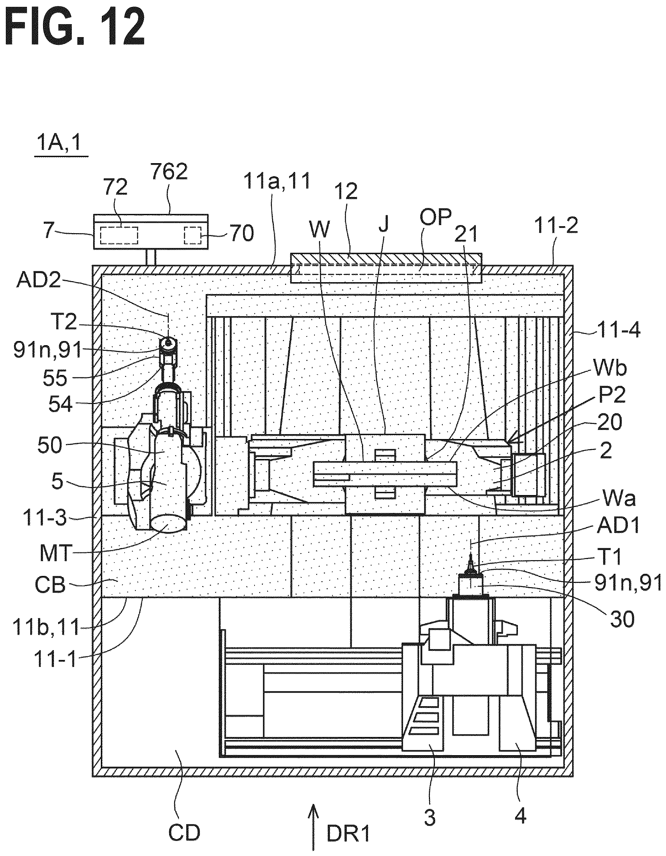

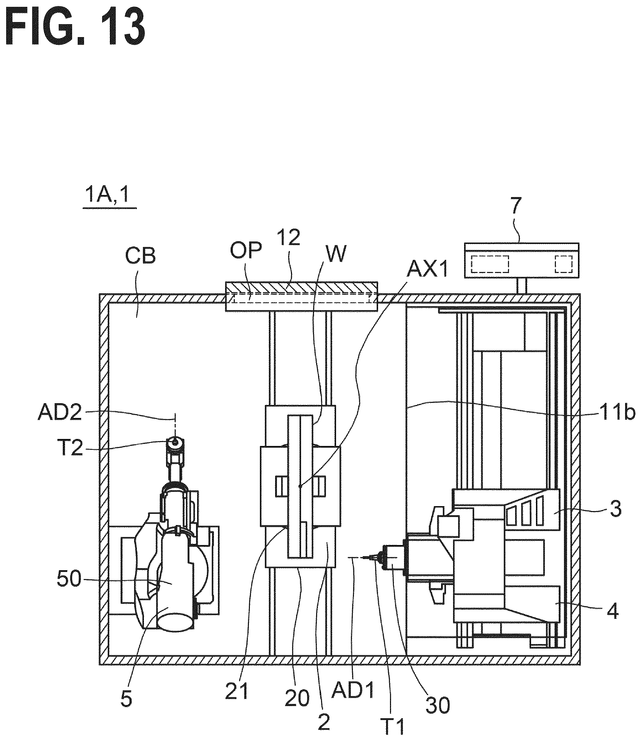

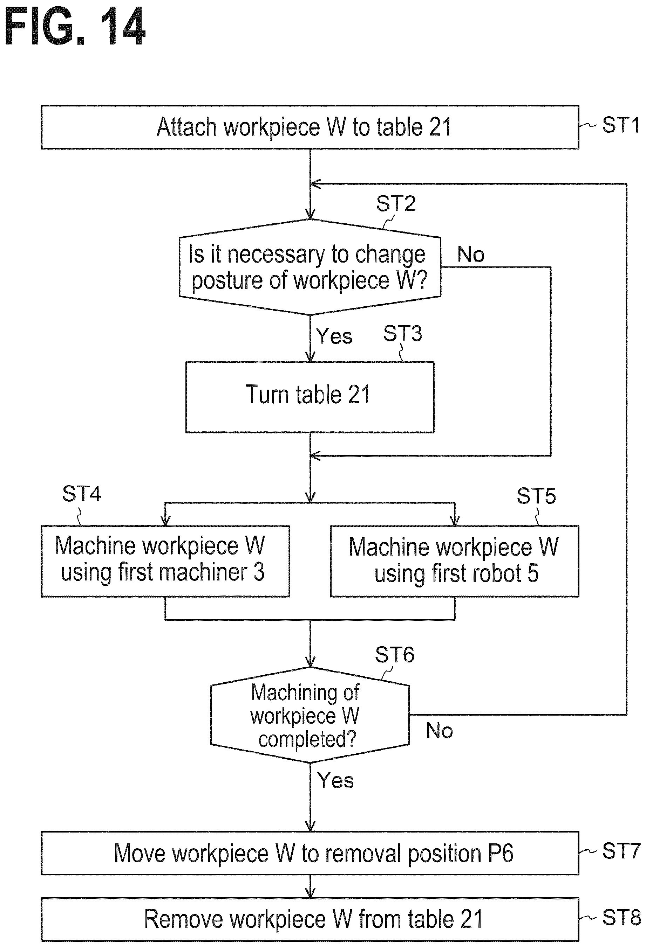

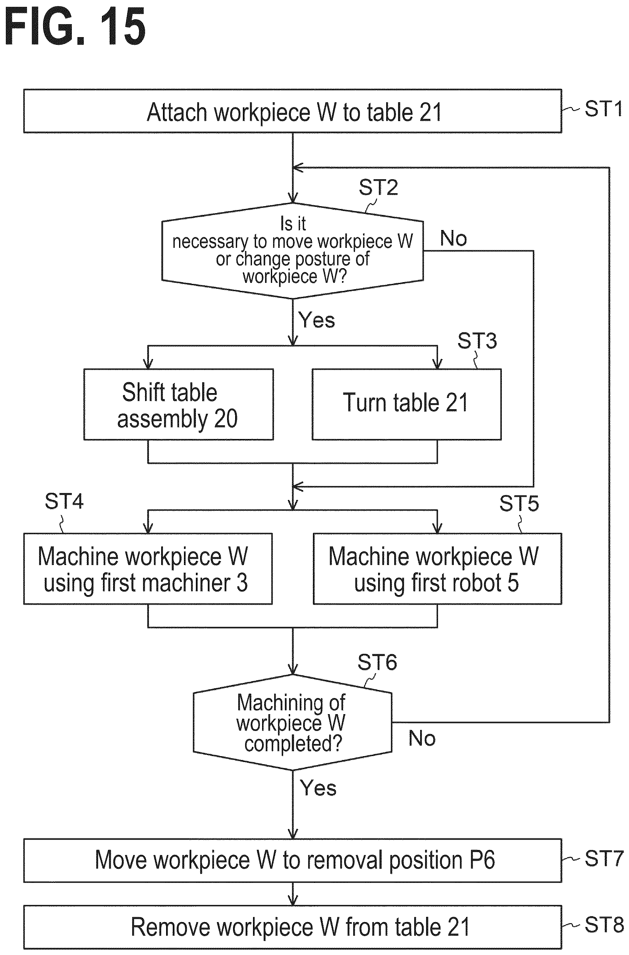

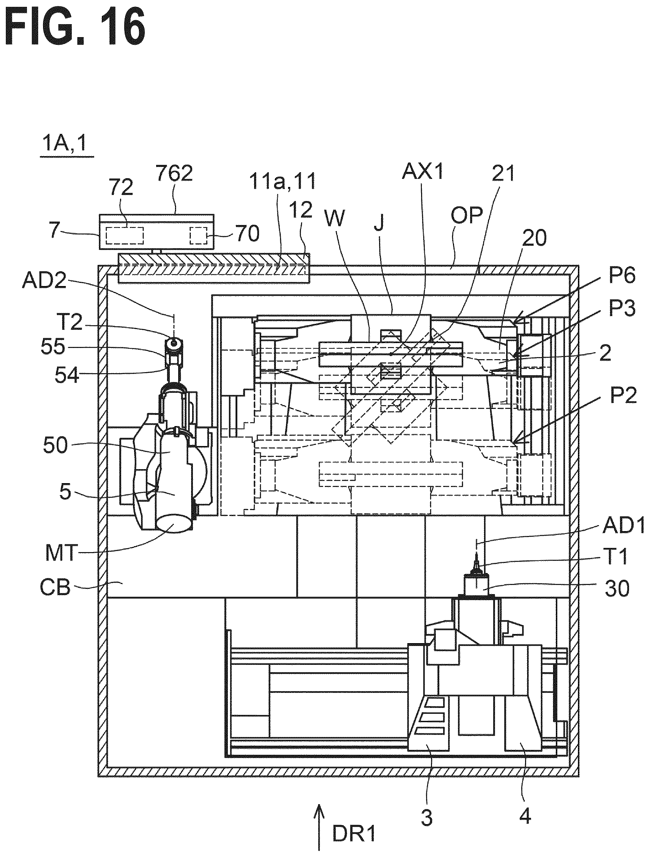

By referring to FIGs. 1 to 16, the machine tool 1A according to the first embodiment, and a method according to the first embodiment of machining a workpiece will be described. FIGs. 1 to 3 are schematic perspective views of the machine tool 1A according to the first embodiment. FIGs. 4 to 7 are schematic top views of the machine tool 1A according to the first embodiment. FIG. 8 is a schematic top view of the machine tool 1A according to first modification of the first embodiment. FIG. 9 is a schematic side view of a part of the machining head 30. FIG. 10 is a schematic perspective view of an example of the first robot 5 and an example of a support base 13a. FIG. 11 is an enlarged schematic perspective view of an example of a tool holder 53, which is mounted on the multi-joint arm 50. FIG. 12 is a schematic top view of the machine tool 1A according to the first embodiment. FIG. 13 is a schematic top view of a machine tool 1A according to a second modification of the first embodiment. FIG. 14 is a flowchart of an example method according to the first embodiment of machining a workpiece. FIG. 15 is a flowchart of another example method according to the first embodiment of machining a workpiece. FIG. 16 is a schematic top view of the machine tool 1A according to the first embodiment.

As exemplified in FIG. 1, the machine tool 1A according to the first embodiment includes the work holder 2, the first machiner 3, and the first robot 5.

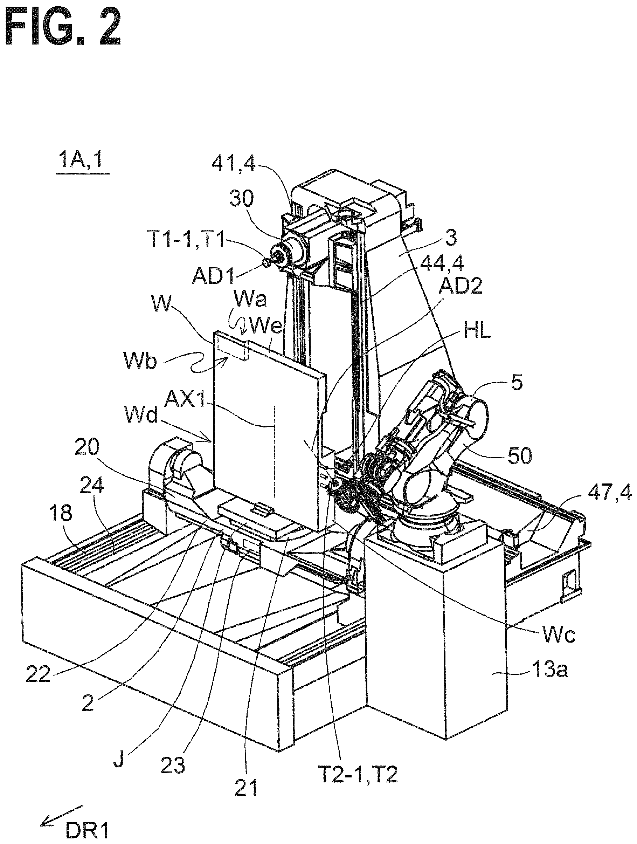

As exemplified in FIG. 2, the work holder 2 includes a table 21. The table 21 holds a workpiece W. More specifically, the work holder 2 includes a table 21 that directly or indirectly supports the workpiece W. In the example illustrated in FIG. 2, the table 21 holds the workpiece W via a jig J. Alternatively, the table 21 may directly support the workpiece W.

The first machiner 3 includes the machining head 30 and a plurality of linear movers 4. The machining head 30 is capable of supporting a first rotation tool T1. The first rotation tool T1 machines the workpiece W supported by the table 21.

The plurality of linear movers 4 three-dimensionally moves the machining head 30. More specifically, the plurality of linear movers 4 move the machining head 30 in directions parallel to three different axes.

In the example illustrated in FIG. 2, the first robot 5 machines the workpiece W supported by the table 21 using a second rotation tool T2. The first robot 5 includes the multi-joint arm 50. The multi-joint arm 50 changes the position and the orientation of the second rotation tool T2. The first robot 5 can be referred to as a multi-joint robot.

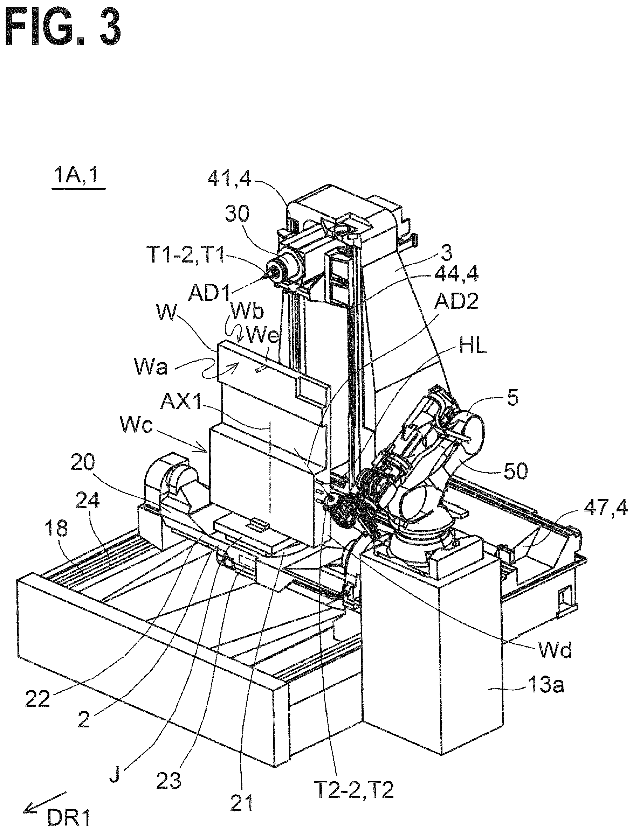

In the examples illustrated in FIGs. 2 and 3, the work holder 2 includes a first driver 23 (for example, a motor). The first driver 23 turns the table 21 about a first axis AX1. The first driver 23 is preferably capable of turning the table 21 360 degrees about the first axis AX 1.

In the machine tool 1A according to the first embodiment, the workpiece W supported by the table 21 can be machined using a plurality of tools including the first rotation tool T1 supported by the first machiner 3 and the second rotation tool T2 held by the first robot 5. This configuration improves the efficiency of machining the workpiece W.

Also in the machine tool 1A according to the first embodiment, the first machiner 3 and the first robot 5 are provided at positions at which the first machiner 3 and the first robot 5 are able to machine the workpiece W supported by the table 21. This configuration eliminates or minimizes the expansion of the installation space of the machine tool 1A.

In the first embodiment, the first machiner 3 includes the plurality of linear movers 4. The plurality of linear movers 4 three-dimensionally move the machining head 30. With this configuration, the first machiner 3 is capable of highly accurate machining as compared with the first robot 5, which includes the multi-joint arm 50. For example, it is possible to use the first machiner 3 for machining that requires a high level of accuracy and use both the first machiner 3 and the first robot 5 for machining that requires a lower level of accuracy.

In the first embodiment, as exemplified in FIGs. 2 and 3, the work holder 2 includes the first driver 23. The first driver 23 turns the table 21 about the first axis AX1. With this configuration, a first main surface Wa of the workpiece W (more specifically, the front surface of the workpiece W) and a second main surface Wb of the workpiece W (more specifically, the rear surface of the workpiece W) can both be machined using the first rotation tool T1 held by the machining head 30.

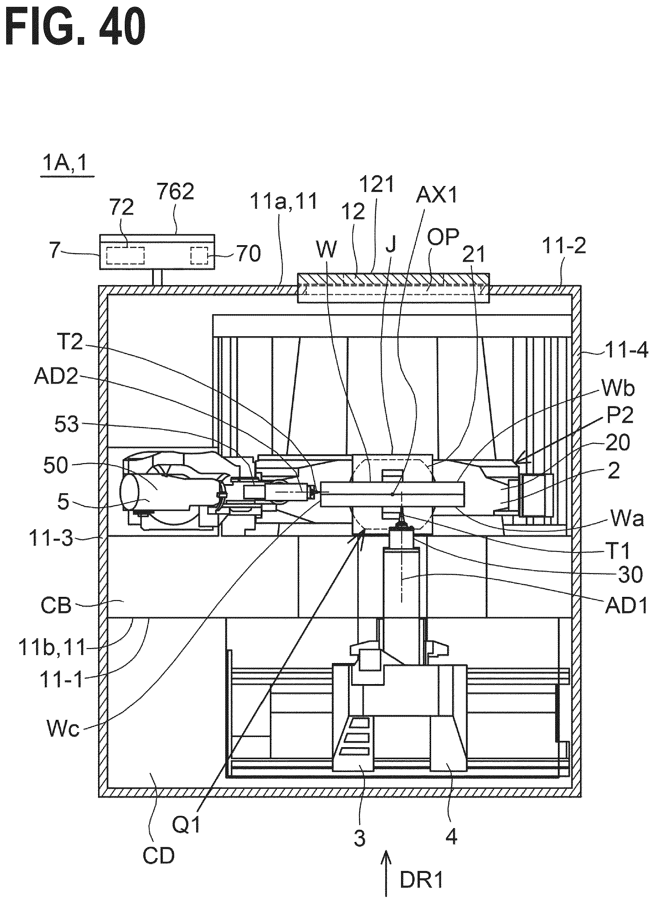

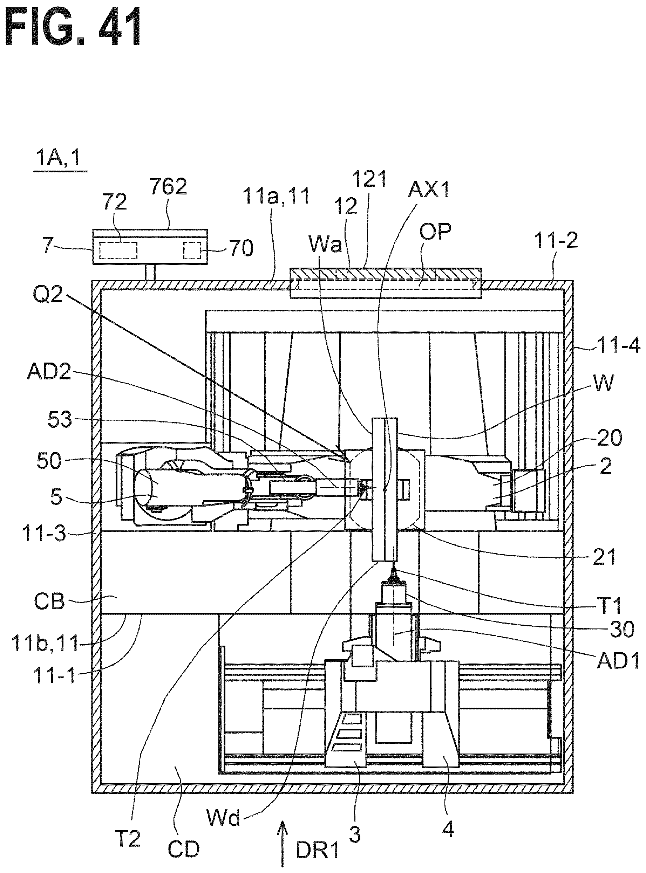

As exemplified in FIG. 2, the following description is based on the assumption that the workpiece W has the first main surface Wa, the second main surface Wb, a first side surface Wc (for example, left side surface), and a second side surface Wd (for example, right side surface). In the example illustrated in FIG. 2, while the first machiner 3 is machining the first main surface Wa of the workpiece W, the first robot 5 is able to machine the first side surface Wc of the workpiece W (see, if necessary, FIG. 40). Also, after the table 21 has been turned from the state illustrated in FIG. 2 to the state illustrated in FIG. 3, the first machiner 3 is able to machine the second main surface Wb, which is opposite to the first main surface Wa. Also, after the table 21 has been turned from the state illustrated in FIG. 2 to the state illustrated in FIG. 3, the first robot 5 is able to machine the second side surface Wd, which is opposite to the first side surface Wc. In the examples illustrated in FIGs. 2 and 3 (or in the examples illustrated in FIGs. 40 and 41), the machine tool 1A is capable of sequentially performing: machining the workpiece W supported by the table 21 simultaneously using the first machiner 3 and the first robot 5; and turning the table 21 supporting the workpiece W by a predetermined angle (examples of the predetermined angle including 45 degrees, 90 degrees, and 180 degrees) about the first axis AX1; and machining again the workpiece W supported by the table 21 simultaneously using the first machiner 3 and the first robot 5.

### (Optional Configurations)

Next, by referring to FIGs. 1 to 16, optional configuration employable in configuration in the first embodiment (or in the second embodiment, described later) will be described.

### (Workpiece W)

In the first embodiment or the second embodiment, an example of the workpiece W machined by the machine tool 1 is a workpiece made of metal. In a case that the workpiece W is a metal workpiece, the term "machine tool", as used in this specification, can be read as "metal machiner". The workpiece W machined by the machine tool 1 may be a workpiece made of aluminum. The workpiece W machined by the machine tool 1 may be an aluminum cast component.

The workpiece W machined by the machine tool 1 may be an automobile component or may be any other workpiece. The workpiece W may be a part of a vehicle body frame of an automobile. The workpiece W machined by the machine tool 1 may be a small-size workpiece or a large-size workpiece. As exemplified in FIG. 2, in a case that the workpiece W is a large-size workpiece, the height of the workpiece W (more specifically, the distance between the bottom of the workpiece W and an apex surface We of the workpiece W) may be, for example, 1000 mm or more, or 1500 mm or more. In a case that the workpiece W is a large-size workpiece, the width of the workpiece W (more specifically, the maximum value of the distance between the first side surface Wc of the workpiece W and the second side surface Wd of the workpiece W) may be, for example, 1000 mm or more, or 1500 mm or more. In a case that the workpiece W is a large-size workpiece, the depth of the workpiece W (more specifically, the maximum value of the distance between the first main surface Wa and the second main surface Wb) may be, for example, 300 mm or more, or 500 mm or more.

### (Work Holder 2)

In the example illustrated in FIG. 1, the work holder 2 includes the table 21, a block 22, and the first driver 23. The block 22 supports the table 21 so as to turn about the first axis AX1. The first driver 23 turns the table 21 about the first axis AX1. It is to be noted that each of the table 21 and the block 22 may be made up of a single member or may be made up of an assembly of a plurality of members. In the example illustrated in FIG. 1, the first axis AX1 is substantially perpendicular to a horizontal plane. Alternatively, the first axis AX1 may be inclined relative to a horizontal plane. Further alternatively, the first axis AX1 may be substantially parallel to a horizontal plane.

In the example illustrated in FIG. 1, the table 21 and the first driver 23 are included in the table assembly 20. In other words, the machine tool 1A (more specifically, the work holder 2) includes the table assembly 20, and the table assembly 20 includes the table 21 and the first driver 23, which turns the table 21 about the first axis AX1. Additionally, the table assembly 20 may include the block 22, which turningly supports the table 21.

As exemplified in FIG. 1, the machine tool 1A may include guide rails 24. The guide rails 24 support the table assembly 20 so as to move in the first direction *DR1.*

In the example illustrated in FIG. 1, the machine tool 1A includes a third driver 18 (for example, a motor). The third driver 18 moves the table assembly 20, which includes the table 21 and the first driver 23, in a direction parallel to the first direction *DR1.* The third driver 18 moves the table assembly 20 along the guide rails 24.

In the example illustrated in FIG. 4, the table assembly 20 is movable in a direction parallel to the first direction *DR1* at least between the receiving position P1 and the proceeding position P2. The receiving position P1 is a position at which the table assembly 20 (more specifically, the table 21) receives a workpiece W transferred from outside the machine tool 1A. The proceeding position P2 is a position at which the workpiece W supported by the table 21 is machined using the first machiner 3. The receiving position P1 is located further in the first direction *DR1* than the proceeding position P2.

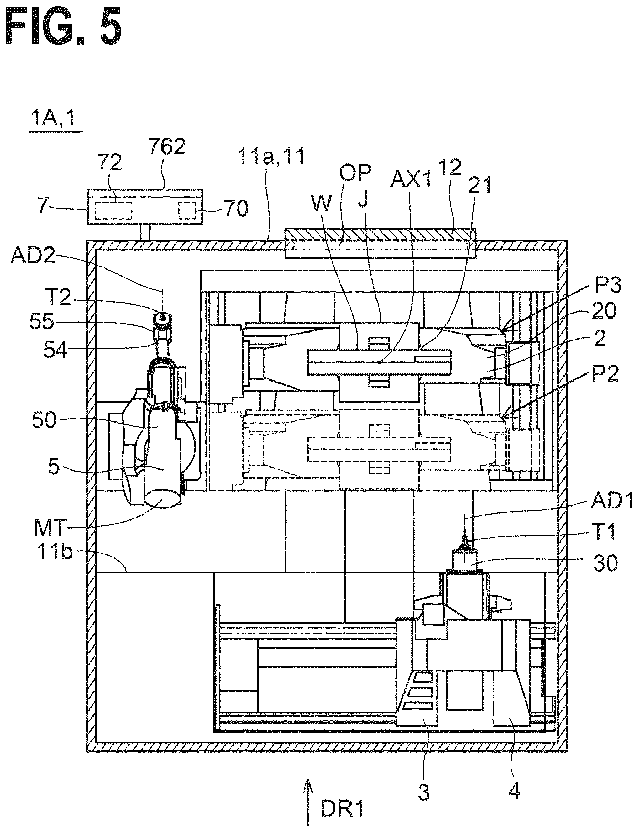

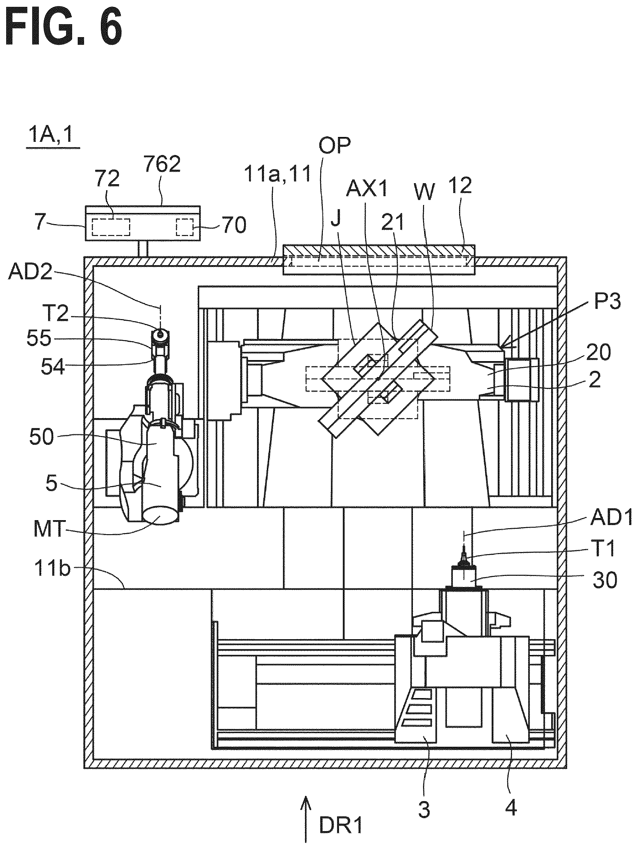

In the example illustrated in FIG. 5, the table assembly 20 is movable in a direction parallel to the first direction *DR1* at least between the proceeding position P2 and a withdrawal position P3. The proceeding position P2 is a position at which the workpiece W supported by the table 21 is machined using the first machiner 3. The withdrawal position P3 is a position at which the workpiece W supported by the table 21 can be turned about the first axis AX1 without interfering with the first machiner 3 (or a movable wall 11b, described later) (see FIG. 6). The withdrawal position P3 is located further in the first direction *DR1* than the proceeding position P2.

In a case that the table assembly 20 is movable to the withdrawal position P3, the table 21 can be turned about the first axis AX1 in a state in which a large-size workpiece W is supported by the table 21.

Alternatively or additionally, as exemplified in FIG. 8, the machine tool 1A may include a fourth driver 19d (for example, a motor). The fourth driver 19d moves the first machiner 3 in a direction parallel to the first direction *DR1.* The fourth driver 19d moves the entirety of the first machiner 3 or a structure including a column 38c, which holds the machining head 30, in a direction parallel to the first direction *DR1.* The machine tool 1A may include a guide rail 19r. The guide rail 19r extends in a direction parallel to the first direction *DR1.* The guide rail 19r guides the movement of the entirety of the first machiner 3 or the structure including the column 38c, which holds the machining head 30.

In the example illustrated in FIG. 8, the first machiner 3 is movable in a direction parallel to the first direction *DR1* between a proceeding position P4 and a withdrawal position P5. The proceeding position P4 is a position at which the workpiece W supported by the table 21 is machined using the first machiner 3. The withdrawal position P5 is a position at which the workpiece W supported by the table 21 can be turned about the first axis AX1 without interfering with the first machiner 3 (or the movable wall 11b, described later).

In a case that the first machiner 3 is movable to the withdrawal position P5, the table 21 can be turned about the first axis AX1 in a state in which a large-size workpiece W is supported by the table 21.

### (Machining Head 30)

As exemplified in FIG. 9, the machining head 30 includes a spindle 31, a support 32, and a bearing 33.

The spindle 31 is capable of holding the first rotation tool T1. The spindle 31 is rotatable about a first rotation axis AD1.

The support 32 holds the spindle 31 via the bearing 33 so as to rotate about the first rotation axis AD1.

The first machiner 3 (more specifically, the machining head 30) includes a first rotational driver 34. The first rotational driver 34 rotates the first rotation tool T1 about the first rotation axis AD1. More specifically, by rotating the spindle 31 about the first rotation axis AD1, the first rotational driver 34 rotates the first rotation tool T1 held by the spindle 31 about the first rotation axis AD1.

In the example illustrated in FIG. 1, the first rotation axis AD1 is non-parallel to vertical direction. More specifically, the first rotation axis AD1 is substantially perpendicular to the vertical direction. In this case, chips generated by contact between the workpiece W and the first rotation tool T1 rotating about the first rotation axis AD1 are more easily discharged downward.

In the example illustrated in FIG. 1, the first axis AX1 (in other words, the turning axis of the table 21) is substantially perpendicular to the direction parallel to the first rotation axis AD1. In this case, by turning the table 21 supporting the workpiece W about the first axis, the machining target surface of the workpiece W can be oriented toward the first rotation tool T1. More specifically, by turning the table 21 to each indexing position around the first axis AX1, each machining target surface of the workpiece W, which machining target surface is parallel to the first axis AX1, can be oriented directly toward the first rotation axis AD1.

It is to be noted that the table 21 may be tiltable to make the first axis AX1 substantially perpendicular to the direction parallel to the first rotation axis AD1 (see, if necessary, FIG. 17). In this case as well, by turning the table 21 each indexing position around the first axis AX1, each machining target surface of the workpiece W, which machining target surface is parallel to the first axis AX1, can be oriented directly toward the first rotation axis AD1. Additionally, there may be a case that the table 21 is tiltable about a second axis AX2, which is different from the first axis AX1 (see, if necessary, FIG. 17). In this case, the turning of the table 21 about the first axis AX1 may be combined with the tilting of the table 21 about the second axis AX2 so that any machining target surface of the workpiece W can be oriented directly toward the first rotation axis AD1.

### (First Robot 5)

In the example illustrated in FIG. 10, the first robot 5 includes the multi-joint arm 50, and the multi-joint arm 50 has at least six rotation axes (RX1, RX2, RX3, RX4, RX5, and RX6). More specifically, the multi-joint arm 50 has a first portion 51a, a second portion 51b, a third portion 51c, a fourth portion 51d, a fifth portion 51e, and a sixth portion 51f. The first portion 51a is turnable about a first turning axis RX1 relative to the support base 13a. The second portion 51b is tiltable about a first tilting axis RX2 relative to the first portion 51a. The third portion 51c is tiltable about a second tilting axis RX3 relative to the second portion 51b. The fourth portion 51d is turnable about a second turning axis RX4 relative to the third portion 51c. The fifth portion 51e is tiltable about a third tilting axis RX5 relative to the fourth portion 51d. The sixth portion 51f is turnable about a third turning axis RX6 relative to the fifth portion 51e. In the example illustrated in FIG. 10, the multi-joint arm 50 has at least three tilting axes and at least three turning axes.

In the example illustrated in FIG. 10, a list 52 is provided at a leading end portion of the multi-joint arm 50. In other words, the first robot 5 includes the list 52, and this list 52 is provided at the leading end portion of the multi-joint arm 50. In the example illustrated in FIG. 10, the list 52 is implemented by the sixth portion 51f. The first robot 5 is capable of changing the position and the orientation of the list 52 in any desired manner.

The first robot 5 includes a plurality of arm drivers (for example, a plurality of motors MT) to move a plurality of joints of the multi-joint arm 50.

In the example illustrated in FIG. 10, the first robot 5 includes the tool holder 53. The tool holder 53 is mounted on the multi-joint arm 50 (more specifically, the list 52). The tool holder 53 is capable of supporting the second rotation tool T2.

The tool holder 53 includes a second rotational driver 54 (more specifically, motor). The second rotational driver 54 rotates the second rotation tool T2 about a second rotation axis AD2.

In the example illustrated in FIG. 11, the tool holder 53 includes a fixed portion 56 and a movable portion 57. The fixed portion 56 is mounted on the multi-joint arm 50 (more specifically, the list 52). The movable portion 57 is linearly movable in a direction parallel to the second rotation axis AD2 relative to the fixed portion 56. The fixed portion 56 may include a linear guide 56r. The linear guide 56r guides the movement of the movable portion 57 in the direction parallel to the second rotation axis AD2. The second rotation tool T2 is attached to a spindle provided at the movable portion 57.

In the example illustrated in FIG. 11, the tool holder 53 includes a tool mover (hereinafter referred to as "tool linear mover 55") that moves the second rotation tool T2 in the direction parallel to the second rotation axis AD2. The tool linear mover 55 includes a driving source such as a motor and an electric cylinder. Also in the example illustrated in FIG. 11, the tool linear mover 55 includes the linear guide 56r. The linear guide 56r guides the movement of the movable portion 57 of the tool holder 53 relative to the fixed portion 56 of the tool holder 53. The tool linear mover 55 may include elements such as a ball screw and a rack-and-pinion.

In a case that the tool holder 53 includes the second rotational driver 54 and the tool linear mover 55, the second rotation tool T2 can be moved in a direction parallel to the second rotation axis AD2 while rotating about the second rotation axis AD2. With this configuration, after the second rotation tool T2 has contacted the workpiece W, a hole HL can be formed in the workpiece W using the second rotation tool T2 without changing the position of the list 52. As a result, the accuracy of machining to form a hole in the workpiece W is maintained. In other words, a decline in machining accuracy caused by the presence of multiple joints in the first robot 5 is unavoidable; however, since machining is performed with the multiple joints fixed at specific angles while forming a hole in the workpiece, an excessive decline in machining accuracy is prevented.

In the example illustrated in FIG. 1, the machine tool 1A includes the support base 13a, which supports the first robot 5. In the example illustrated in FIG. 1, the height of the upper surface 131a of the support base 13a is greater than the height of the upper surface of the table 21. Also, the height of the upper surface 131a of the support base 13a is greater than the height of an uppermost end of the table assembly 20. In the example illustrated in FIG. 1, the support base 13a is unmovable relative to a base 10 of the machine tool 1A. Alternatively, the support base 13a may be movable relative to the base 10 of the machine tool 1A. In other words, the entirety of the first robot 5 may be movable relative to the base 10.

### (Machining Chamber CB, Coolant Liquid Supplier 91)

In the example illustrated in FIG. 12, the machine tool 1A includes a machining chamber CB and a coolant liquid supplier 91. The machining chamber CB is defined by walls 11. In FIG. 12, the machining chamber CB is hatched with dots to enhance the visibility of the machining chamber CB.

In the example illustrated in FIG. 12, the machine tool 1A includes the walls 11, which define the machining chamber CB. In the machining chamber CB, the machining head 30 and the multi-joint arm 50 of the first robot 5 are provided. In the example illustrated in FIG. 12, a part of the walls 11 (more specifically, the movable wall 11b, which is a part of the walls 11) is a partition wall that partitions the machining chamber CB from a second chamber CD. The second chamber CD is where all or a majority of the plurality of linear movers 4, which three-dimensionally move the machining head 30, are provided.

In the example illustrated in FIG. 12, the walls 11, which define the machining chamber CB, include a fixed wall 11a and the movable wall 11b. The movable wall 11b moves to follow the movement of the machining head 30.

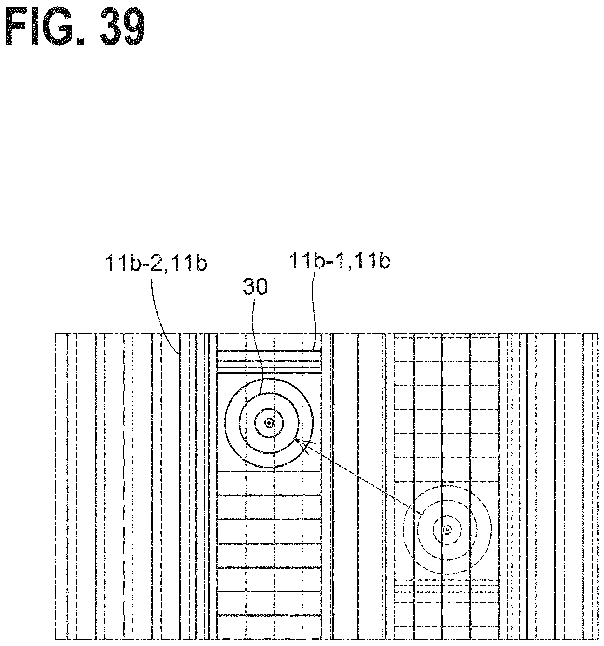

As exemplified in FIG. 39, the movable wall 11b may include a first movable wall 11b-1 and a second movable wall 11b-2. The first movable wall 11b-1 expands and contracts to follow the movement of the machining head 30 in a direction parallel to the vertical direction. The second movable wall 11b-2 expands and contracts to follow the movement of the machining head 30 in a direction parallel to a horizontal plane.

The coolant liquid supplier 91 supplies coolant liquid toward the workpiece W supported by the table 21. The coolant liquid supplier 91 preferably includes an emission nozzle 91n, through which coolant liquid is emitted. In the example illustrated in FIG. 12, the emission nozzle 91n is provided at the machining head 30. Alternatively or additionally, the first robot 5 may include the emission nozzle 91n. Alternatively or additionally, the emission nozzle 91n may be provided at, for example, a ceiling of the machine tool 1A.

In a case that the machine tool 1A includes the coolant liquid supplier 91, the machine tool 1A eliminates or minimizes excessive tool temperature increase caused by friction heat, resulting in improved lubrication characteristics between the workpiece W and the rotation tool. Additionally, the machine tool 1A eliminates or minimizes chip accumulation on the workpiece W. In a case that coolant liquid can be supplied to the workpiece W, it is possible to perform deep cutting on a workpiece W made of metal using the first machiner 3.

Generally, a multi-joint arm of a robot is not provided in a machining chamber where coolant liquid scatters. In contrast, in the example illustrated in FIG. 12, the multi-joint arm 50 of the first robot 5 is provided in the machining chamber CB, where coolant liquid scatters. If the multi-joint arm 50 is not well-suited for use with coolant liquid, a part of the multi-joint arm 50 (for example, a joint part of the multi-joint arm 50) or substantially the entire multi-joint arm 50 may be covered with a flexible cover.

In the example illustrated in FIG. 12, a workpiece passage opening OP is closed by a door 12. This configuration eliminates or minimizes a leakage of the coolant liquid supplied toward the workpiece W to outside the machine tool 1A through the workpiece passage opening OP.

### (Workpiece Passage Opening OP, Door 12)

In the example illustrated in FIG. 4, the workpiece passage opening OP is formed in one wall 11, which defines the machining chamber CB, so that the workpiece W passes through the workpiece passage opening OP. In the example illustrated in FIG. 4, the workpiece passage opening OP is formed in the fixed wall 11a.

In the example illustrated in FIG. 4, the machine tool 1A includes a wall 11 and the door 12. The walls 11 define the machining chamber CB. The door 12 opens and closes the workpiece passage opening OP, which is formed in the wall 11. When the door 12 is in open position, the workpiece W can be transferred into the machining chamber CB from outside the machine tool 1A. Also when the door 12 is in open position, the workpiece W can be transferred out of the machine tool 1A from the table 21 of the work holder 2. The door 12 may be a single-leaf type door, a double-leaf type door, or any other type of door.

In the example illustrated in FIG. 4, in a plan view, the work holder 2 (more specifically, the table assembly 20) is provided between the first machiner 3 and the workpiece passage opening OP. With this configuration, when the workpiece W is transferred into or out of the machine tool, the first machiner 3 does not cause any obstruction. For example, when the workpiece W is transferred into or out of the machine tool, the workpiece W is prevented from colliding with the first machiner 3, eliminating or minimizing damage to the first machiner 3 that is otherwise caused by the collision.

In the example illustrated in FIG. 12, in a plan view, the workpiece passage opening OP, the first robot 5, and the first machiner 3 are provided in this order in a counterclockwise direction around the work holder 2 (more specifically, the table assembly 20). Alternatively, in a plan view, the workpiece passage opening OP, the first robot 5, and the first machiner 3 may be provided this order in a clockwise direction around the work holder 2 (more specifically, the table assembly 20). In a case that the workpiece passage opening OP, the first robot 5, and the first machiner 3 are centered around the work holder 2, that is, in a case that the workpiece passage opening OP, the first robot 5, and the first machiner 3 are provided around the work holder 2, the machine tool 1A can be made compact in a plan view.

In the example illustrated in FIG. 12, the first machiner 3 and the first robot 5 are positioned in regions that differ by approximately 90 degrees around the work holder 2 in a plan view. In this case, when the first main surface Wa or the second main surface Wb of the workpiece W is machined using the first machiner 3, a side surface of the workpiece W is more easily machined using the first robot 5.

In the example illustrated in FIG. 12, the walls 11, which define the machining chamber CB, include a first wall 11-1 (for example, this first wall 11-1 is the above-described movable wall 11b), a second wall 11-2, a third wall 11-3, and a fourth wall 11-4. The second wall 11-2 faces the first wall 11-1. The third wall 11-3 connects one end portion of the first wall 11-1 to one edge portion of the second wall 11-2. The fourth wall 11-4 faces the third wall 11-3. The machining head 30 of the first machiner 3 is provided near the first wall 11-1. The workpiece passage opening OP is formed in the second wall 11-2. The first robot 5 is provided near the third wall 11-3.

Alternatively, as exemplified in FIG. 13, in a plan view, the first machiner 3 and the first robot 5 may be provided with the work holder 2 interposed between the first machiner 3 and the first robot 5. In other words, the work holder 2 may be provided between the first machiner 3 and the first robot 5 in a plan view. In the example illustrated in FIG. 13, the table assembly 20 may be movable in a direction toward the workpiece passage opening OP.

### (Controller 7)

In the example illustrated in FIG. 4, the machine tool 1A includes a controller 7. The controller 7 may be implemented by a single computer or a plurality of computers. For example, the machine tool 1A may include a first computer and a second computer. The first computer controls the first machiner 3 and the work holder 2. The second computer controls the first robot 5. In this case, the first computer and the second computer communicate with each other so that the first computer and the second computer cooperate to serve as the controller 7 of the machine tool 1A.

The controller 7 controls the work holder 2, the first machiner 3, and the first robot 5. Additionally, the controller 7 may control the third driver 18 and/or the fourth driver 19d. The third driver 18 moves the table assembly 20 in a direction parallel to the first direction *DR1.* The fourth driver 19d moves the first machiner 3 in a direction parallel to the first direction *DR1* (see, if necessary, FIG. 8).

In the example illustrated in FIG. 4, the controller 7 includes a memory 72 and a processor 70. The memory 72 stores a machining program and data. The processor 70 executes the machining program stored in the memory 72. Upon execution of the machining program by the processor 70, the controller 7 generates a plurality of control commands (for example, a turning command E1, a shifting command E3, a first rotation command E4, a first motion command E5, a second rotation command E6, a tool shifting command E7, a table shifting command E11, and a machiner shifting command E12, which will be described later). The controller 7 also transmits the plurality of generated control commands to a plurality of control target instruments (for example, the work holder 2, the first machiner 3, the first robot 5, the third driver 18, and the fourth driver 19d illustrated in FIG. 8).

### (Machining Shared between First Machiner 3 and First Robot 5)

In the example illustrated in FIG. 2, the first machiner 3 is capable of performing surface machining (for example, milling) on the workpiece W using the first rotation tool T1 held by the machining head 30-1. Due to the first machiner 3's capability for high-precision machining, the first machiner 3 is well-suited for performing surface machining on the workpiece W. The first rotation tool T1-1 illustrated in FIG. 2 may be a milling tool. In a case that the surface machining on the workpiece W is performed by the first machiner 3 alone, the accuracy of all aspects of the surface machining is kept at high levels. In other words, the controller 7, which executes the machining program, preferably assigns all aspects of the surface machining on the workpiece W to the first machiner 3.

In the example illustrated in FIG. 3, each of the first machiner 3 and the first robot 5 is capable of performing machining to form a hole HL in the workpiece W. It is to be noted that in this specification, the machining to form a hole in the workpiece W encompasses both machining to form a hole in the workpiece W (in other words, drilling) and machining to form threads in a hole of the workpiece W (in other words, tapping).

In the example illustrated in FIG. 3, the first machiner 3 is capable of forming a hole in the workpiece W using the first rotation tool T1 held by the machining head 30-2. In the example illustrated in FIG. 3, the first rotation tool T1-2 is, for example, a drill or a tapping tool. The first robot 5 is capable of forming a hole in the workpiece W using the second rotation tool T2-2 held by the multi-joint arm 50. In the example illustrated in FIG. 3, the second rotation tool T2-2 is, for example, a drill or a tapping tool.

The following description is based on the assumption that a large number of holes are to be formed in the workpiece W. In the example illustrated in FIG. 3, the machining to form a plurality of holes HL in the workpiece W is shared between the first machiner 3 and the first robot 5. This configuration ensures that a large number of holes are formed in the workpiece W more efficiently and in a shorter period of time. In other words, the controller 7, which executes the machining program, preferably assigns a part of machining to form a plurality of holes in the workpiece W to the first machiner 3, and preferably assigns the other part of the machining to form a plurality of holes in the workpiece W to the first robot 5.

### (Method of Machining Workpiece)

Next, a method according to the first embodiment of machining a workpiece will be described. The method according to the first embodiment of machining a workpiece may be performed using the machine tool 1A according to the first embodiment or may be performed using another machine tool 1A.

At first step ST1, the workpiece W is directly or indirectly attached to the table 21 of the work holder 2. First step ST1 is an attaching step. In the example illustrated in FIG. 4, at first step ST1, the workpiece W is attached to the table 21 of the work holder 2 via the jig J. The jig J may include a chuck J1 (for example, a hydraulic chuck or an electric chuck) to secure the workpiece W to the jig J. In the example illustrated in FIG. 4, the jig J is fixed to the table 21, and the workpiece W is secured to the jig J.

At second step ST2, a determination is made as to whether it is necessary to change the posture of the workpiece W (see FIG. 14). Second step ST2 is a first determination step. The first determination step is performed by the controller 7. More specifically, based on the machining program stored in the memory 72, the controller 7 determines whether it is necessary to change the posture of the workpiece W.

In the first determination step (second step ST2), in a case that the controller 7 has determined that it is necessary to change the posture of the workpiece W, the workpiece W is turned about the first axis AX1 (more specifically, the table 21 supporting the workpiece W is turned about the first axis AX1).

For example, in the first determination step (second step ST2), in a case that the controller 7 has determined that it is at least necessary to turn the workpiece W about the first axis AX1, the table 21 supporting the workpiece W is turned about the first axis AX1 (turning step: third step ST3). The turning step (in other words, turning the table 21 supporting the workpiece W about the first axis AX1) is performed using the first driver 23, which is included in the work holder 2. In other words, in the turning step (third step ST3), the first driver 23 turns the table 21 supporting the workpiece W about the first axis AX1.

As exemplified in FIG. 15, the turning step (third step ST3) may be performed in combination with the shifting step of shifting the table assembly 20. More specifically, in a case that the controller 7 has determined that it is necessary to both linearly move and turn the workpiece W, the table assembly 20 is linearly moved and the table 21 is turned about the first axis AX1.

For example, in a case that the controller 7 has determined that it is necessary to both linearly move and turn the workpiece W, after first step ST1 (attaching step) is performed, the table assembly 20 is linearly moved from the receiving position P1 to the proceeding position P2, and the orientation of the workpiece W is changed from the orientation of the workpiece W at the receiving position P1 to an orientation of the workpiece W suitable for an initial stage of the workpiece machining.

In contrast, in a case that the controller 7 has determined that it is only necessary to linearly move the workpiece W, after first step ST1 (attaching step) is performed, the table assembly 20 is linearly moved from the receiving position P1 to the proceeding position P2, and the rotational angle of the table 21 about the first axis AX1 is maintained.

In a case that the controller 7 has determined that it is not necessary to change the posture of the workpiece W (second step ST2: No) or in a case that the change of the posture of the workpiece W has been completed (third step ST3 in complete), the procedure proceeds to fourth step ST4 and fifth step ST5.

At fourth step ST4, the workpiece W supported by the table 21 is machined using the first group of rotation tools (T1-1 and T1-2) sequentially held by the machining head 30. Fourth step ST4 is a first machining step.

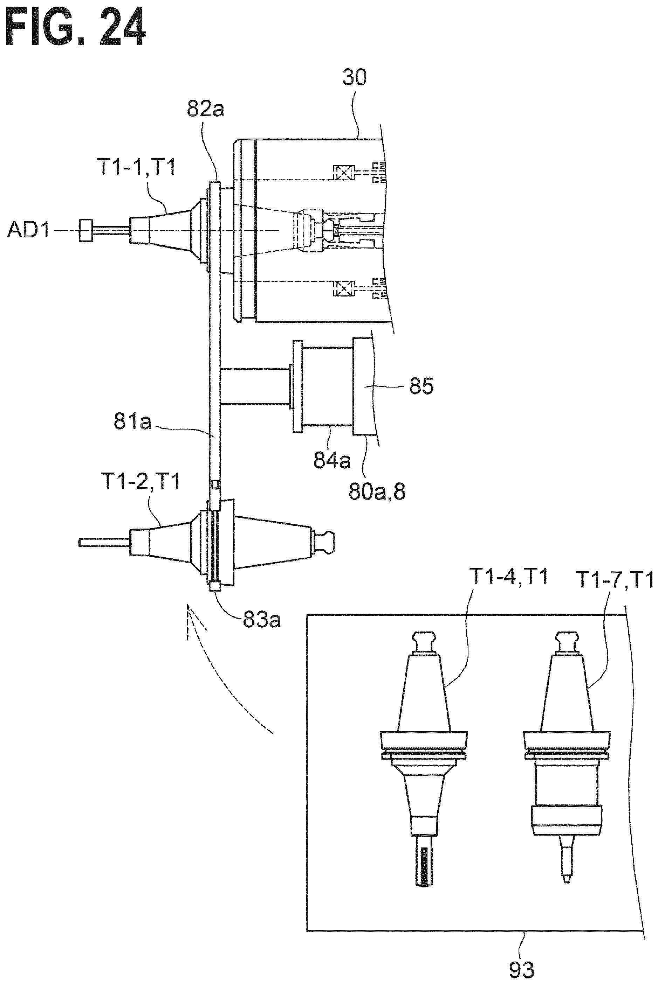

In the examples illustrated in FIGs. 2 and 3, the first group of rotation tools include one first rotation tool T1-1 (for example, a milling tool) and another first rotation tool T1-2 (for example, a drill or a tapping tool). The one first rotation tool T1-1 held by the machining head 30-1 can be changed to the other first rotation tool T1-2 using, for example, a first tool changer 80a (see, if necessary, FIG. 24).

In the examples illustrated in FIGs. 2 and 3, the first machining step (fourth step ST4) encompasses moving the machining head 30 using the plurality of linear movers 4 in a state in which any one of the first group of rotation tools is in contact with the workpiece W supported by the table 21. In a case that the machining of the workpiece W is performed by moving the machining head 30 using the plurality of linear movers 4, the workpiece W can be machined highly accurately.

It is to be noted that while the workpiece W is being machined using the first group of rotation tools (in other words, while any one of the first group of rotation tools is in contact with the workpiece W), the angle position of the table 21 about the first axis AX1 is preferably fixed.

At fifth step ST5, the workpiece W supported by the table 21 is machined using the second group of rotation tools (T2-1 and T2-2) sequentially held by the multi-joint arm 50. Fifth step ST5 is a second machining step. While the workpiece W is being machined using the second group of rotation tools (in other words, while any one of the second group of rotation tools is in contact with the workpiece W), the angle position of the table 21 about the first axis AX1 is preferably fixed.

In the examples illustrated in FIGs. 2 and 3, the second group of rotation tools include one second rotation tool T2-1 (for example, a first drill) and another second rotation tool T2-2 (for example, a second drill or a tapping tool). The one second rotation tool T2-1 held by the multi-joint arm 50 can be changed to the other second rotation tool T2-2 using, for example, a first tool changer or a second tool changer different from the first tool changer.

As exemplified in FIG. 11, the second machining step (fifth step ST5) may include such a step that the tool holder 53, which is mounted on the multi-joint arm 50, moves the second rotation tool T2, which rotates about the second rotation axis AD2, in a direction parallel to the second rotation axis AD2 using the tool linear mover 55. In a case that the second rotation tool T2 is moved using the tool linear mover 55, the second rotation tool T2 can be moved highly accurately.

A part of the first machining step (fourth step ST4) and a part of the second machining step (fifth step ST5) may be simultaneously performed. A part of the first machining step (fourth step ST4) may be performed while the second machining step is not being performed. A part of the second machining step (fifth step ST5) may be performed while the first machining step is not being performed.

At sixth step ST6, a determination is made as to whether the machining of the workpiece W has been completed. Sixth step ST6 is a second determination step. The second determination step is performed by the controller 7. More specifically, based on the machining program stored in the memory 72, the controller 7 determines whether the machining of the workpiece W has been completed.

In the second determination step (sixth step ST6), in a case that the controller 7 has determined that the machining of the workpiece W is not completed yet (sixth step ST6: No), the procedure returns to second step ST2.

For example, after a part of the first machining step (fourth step ST4) and a part of the second machining step (fifth step ST5) have been performed, then at second step ST2, the controller 7 determines whether it is necessary to change the posture of the workpiece W (more specifically, the controller 7 determines whether it is necessary to turn the workpiece W about the first axis AX1). More specifically, based on the machining program stored in the memory 72, the controller 7 determines whether it is necessary to turn the workpiece W about the first axis AX1.

In the first determination step (second step ST2), in a case that the controller 7 has determined that it is necessary to turn the workpiece W about the first axis AX1 (second step ST2: Yes), then at third step ST3, the workpiece W is turned about the first axis AX1 (turning step).

The turning step includes turning the table 21 supporting the workpiece W about the first axis AX1. In the examples illustrated in FIGs. 2 and 3, the step of turning the table 21 supporting the workpiece W about the first axis AX1 is performed using the first driver 23, which is included in the work holder 2. In other words, at third step ST3, the first driver 23 turns the table 21 supporting the workpiece W about the first axis AX1.

It is to be noted that immediately before the table 21 supporting the workpiece W is turned about the first axis AX1, one of the table 21 and the first machiner 3 may be linearly moved in a direction away from the other of the table 21 and the first machiner 3; and immediately after the table 21 supporting the workpiece W has been turned about the first axis AX1, one of the table 21 and the first machiner 3 may be linearly moved in a direction toward the other of the table 21 and the first machiner 3. Moving one of the table 21 and the first machiner 3 in a direction away from the other of the table 21 and the first machiner 3 eliminates or minimizes interference between the first machiner 3 and the table 21 and between the first machiner 3 and the workpiece W during the turning of the table 21.

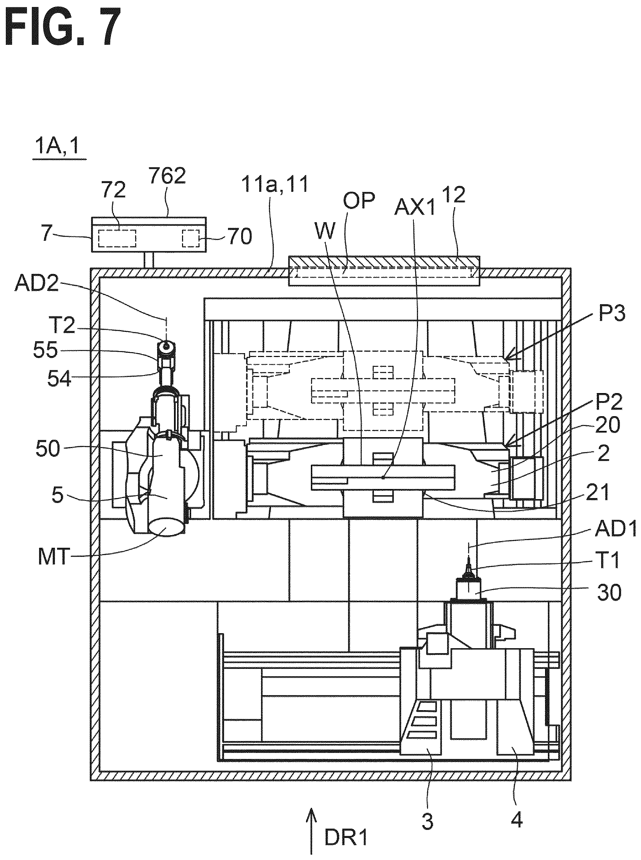

For example, in the first determination step (second step ST2), in a case that the controller 7 has determined that it is at least necessary to linearly move the workpiece W and turn the workpiece W about the first axis AX1, then, as exemplified in FIGs. 5 to 7, it is possible to perform: (1) shifting the table assembly 20 from the proceeding position P2 to the withdrawal position P3 (see FIG. 5); (2) in a state in which the table assembly 20 is positioned at the withdrawal position P3, turning the table 21 supporting the workpiece W about the first axis AX1 (see FIG. 6); and (3) returning the table assembly 20 to the proceeding position P2 from the withdrawal position P3 (see FIG. 7). It is to be noted that in a case that the workpiece W is a small-size workpiece, only the turning step (third step ST3) is performed, and it is not necessary to move the table assembly 20.

After the posture of the workpiece has been changed (more specifically, after the turning step has been performed), the first machining step (fourth step ST4) and the fifth machining step (fifth step ST5) are performed again.

After the first machining step (fourth step ST4) and the second machining step (fifth step ST5) have been performed, at sixth step ST6, a determination is made as to whether the machining of the workpiece W has been completed.

In the second determination step (sixth step ST6), in a case that the controller 7 has determined that the machining of the workpiece W is completed (sixth step ST6: Yes), then, as exemplified in FIG. 16, the workpiece W is moved to a removal position P6 (seventh step ST7). Seventh step ST7 is a workpiece movement step of moving the workpiece to the removal position.

In the example illustrated in FIG. 16, the workpiece movement step of moving the workpiece to the removal position (seventh step ST7) includes shifting the table assembly 20 to the removal position P6 from the proceeding position P2. The removal position P6 may be a position identical to the receiving position P1 (see FIG. 4), or may be a position different from the receiving position P1.

The workpiece movement step of moving the workpiece to the removal position (seventh step ST7) may include changing the orientation of the workpiece W. In the example illustrated in FIG. 16, the workpiece movement step of moving the workpiece to the removal position (seventh step ST7) includes turning the workpiece W about the first axis AX1. In the example illustrated in FIG. 16, the table 21 supporting the workpiece W is turned about the first axis AX1 at a position between the proceeding position P2 and the removal position P6 (more specifically, at the withdrawal position P3).

At eighth step ST8, the workpiece W is removed from the table 21. Eighth step ST8 is a removal step. The removal step (eighth step ST8) may include moving the door 12 from closed position to open position; and moving the workpiece W from the machining chamber CB to outside the machining chamber CB so as to cross the workpiece passage opening OP.

In the method according to the first embodiment of machining a workpiece, as exemplified in FIGs. 2, 5, and 6, after a part of the first machining step (fourth step ST4) and a part of the second machining step (fifth step ST5) have been simultaneously performed, the table 21 supporting the workpiece W is turned about the first axis AX1. In other words, a part of the step of machining the workpiece W supported by the table 21 using the first group of rotation tools sequentially held by the machining head 30 and a part of the step of machining the workpiece W supported by the table 21 using the second group of rotation tools sequentially held by the multi-joint arm 50 are simultaneously performed before a single turning step is performed (in other words, before the step of turning the table 21 supporting the workpiece W is performed).

Also in the method according to the first embodiment of machining a workpiece, as exemplified in FIGs. 6, 7, and 3, after the table 21 supporting the workpiece W has been turned about the first axis AX1, a part of the first machining step (fourth step ST4) and a part of the second machining step (fifth step ST5) are simultaneously performed. In other words, a part of the step of machining the workpiece W supported by the table 21 using the first group of rotation tools sequentially held by the machining head 30 and a part of the step of machining the workpiece W supported by the table 21 using the second group of rotation tools sequentially held by the multi-joint arm 50 are simultaneously performed after a single turning step is performed (in other words, after the step of turning the table 21 supporting the workpiece W has been performed).

By simultaneously performing a part of the first machining step and a part of the second machining step before or after a single turning step, the workpiece W can be machined more efficiently and in a shorter period of time.

The table 21 supporting the workpiece W is turned about the first axis AX1, and then the workpiece W supported by the table 21 is machined using the first group of rotation tools sequentially held by the machining head 30. This cycle is defined as machining cycle. The method according to the first embodiment of machining a workpiece may include repeating the machining cycle "N" or more times. It is to be noted that "N" is, for example, 1, 2, 3, 4, 5, 6, 7, 8, 9, 10, and so forth.

In at least one of the plurality of machining cycles, a part of the step of machining the workpiece W supported by the table 21 using the first group of rotation tools sequentially held by the machining head 30 and a part of the step of machining the workpiece W supported by the table 21 using the second group of rotation tools sequentially held by the multi-joint arm 50 may be simultaneously performed.

By repeating the machining cycle a plurality of times on a single workpiece W, the workpiece W can be easily machined into a complicated shape. Also in at least one of the plurality of machining cycles, by simultaneously performing a part of the machining performed using the machining head 30 and a part of the machining using the multi-joint arm 50, the efficiency of machining the workpiece W improves.

In the example illustrated in FIG. 2, the first group of rotation tools sequentially held by the machining head 30 include a surface working tool (for example, a milling tool), and the second group of rotation tools sequentially held by the multi-joint arm 50 include a hole-forming tool (for example, a drill or a tapping tool). In the method according to the first embodiment of machining a workpiece, the surface machining on the workpiece W using the surface working tool (for example, a milling tool) held by the machining head 30 may be performed simultaneously with the machining to form a hole in the workpiece W using the hole-forming tool (for example, a drill or a tapping tool) held by the multi-joint arm 50.

### (Second Embodiment)

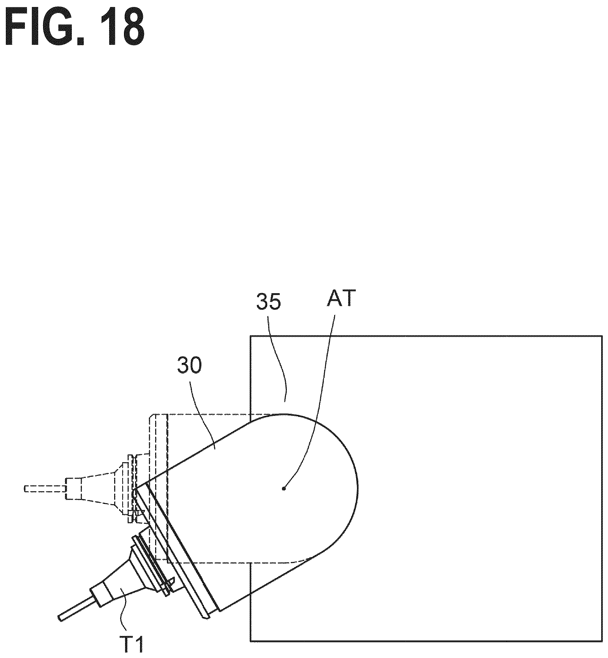

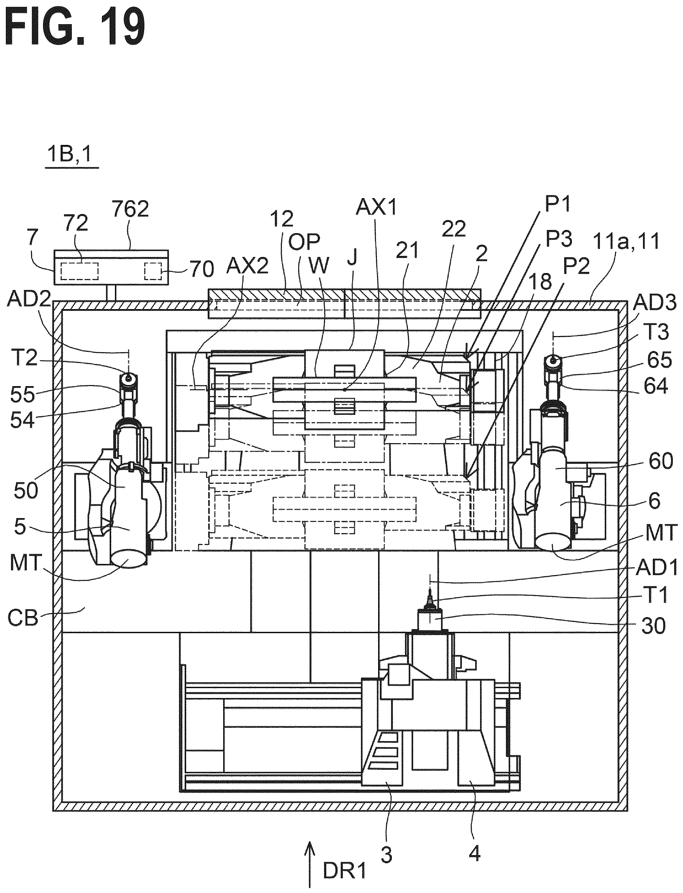

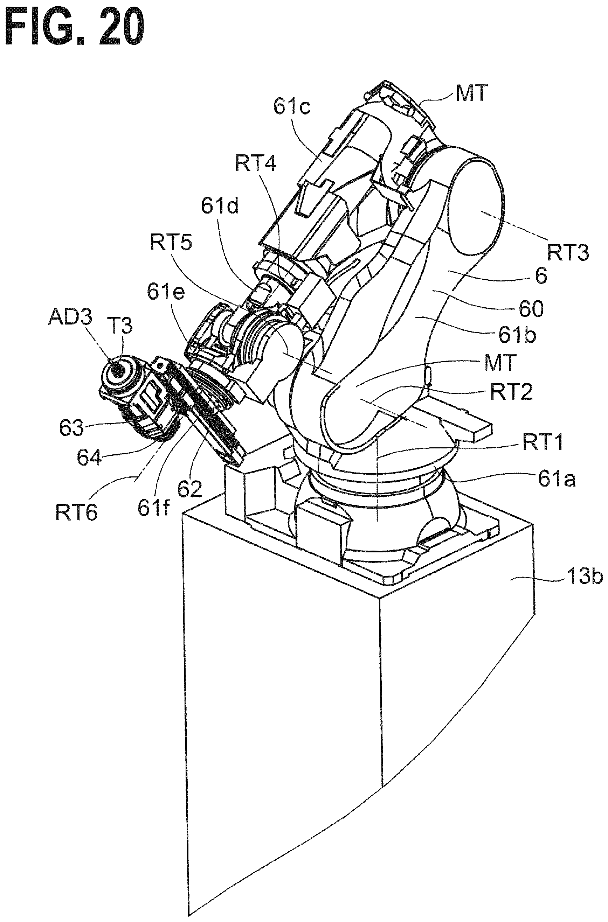

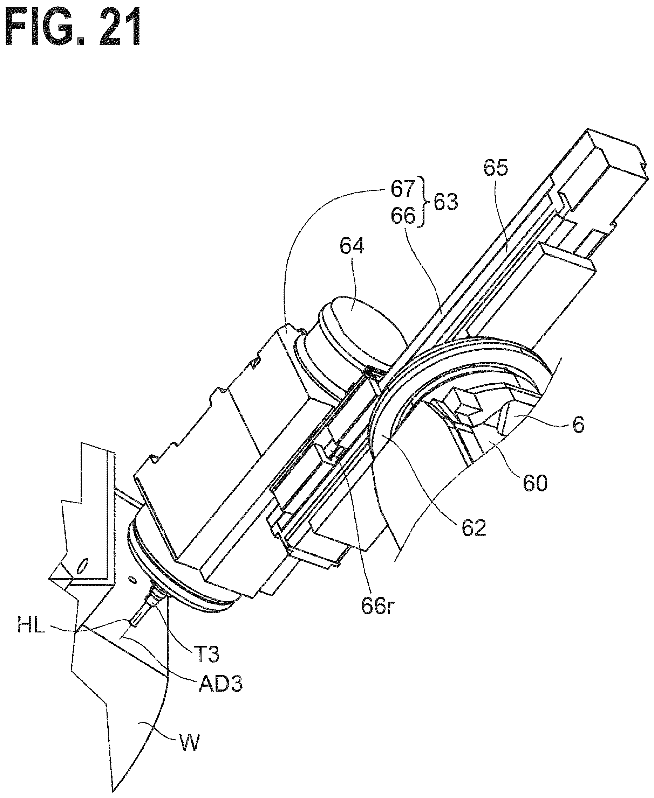

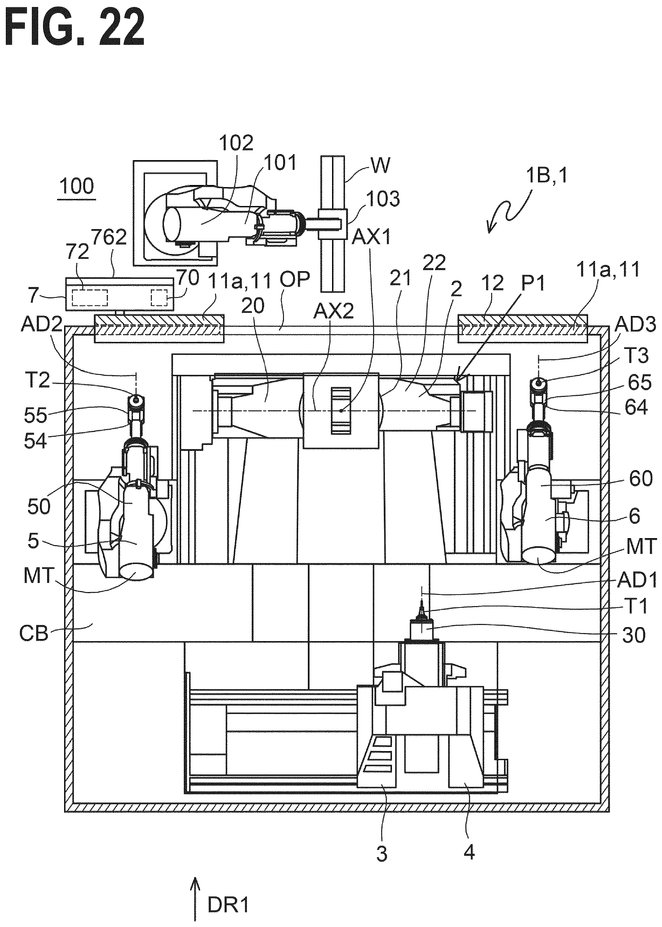

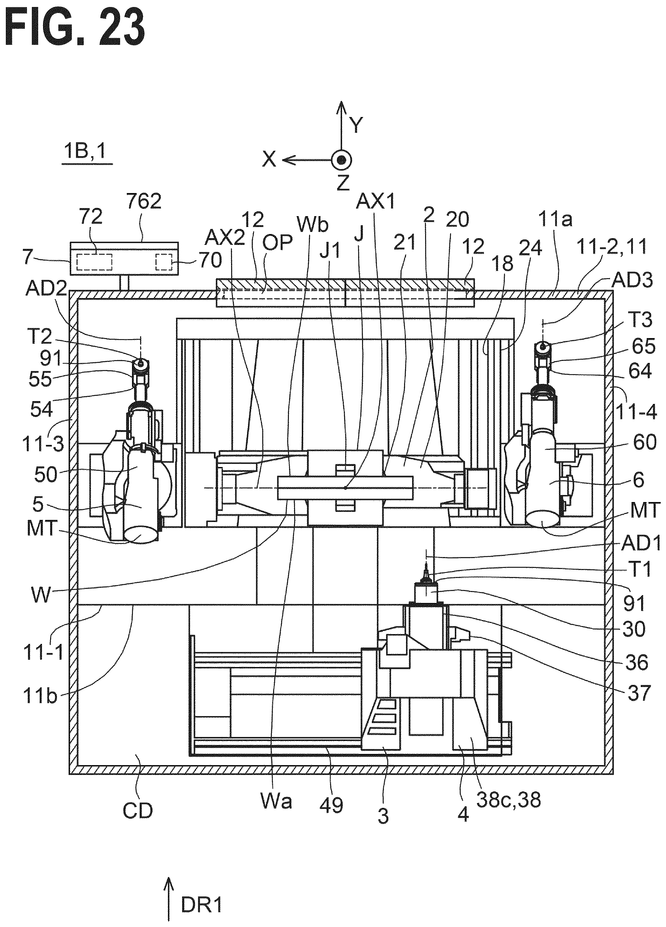

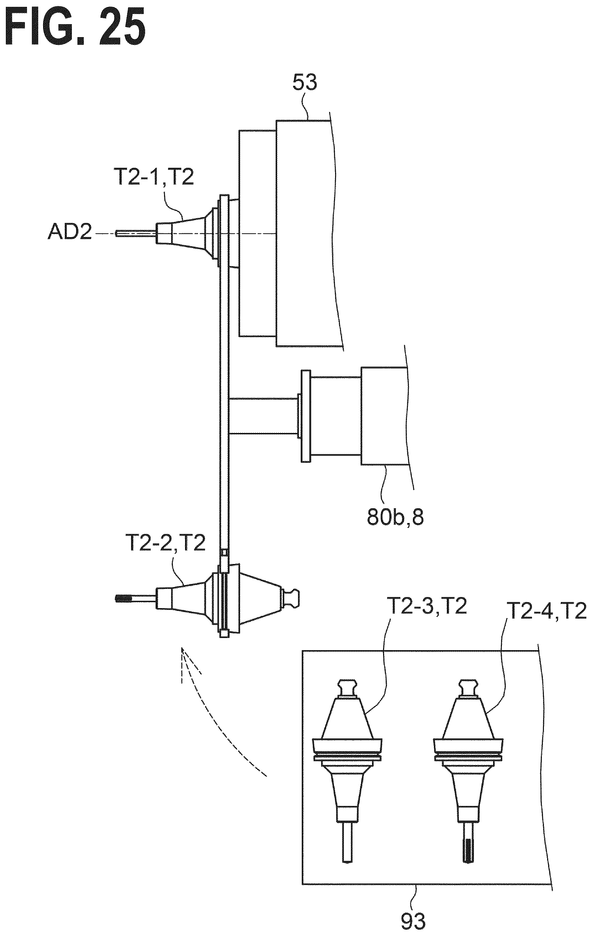

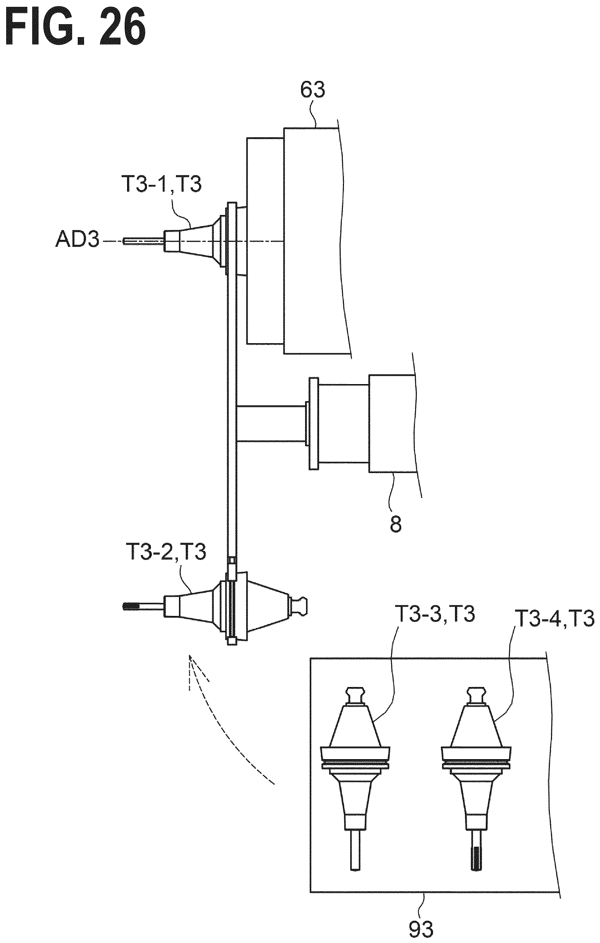

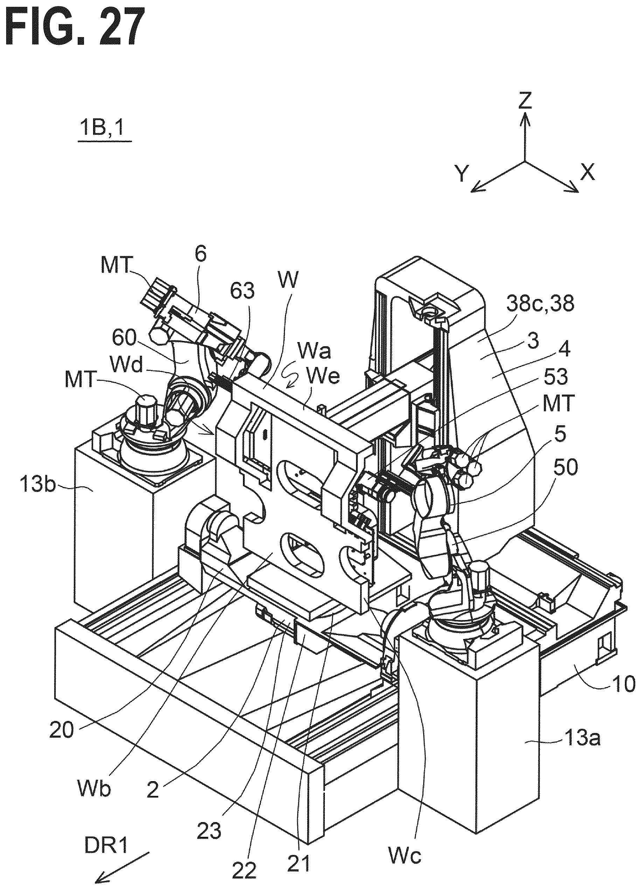

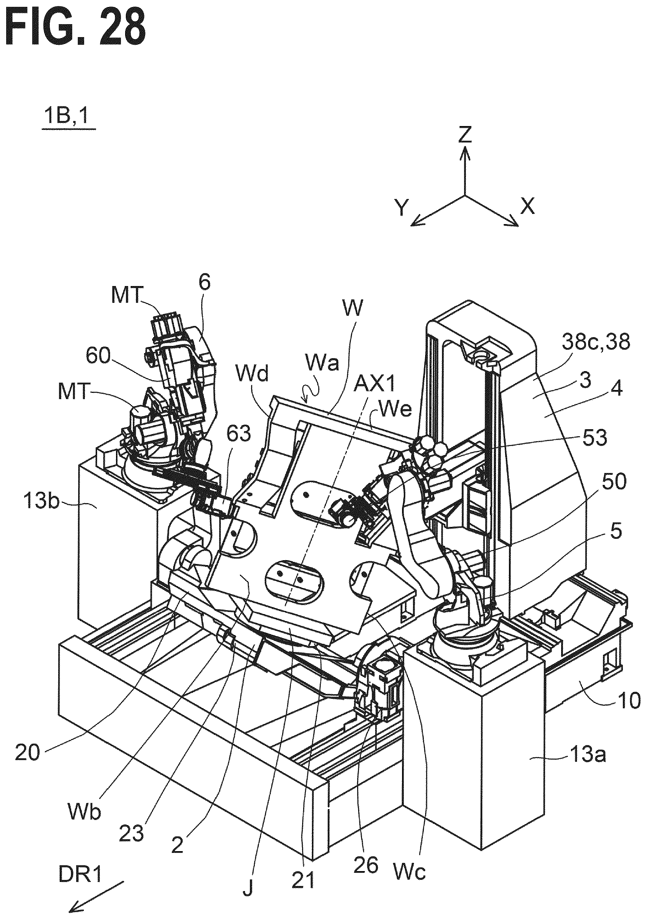

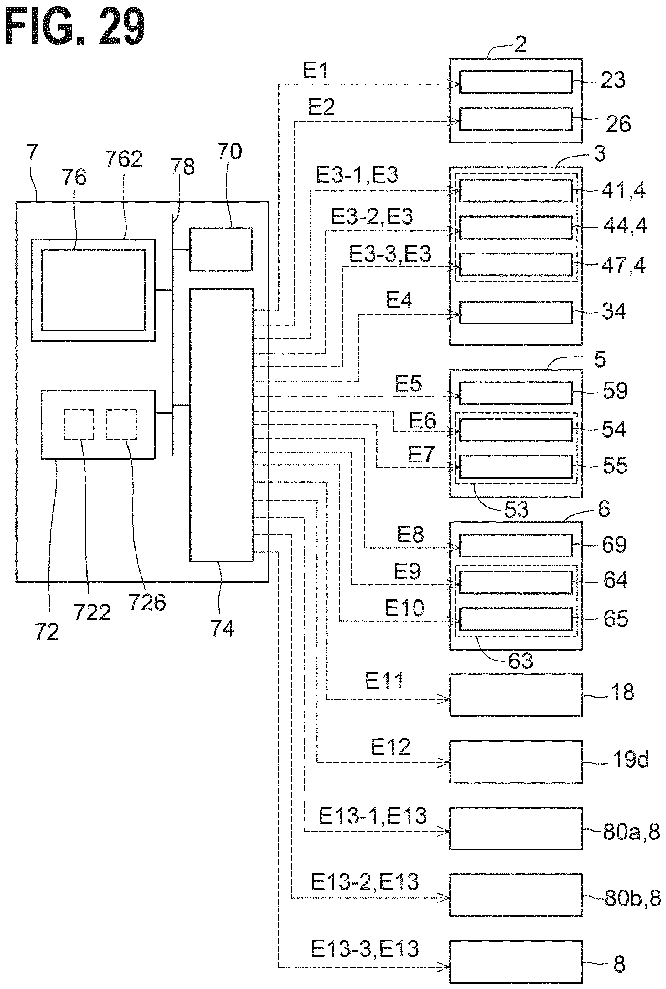

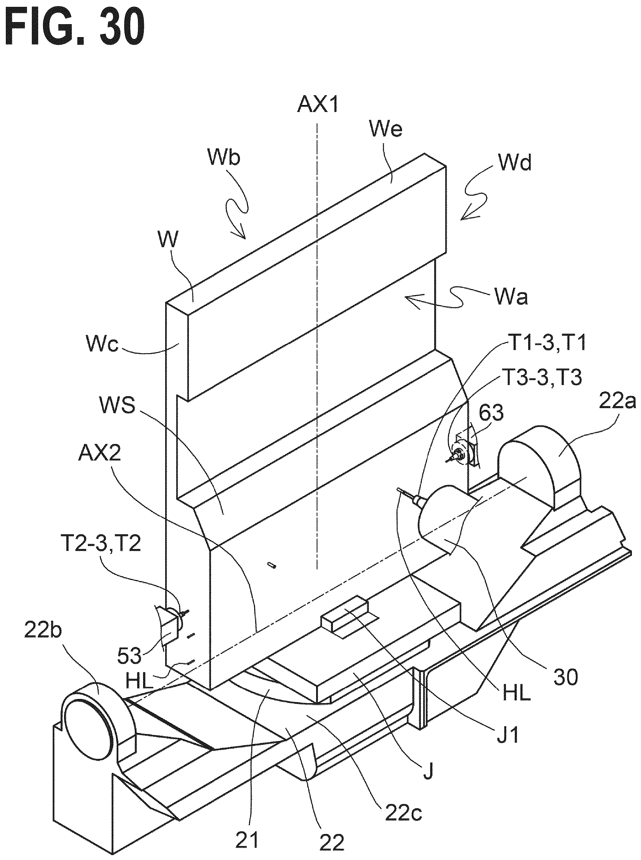

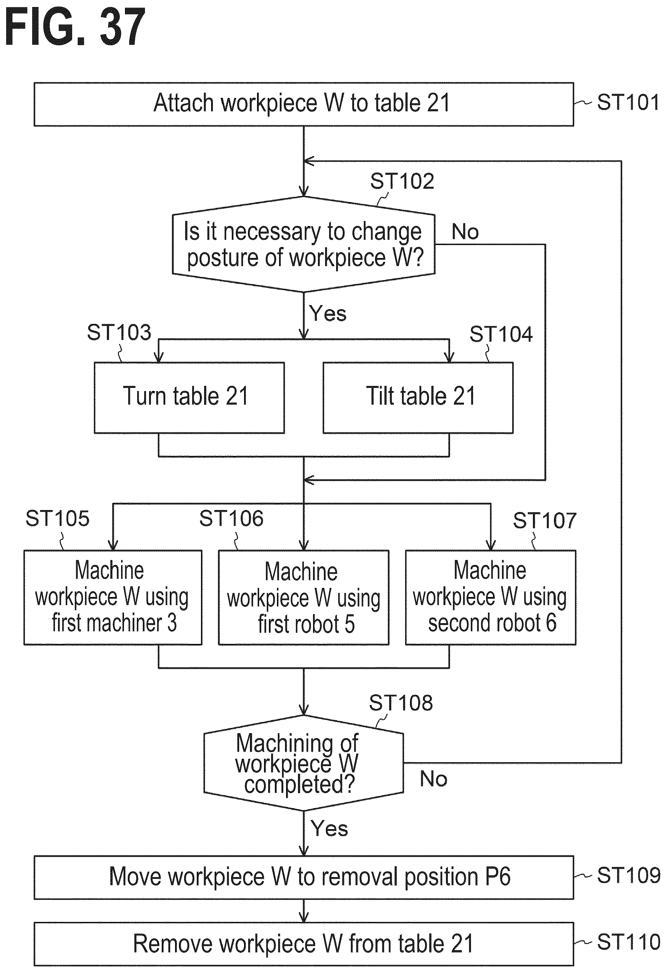

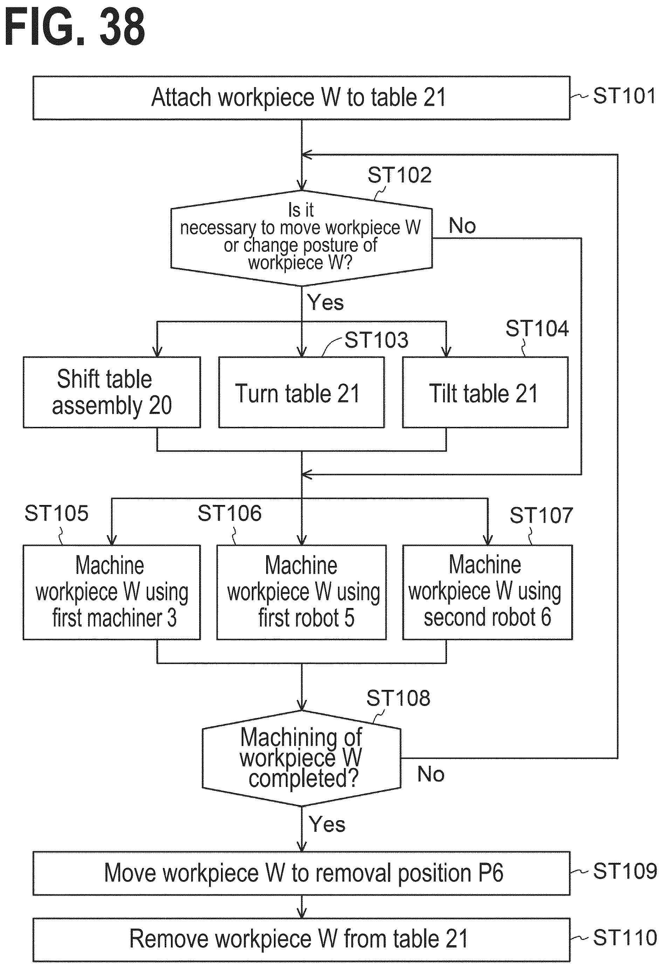

By referring to FIGs. 17 to 38, a machine tool 1B according to the second embodiment, and a method according to the second embodiment of machining a workpiece will be described. FIG. 17 is a schematic perspective view of the machine tool 1B according to the second embodiment. FIG. 18 is a schematic side view of a machining head 30 according to a modification. FIG. 19 is a schematic top view of the machine tool 1B according to the second embodiment. FIG. 20 is a schematic perspective view of an example of the second robot 6 and an example of a support base 13b. FIG. 21 is an enlarged schematic perspective view of an example of a second tool holder 63, which is mounted on the second multi-joint arm 60. FIG. 22 is a schematic top view of a machine tool system 100 according to the second embodiment. FIG. 23 is a schematic top view of the machine tool 1B according to the second embodiment. FIG. 24 is a schematic illustration of a situation in which at least one tool changer 8 is able to replace the first rotation tool T1 held by the machining head 30 with another first rotation tool. FIG. 25 is a schematic illustration of a situation in which the at least one tool changer 8 is able to replace the second rotation tool T2 held by the tool holder of the first robot 53 with another second rotation tool. FIG. 26 is a schematic illustration of a situation in which the at least one tool changer 8 is able to replace a third rotation tool T3 supported by the second tool holder 63 of the second robot with another third rotation tool. FIGs. 27 and 28 are schematic perspective views of the machine tool 1B according to the second embodiment. FIG. 29 is a schematic illustration of a situation in which the controller 7 is able to control a plurality of control target instruments. FIGs. 30 to 36 are enlarged schematic perspective views of how a step of the method of machining a workpiece is performed. FIG. 37 is a flowchart of an example method according to the second embodiment of machining a workpiece. FIG. 38 is a flowchart of another example method according to the second embodiment of machining a workpiece.

As exemplified in FIG. 17, in the second embodiment, the work holder 2 includes a second driver 26. The second driver 26 tilts the table 21 about the second axis AX2. Alternatively or additionally, the machine tool 1B according to the second embodiment includes the second robot 6.

The following description of the second embodiment will mainly focus on those respects in which the second embodiment is different from the first embodiment. Also in the following description, those respects already described in the first embodiment will not be described in the second embodiment to avoid a repetition of description. Thus, it will be readily appreciated that those respects that are not explicitly described in the second embodiment but are described in the first embodiment also apply in the second embodiment. Conversely, all respects described in the second embodiment are applicable to the first embodiment.

In the example illustrated in FIG. 17, the machine tool 1B according to the second embodiment includes (1) the work holder 2, which includes the table 21, which holds a workpiece, (2) the first machiner 3, which includes: the machining head 30, which holds the first rotation tool T1, which machines the workpiece supported by the table 21; and the plurality of linear movers 4, which three-dimensionally move the machining head 30, and (3) the first robot 5, which includes the multi-joint arm 50, which changes the position and the orientation of the second rotation tool T2, the first robot 5 machining the workpiece supported by the table 21 using the second rotation tool T2. The work holder 2 includes the first driver 23, which turns the table 21 about the first axis AX1.

With this configuration, the machine tool 1B according to the second embodiment provides effects similar to the effects provided by the machine tool 1A according to the first embodiment.

### (Optional Configurations)

Next, by referring to FIGs. 1 to 38, optional configuration employable in the second embodiment (or the first embodiment) will be described.

### (Second Driver 26)

In the example illustrated in FIG. 17, the work holder 2 includes the second driver 26 (for example, a motor). The second driver 26 tilts the table 21 about the second axis AX2. In the example illustrated in FIG. 17, the second driver 26 tilts the block 22 about the second axis AX2 to tilt the table 21, which is supported by the block 22, about the second axis AX2. In the example illustrated in FIG. 17, the second axis AX2 is an axis different from the first axis AX1. More specifically, the second axis AX2 is perpendicular to the first axis AX1. The second axis AX2 may be substantially parallel to a horizontal plane.

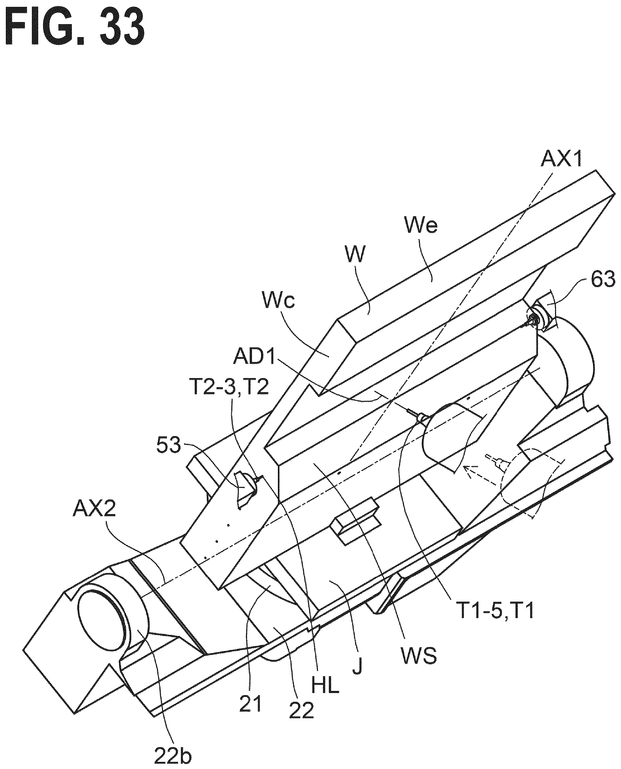

In a case that the work holder 2 has a tilting axis (in other words, in a case that the table 21 is tiltable about the second axis AX2), an inclined surface WS of the workpiece W (see, if necessary, FIG. 33) can be oriented so as to be perpendicular to the first rotation axis AD1 of the first rotation tool T1. With this configuration, highly accurate machining using the machining head 30 can be applied to the inclined surface WS of the workpiece W. Accordingly, an additional machine tool different from the machine tool 1 may not necessarily be provided to perform precision machining on the inclined surface WS of the workpiece W. A reduction in the number of machine tools allows for a decrease in the installation space required in the facility. It is to be noted that the inclined surface WS of the workpiece W can be more specifically described as a surface inclined relative to the first axis AX1 or a surface inclined relative to the upper surface of the table 21.

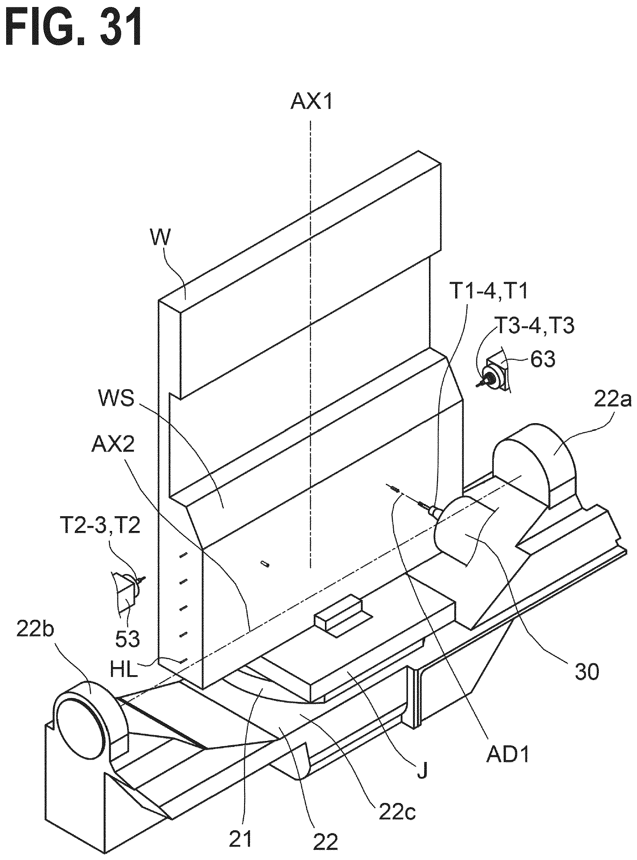

In the examples illustrated in FIGs. 31 to 33, the work holder 2 (more specifically, the second driver 26) is capable of tilting the table 21 about the second axis AX2 to change the posture of the workpiece W. Specifically, the posture of the workpiece W is changed from such a posture that the inclined surface WS of the workpiece W is tilted relative to the first rotation axis AD1 of the first rotation tool T1 (more specifically, as exemplified in FIG. 31, such a posture that the inclined surface WS of the workpiece W is tilted relative to a horizontal plane) to such a posture that the inclined surface WS of the workpiece W is substantially perpendicular to the first rotation axis AD1 of the first rotation tool T1 (more specifically, as exemplified in FIG. 33, such a posture that the inclined surface WS of the workpiece W is substantially perpendicular to a horizontal plane).

More specifically, the controller 7 executes the machining program stored in the memory 72 to transmit a tilting command E2 to the second driver 26 (see, if necessary, FIG. 29) so that the posture of the workpiece W is changed from such a posture that the inclined surface WS of the workpiece W is tilted relative to the first rotation axis AD1 of the first rotation tool T1 to such a posture that the inclined surface WS of the workpiece W is substantially perpendicular to the first rotation axis AD1 of the first rotation tool T1. Upon receipt of the tilting command E2, the second driver 26 tilts the table 21 about the second axis AX2 to change the posture of the workpiece W to such a posture that the inclined surface WS of the workpiece W is substantially perpendicular to the first rotation axis AD1 of the first rotation tool T1.

In the example illustrated in FIG. 33, after the posture of the workpiece W has been changed to such a posture that the inclined surface WS of the workpiece W is substantially perpendicular to the first rotation axis AD1, the machine tool 1 is configured to machine the inclined surface WS of the workpiece W using the first rotation tool T1 held by the machining head 30.

More specifically, after the posture of the workpiece W has been changed to such a posture that the inclined surface WS of the workpiece W is substantially perpendicular to the first rotation axis AD1, the controller 7 executes the machining program stored in the memory 72 to transmit a first shifting command E3-1 (see, if necessary, FIG. 29) to a first linear mover 41, which is one of the plurality of linear movers 4, so that a hole-forming tool T1-5 (for example, a tapping tool or a hole-opening tool) that is in a state of rotating about the first rotation axis AD1 linearly moves along the first rotation axis AD1. Upon receipt of the first shifting command E3-1, the first linear mover 41 linearly moves the hole-forming tool T1-5 that is in a state of rotating about the first rotation axis AD1 along the first rotation axis AD1 so that the hole HL is formed in the inclined surface WS of the workpiece W. Thus, the hole HL can be formed in the inclined surface WS of the workpiece W highly accurately.

Alternatively, after the posture of the workpiece W has been changed to such a posture that the inclined surface WS of the workpiece W is substantially perpendicular to the first rotation axis AD1, the controller 7 may execute the machining program stored in the memory 72 to transmit the shifting command E3 (see, if necessary, FIG. 29) to the plurality of linear movers 4 so that a surface working tool T1-6 that is in a state of rotating about the first rotation axis AD1 (for example, a milling tool) performs surface machining on the inclined surface WS. Upon receipt of the shifting command E3, the plurality of linear movers 4 move the surface working tool that is in a state of rotating about the first rotation axis AD1 in a direction perpendicular to the first rotation axis AD1 so that the inclined surface WS of the workpiece W is subjected to surface machining. Thus, the inclined surface WS of the workpiece W can be subjected to surface machining highly accurately.

In a case that the work holder 2 has a tilting axis (in other words, in a case that the table 21 is tiltable about the second axis AX2), the apex surface We of the workpiece W can be made to be tilted relative to a horizontal plane, as exemplified in FIG. 28. In this case, the second rotation tool T2 held by the multi-joint arm 50 (or the third rotation tool T3 held by the second multi-joint arm 60) need not be moved in a vertically downward direction to approach the apex surface We of the workpiece W. This configuration ensures that the size of the multi-joint arm 50 of the first robot 5 (or the size of the second multi-joint arm 60 of the second robot 6) can be reduced. As a result, the plurality of surfaces of the workpiece W, including the apex surface We, can be efficiently machined without increasing the size of the first robot 5 (or the second robot 6).

In the example illustrated in FIG. 17, the second driver 26 is preferably capable of steplessly tilting the table 21 about the second axis AX2. In other words, the machine tool 1 is preferably capable of steplessly adjusting the inclination angle of the table 21. The second driver 26 may be capable of maintaining the angle defined between the horizontal plane and the upper surface of the table 21 at an angle of at least 0 degrees or more and 90 degrees or less.

The multi-joint arm 50 is capable of changing the orientation of the second rotation tool T2 to any orientation. Therefore, in the machining using the first robot 5, it is not necessary to tilt the workpiece W. In contrast, the movement of the machining head 30 is controlled using the plurality of linear movers 4; therefore, fundamentally, the orientation of the machining head 30 can not be changed relative to the workpiece W. It is of course possible, however, that the machine tool 1B according to the second embodiment (or the machine tool 1A according to the first embodiment) may include a tilting driver 35, as exemplified in FIG. 18. The tilting driver 35 tilts the machining head 30 about a tilting axis AT. However, limitations exist in tilting about the tilting axis AT using the tilting driver 35. Also, to change the posture of the machining head 30 to any desired orientation, at least two tilting axes are necessary. The machine tool 1B according to the second embodiment (or the machine tool 1A according to the first embodiment) may include a tilting driver that tilts the machining head 30 about two tilting axes. However, adding more tilting axes to the machining head 30 can lead to a higher possibility of accuracy deterioration in the machining using the first machiner 3.

### (Work Holder 2)

In the example illustrated in FIG. 17, the work holder 2 includes the table assembly 20. The table assembly 20 includes the table 21, the block 22, the first driver 23, and a support base 25. The block 22 supports the table 21 so as to turn about the first axis AX1. The first driver 23 turns the table 21 about the first axis AX1. The support base 25 supports the block 22 so as to tilt about the second axis AX2. The table assembly 20 may include the second driver 26. The second driver 26 tilts the table 21 about the second axis AX2. In the example illustrated in FIG. 17, the first driver 23 is incorporated in the block 22 so that the first driver 23 is tiltable about the second axis AX2 together with the block 22. In other words, the orientation of the first axis AX1 changes in conjunction with the tilting of the table 21 about the second axis AX2. Alternatively, a block 22 that tiltably supports the table 21 may be incorporated in the second driver 26 so that the second driver 26 is turnable about the first axis AX1 together with the block 22. In other words, the orientation of the second axis AX2 may change in conjunction with the turning of the table 21 about the first axis AX1.

In the example illustrated in FIG. 17, the support base 25 includes the first support base 25a and the second support base 25b. The first support base 25a supports a first end portion 22a of the block 22 so as to tilt about the second axis AX2. The second support base 25b tiltably supports a second end portion 22b of the block 22.

In the example illustrated in FIG. 17, the table 21 has a substantially circular shape with a portion cut out in a plan view. The shape of the table 21 will not be limited to the example illustrated in FIG. 17. For example, the shape of the table 21 may be a polygonal shape.

In the example illustrated in FIG. 17, the block 22 includes the first end portion 22a, the second end portion 22b, and a center portion 22c. The first end portion 22a is tiltably supported by the first support base 25a. The second end portion 22b is tiltably supported by the second support base 25b. The center portion 22c is located between the first end portion 22a and the second end portion 22b. The block 22 has such a depression shape that the center portion 22c is depressed relative to the first end portion 22a and the second end portion 22b. In the example illustrated in FIG. 17, the table 21 is provided immediately over the center portion 22c in a state in which the upper surface of the table 21 is oriented in parallel to a horizontal plane. In the example illustrated in FIG. 17, the height of the upper surface of the table 21 is smaller the height of the second axis AX2 in a state in which the upper surface of the table 21 is oriented in parallel to a horizontal plane.

The block 22, which supports the table 21, has an elongate shape with its longitudinal direction extending in the second direction DR2 when viewed in a direction parallel to the first axis AX1. It is to be noted that the shape of the block 22 will not be limited to the shape illustrated in FIG. 17, and can have any other shape.

The work holder 2 may include the guide rails 24, in addition to the table assembly 20. The guide rails 24 guide the movement of the table assembly 20 in a direction parallel to the first direction *DR1.*

### (Third Driver 18)

The machine tool 1 may include the third driver 18. The third driver 18 moves the table assembly 20 in a direction parallel to the first direction *DR1.* In the example illustrated in FIG. 17, the first direction *DR1* is substantially parallel to a horizontal plane and substantially perpendicular to the second axis AX2.

The machine tool 1 may include the fourth driver 19d (see, if necessary, FIG. 8), in addition to the third driver 18 or instead of the third driver 18. The fourth driver 19d moves the first machiner 3 in a direction parallel to the first direction *DR1.* The third driver 18 and the fourth driver 19d are as described in the first embodiment. A description of the third driver 18 and the fourth driver 19d will be omitted where otherwise a repetition of description occurs.

In the example illustrated in FIG. 19, the table assembly 20 is movable in a direction parallel to the first direction *DR1* at least between the receiving position P1 and the proceeding position P2. The receiving position P1 and the proceeding position P2 are as described in the first embodiment. A description of the receiving position P1 and the proceeding position P2 will be omitted where otherwise a repetition of description occurs.

In the example illustrated in FIG. 19, the table assembly 20 is movable in a direction parallel to the first direction *DR1* at least between the proceeding position P2 and the withdrawal position P3. The proceeding position P2 and the withdrawal position P3 are as described in the first embodiment. A description of the proceeding position P2 and the withdrawal position P3 will be omitted where otherwise a repetition of description occurs.

In the example illustrated in FIG. 19, the receiving position P1 is set at a position near the workpiece passage opening OP, which is formed in the walls 11. For example, the receiving position P1 is an end position in the first direction *DR1* within the movable range of the table assembly 20. The proceeding position P2 is, for example, an end position in the opposite direction of the first direction *DR1* within the movable range of the table assembly 20, or a position near the end position in the opposite direction of the first direction *DR1.* While in FIG. 19 a single position is illustrated as the proceeding position P2, a plurality of proceeding positions P2 may exist. For example, one proceeding position P2 at which the workpiece W supported by the table 21 in inclined state is machined by the first machiner 3 may be set at a position further in the first direction *DR1* than another proceeding position P2 at which the workpiece W supported by the table 21 in non-inclined state is machined by the first machiner 3. In other words, the position of the table assembly 20 in a case that the workpiece W supported by the table 21 in inclined state is machined by the first machiner 3 may be set at a position further in the first direction *DR1* than the position of the table assembly 20 in a case that the workpiece W supported by the table 21 in non-inclined state is machined by the first machiner 3 (see the positions of the table assembly 20 illustrated in FIGs. 27 and 28).

The withdrawal position P3 is, for example, a predetermined position between one end position of the movable range of the table assembly 20 in the first direction *DR1* and another end position of the movable range of the table assembly 20 in a direction opposite to the first direction *DR1.* Alternatively, the withdrawal position P3 may be a position identical to the receiving position P1.

### (Machining Head 30)

The machining head 30 has already been described in the first embodiment. Therefore, redundant description of the machining head 30 will be eliminated or minimized (see, for example, FIG. 9 for the machining head 30). In the example illustrated in FIG. 19, the first rotation axis AD1, which is the rotation axis of the first rotation tool T1 (in other words, the rotation axis of the spindle 31 of the machining head 30), is substantially perpendicular to the second axis AX2 in a plan view.

### (First Robot 5)

The first robot 5 has already been described in the first embodiment. Therefore, redundant description of the first robot 5 will be eliminated or minimized (see, for example, FIGs. 10 and 11 for the first robot 5).

### (Second Robot 6)

In the example illustrated in FIG. 17, the machine tool 1 includes the second robot 6. The second robot 6 machines the workpiece supported by the table 21 using the third rotation tool T3. The second robot 6 includes the second multi-joint arm 60. The second multi-joint arm 60 changes the position and the orientation of the third rotation tool T3. The second robot 6 can be referred to as a second multi-joint robot.

In the example illustrated in FIG. 17, the work holder 2 (for example, the table assembly 20 or the guide rails 24, which movably support the table assembly 20) is provided between the first robot 5 and the second robot 6 in a plan view. In a case that the work holder 2 is provided between the first robot 5 and the second robot 6, the first robot 5 and the second robot 6 are able to simultaneously machine the workpiece W on both end sides of the workpiece W.

In the example illustrated in FIG. 20, the second robot 6 includes the second multi-joint arm 60, and the second multi-joint arm 60 includes at least six rotation axes (RT1, RT2, RT3, RT4, RT5, and RT6). More specifically, the second multi-joint arm 60 includes a first portion 61a, a second portion 61b, a third portion 61c, a fourth portion 61d, a fifth portion 61e, and a sixth portion 61f. The first portion 61a is turnable about a first turning axis RT1 relative to the support base 13b. The second portion 61b is tiltable about a first tilting axis RT2 relative to the first portion 61a. The third portion 61c is tiltable about a second tilting axis RT3 relative to the second portion 61b. The fourth portion 61d is turnable about a second turning axis RT4 relative to the third portion 61c. The fifth portion 61e is tiltable about a third tilting axis RT5 relative to the fourth portion 61d. The sixth portion 61f is turnable about a third turning axis RT6 relative to the fifth portion 61e. In the example illustrated in FIG. 20, the second multi-joint arm 60 includes at least three tilting axes and at least three turning axes.

In the example illustrated in FIG. 20, a second list 62 is provided at a leading end portion of the second multi-joint arm 60. In other words, the second robot 6 includes the second list 62, which is provided at the leading end portion of the second multi-joint arm 60. In the example illustrated in FIG. 20, the second list 62 is made up of the sixth portion 61f. The second robot 6 is capable of changing the position and the orientation of the second list 62 in any desired manner.

The second robot 6 includes a plurality of arm drivers (for example, a plurality of motors MT) that move a plurality of respective joints of the second multi-joint arm 60.

In the example illustrated in FIG. 20, the second robot 6 includes the second tool holder 63. The second tool holder 63 is mounted on the second multi-joint arm 60 (more specifically, the second list 62). The second tool holder 63 is capable of supporting the third rotation tool T3.

The second tool holder 63 includes a third rotational driver 64 (more specifically, motor). The third rotational driver 64 rotates the third rotation tool T3 about a third rotation axis AD3.

In the example illustrated in FIG. 21, the second tool holder 63 includes a fixed portion 66 and a movable portion 67. The fixed portion 66 is mounted on the second multi-joint arm 60 (more specifically, the second list 62). The movable portion 67 is linearly movable in a direction parallel to the third rotation axis AD3 relative to the fixed portion 66. The fixed portion 66 may include linear guides 66r. The linear guides 66r guide the movement of the movable portion 67 in a direction parallel to the third rotation axis AD3. The third rotation tool T3 is mounted on the spindle provided at the movable portion 67.

In the example illustrated in FIG. 21, the second tool holder 63 includes a tool mover (hereinafter referred to as "second tool linear mover 65"). The second tool linear mover 65 moves the third rotation tool T3 in a direction parallel to the third rotation axis AD3. The second tool linear mover 65 includes, as a driving source, elements such as a motor and an electric cylinder. Also in the example illustrated in FIG. 21, the second tool linear mover 65 includes the linear guides 66r. The linear guides 66r guide the movement of the movable portion 67 of the second tool holder 63 relative to the fixed portion 66 of the second tool holder 63. The second tool linear mover 65 may include elements such as a ball screw and a rack-and-pinion.

In a case that the second tool holder 63 includes the third rotational driver 64 and the second tool linear mover 65, the second tool holder 63 is able to moves the third rotation tool T3 in a direction parallel to the third rotation axis AD3 while rotating the third rotation tool T3 about the third rotation axis AD3. With this configuration, after the third rotation tool T3 has contacted the workpiece W, the hole HL can be formed in the workpiece W using the third rotation tool T3 without changing the position of the second list 62. As a result, the accuracy of machining to form a hole in the workpiece W is maintained. In other words, a decline in machining accuracy caused by the presence of multiple joints in the second robot 6 is unavoidable; however, since machining is performed with the multiple joints fixed at specific angles while forming a hole in the workpiece, an excessive decline in machining accuracy is prevented.

In the example illustrated in FIG. 17, the machine tool 1 includes the support base 13b. The support base 13b supports the second robot 6. In the example illustrated in FIG. 17, the height of an upper surface 131b of the support base 13b is greater than the height of the upper surface of the table 21. The height of the upper surface 131b of the support base 13b is also greater than the height of the uppermost end of the table assembly 20. In the example illustrated in FIG. 17, the support base 13b is unmovable relative to the base 10 of the machine tool 1. Alternatively, the support base 13b may be movable relative to the base 10 of the machine tool 1. In other words, the entirety of the second robot 6 may be movable relative to the base 10.

### (Third Robot 101)

As exemplified in FIG. 22, the machine tool system 100 according to the second embodiment includes the machine tool 1 (for example, the machine tool 1A according to the first embodiment or the machine tool 1B according to the second embodiment) and a third robot 101. The third robot 101 is provided outside the machine tool 1.

The third robot 101 transfers the workpiece W into the machining chamber CB from outside the machine tool 1, and/or transfers the workpiece out of the machining chamber CB from the table 21 (that is, takes out an already machined workpiece). In the example illustrated in FIG. 22, the walls 11 (more specifically, the fixed wall 11a) are provided between the third robot 101 and the first robot 5. The walls 11 define the machining chamber CB. It is to be noted that the number of robots to transfer the workpiece will not be limited to one. In other words, the machine tool system 100 may include, in addition to the third robot 101, another robot to transfer the workpiece.

In the example illustrated in FIG. 22, the third robot 101 transfers the workpiece W into the machining chamber CB of the machine tool 1 through the workpiece passage opening OP from outside the machine tool 1. More specifically, the third robot 101 transfers the workpiece W into the machining chamber CB of the machine tool 1 through the workpiece passage opening OP from outside the machine tool 1, and the table assembly 20 (more specifically, the table 21) receives the workpiece W from the third robot 101. In a case that the table assembly 20 is positioned at the receiving position P1, the table assembly 20 can smoothly receive the workpiece W from the third robot 101.

In the example illustrated in FIG. 22, the third robot 101 includes a third multi-joint arm 102. The third multi-joint arm 102 is capable of crossing the workpiece passage opening OP. The third robot 101 also includes a gripper 103. The gripper 103 is capable of gripping the workpiece W. The gripper 103 is mounted on, for example, a leading end portion of the third multi-joint arm 102.

### (Machining Chamber CB)

In the example illustrated in FIG. 23, the machine tool 1 includes the walls 11, which define the machining chamber CB. In the example illustrated in FIG. 23, the machining head 30, the multi-joint arm 50 of the first robot 5, and the second multi-joint arm 60 of the second robot 6 are provided in the machining chamber CB. In the example illustrated in FIG. 23, the walls 11 include the first wall 11-1 and the second wall 11-2.

In the example illustrated in FIG. 23, the first wall 11-1 partitions the machining chamber CB from the second chamber CD. The second chamber CD is where all or a majority of the plurality of linear movers 4, which three-dimensionally move the machining head 30, are provided. The first wall 11-1 also includes the movable wall 11b.

In the second wall 11-2, the workpiece passage opening OP is formed. In the example illustrated in FIG. 23, the second wall 11-2 is provided to face the first wall 11-1.

In the example illustrated in FIG. 23, the walls 11, which define the machining chamber CB, include the third wall 11-3 and the fourth wall 11-4. The third wall 11-3 connects one end portion of the first wall 11-1 to one edge portion of the second wall 11-2. The fourth wall 11-4 faces the third wall 11-3.

In the example illustrated in FIG. 23, the walls 11, which define the machining chamber CB, include the movable wall 11b. The movable wall 11b moves to follow the movement of the machining head 30. As exemplified in FIG. 39, the movable wall 11b may include the first movable wall 11b-1 and the second movable wall 11b-2. The first movable wall 11b-1 expands and contracts in a direction parallel to the vertical direction to follow the movement of the machining head 30. The second movable wall 11b-2 expands and contracts to follow the movement of the machining head 30 in a direction parallel to a horizontal plane.

### (Coolant Liquid Supplier 91)

In the example illustrated in FIG. 23, the machine tool 1 includes the coolant liquid supplier 91. The coolant liquid supplier 91 supplies coolant liquid toward the workpiece W supported by the table 21. The coolant liquid supplier 91 has already been described in the first embodiment. Therefore, a description of the coolant liquid supplier 91 will be omitted where otherwise a repetition of description occurs.

### (Workpiece Passage Opening OP, Door 12)

In the example illustrated in FIG. 23, the workpiece passage opening OP is formed in the walls 11, which define the machining chamber CB. The workpiece passage opening OP is for the workpiece W to pass through. The machine tool 1 also includes the door 12. The door 12 opens and closes the workpiece passage opening OP, which is formed in the walls 11.

In the example illustrated in FIG. 23, the work holder 2 is provided between the first machiner 3 and the workpiece passage opening OP in a plan view. With this configuration, when the workpiece W is transferred into or out of the machine tool, the first machiner 3 does not cause any obstruction.

In the example illustrated in FIG. 23, the workpiece passage opening OP, the first robot 5, the first machiner 3, and the second robot 6 are provided around the work holder 2 (more specifically, the table assembly 20) in a plan view. More specifically, the workpiece passage opening OP, the first robot 5, and the first machiner 3 are centered around the work holder 2 in a plan view, that is, the workpiece passage opening OP, the first robot 5, and the first machiner 3 are provided around the work holder 2 in a plan view. In this case, the machine tool 1 can be made compact in a plan view.

As exemplified in FIG. 23, the workpiece passage opening OP, the first robot 5, the first machiner 3, and the second robot 6 may be provided in this order in a counterclockwise direction (or a clockwise direction) around the work holder 2.

In the example illustrated in FIG. 23, the first machiner 3 and the first robot 5 are positioned in regions that differ by approximately 90 degrees around the work holder 2 in a plan view, and the first machiner 3 and the second robot 6 are positioned in regions that differ by approximately 90 degrees around the work holder 2 in a plan view. In this case, when the first main surface Wa or the second main surface Wb of the workpiece W is machined using the first machiner 3, the first robot 5 and the second robot 6 are able to more easily machine the workpiece W on both side surfaces of the workpiece W.

In the example illustrated in FIG. 23, the machining head 30 of the first machiner 3 is provided near the first wall 11-1, the first robot 5 is provided near the third wall 11-3, and the second robot 6 is provided near the fourth wall 11-4.

Alternatively, in the example illustrated in FIG. 23, the position of the first machiner 3 and the position of the first robot 5 may be swapped. Alternatively, in the example illustrated in FIG. 23, the position of the first machiner 3 and the position of the second robot 6 may be swapped.

### (Movable Parts of First Machiner 3)

In the example illustrated in FIG. 17, the first machiner 3 includes movable parts that three-dimensionally move the machining head 30. More specifically, the first machiner 3 includes a first movable part 36, a second movable part 37, and a third movable part 38.

The first movable part 36 is movable in a direction parallel to a Y axis together with the machining head 30. In the example illustrated in FIG. 17, the first movable part 36 supports the machining head 30 and is movable in the direction parallel to the Y axis. In the example illustrated in FIG. 17, the Y axis is, for example, substantially parallel to the first rotation axis AD1, which is the rotation axis of the first rotation tool T1. The Y axis may be substantially parallel to the first direction *DR1.*

The second movable part 37 is movable in a direction parallel to a Z axis together with the machining head 30. In the example illustrated in FIG. 17, the second movable part 37 supports the machining head 30 via the first movable part 36, and is movable in the direction parallel to the Z axis. In the example illustrated in FIG. 17, the Z axis is substantially parallel to the vertical direction.

The third movable part 38 is movable in a direction parallel to an X axis together with the machining head 30. In the example illustrated in FIG. 17, the third movable part 38 supports the machining head 30 via the first movable part 36 and the second movable part 37, and is movable in the direction parallel to the X axis. An example of the third movable part 38 is the column 38c. The column 38c movably supports the second movable part 37. In the example illustrated in FIG. 17, the X axis is substantially parallel to a horizontal plane. The X axis is also substantially perpendicular to the Y axis.

In the example illustrated in FIG. 17, the machine tool 1 includes the base 10. The base 10 supports the third movable part 38 so as to move in a direction parallel to the X axis.

### (Plurality of Linear Movers 4)

In the example illustrated in FIG. 17, the machine tool 1 (more specifically, the first machiner 3) includes the plurality of linear movers 4. The plurality of linear movers 4 three-dimensionally move the machining head 30. The plurality of linear movers 4 include the first linear mover 41, a second linear mover 44, and a third linear mover 47. The first linear mover 41 moves the machining head 30 in a direction parallel to the Y axis. The second linear mover 44 moves the machining head 30 in a direction parallel to the Z axis. The third linear mover 47 moves the machining head 30 in a direction parallel to the X axis.

The first linear mover 41 includes a driver 42 (for example, a motor). The driver 42 moves the first movable part 36 in a direction parallel to the Y axis. The first linear mover 41 preferably includes a first linear guide 43. The first linear guide 43 guides the movement of the first movable part 36 in a direction parallel to the Y axis. In the example illustrated in FIG. 17, the first linear guide 43 is provided at the second movable part 37.

The second linear mover 44 includes a driver 45 (for example, a motor). The driver 45 moves the second movable part 37 in a direction parallel to the Z axis. The second linear mover 44 preferably includes a second linear guide 46. The second linear guide 46 guides the movement of the second movable part 37 in a direction parallel to the Z axis. In the example illustrated in FIG. 17, the second linear guide 46 is provided at the third movable part 38.

The third linear mover 47 includes a driver 48 (for example, a motor). The driver 48 moves the third movable part 38 in a direction parallel to the X axis. The third linear mover 47 preferably includes a third linear guide 49. The third linear guide 49 guides the movement of the third movable part 38 in a direction parallel to the X axis. In the example illustrated in FIG. 17, the third linear guide 49 movably supports the third movable part 38. The third linear guide 49 is provided at the base 10 of the machine tool 1.

### (Tool Changer 8)

The machine tool 1 preferably includes at least one tool changer 8. The at least one tool changer 8 is provided at any convenient position on the machine tool 1. The at least one tool changer 8 is capable of changing the first rotation tool T1 held by the machining head 30 with another first rotation tool. The at least one tool changer 8 is capable of changing the second rotation tool T2 held by the multi-joint arm 50 of the first robot 5 with another second rotation tool. In a case that the machine tool 1 includes the second robot 6, the at least one tool changer 8 is capable of changing the third rotation tool T3 held by the second multi-joint arm 60 of the second robot 6 with another third rotation tool.

In the example illustrated in FIG. 24, the at least one tool changer 8 includes the first tool changer 80a. The first tool changer 80a changes the first rotation tool T1 held by the machining head 30-1 with another first rotation tool T1-2. In the example illustrated in FIG. 24, the first tool changer 80a changes the first rotation tool T1 held by the machining head 30-1 taken out of at least one tool stocker 93 with another first rotation tool T1-2.

In the example illustrated in FIG. 24, the first tool changer 80a includes a first gripper 82a and a second gripper 83a. The first gripper 82a is capable of gripping the first rotation tool T1-1. The second gripper 83a is capable of gripping another first rotation tool T1-2.

As exemplified in FIG. 24, the first tool changer 80a may include a tool change arm 81a, an arm rotator 84a, and an arm mover 85a. The arm rotator 84a rotates the tool change arm 81a. The arm mover 85a linearly moves the tool change arm 81a.

It is to be noted that the machining head 30 may have access to the tool stocker 93 so that the machining head 30 directly changes the first rotation tool T1 held by the machining head 30 with another first rotation tool. In this case, the tool changers that change tools with respect to the machining head 30 are omitted.

In the example illustrated in FIG. 25, the at least one tool changer 8 includes a second tool changer 80b. The second tool changer 80b changes the second rotation tool T2 held by the multi-joint arm 50-1 via the tool holder 53 with another second rotation tool T2-2. As exemplified in FIG. 25, the second tool changer 80b may change the second rotation tool T2 held by the multi-joint arm 50-1 via the tool holder 53 with another second rotation tool T2-2 taken out of the at least one tool stocker 93. In the example illustrated in FIG. 25, each second rotation tool T2 is a tool unattachable to the machining head 30 of the first machiner 3. In the example illustrated in FIG. 24, each first rotation tool T1 is a tool unattachable to the tool holder 53 of the first robot 5.

It is to be noted that the tool holder 53 may have access to the tool stocker 93 so that the tool holder 53 directly changes the second rotation tool T2 supported by the tool holder 53 with another second rotation tool. In this case, the tool changers that change tools with respect to the tool holder 53 are omitted.

In the example illustrated in FIG. 26, the at least one tool changer 8 changes the third rotation tool T3 held by the second multi-joint arm 60-1 via the second tool holder 63 with another third rotation tool T3-2. As exemplified in FIG. 26, the at least one tool changer 8 may change the third rotation tool T3 held by the second multi-joint arm 60-1 via the second tool holder 63 with another third rotation tool T3-2 taken out of the at least one tool stocker 93. In the example illustrated in FIG. 26, each third rotation tool T3 is a tool unattachable to the machining head 30 of the first machiner 3. In the example illustrated in FIG. 24, each first rotation tool T1 is a tool unattachable to the second tool holder 63 of the second robot 6.

It is to be noted that the second tool holder 63 may have access to the tool stocker 93 so that the second tool holder 63 directly changes the third rotation tool T3 supported by the second tool holder 63 with another third rotation tool. In this case, the tool changers that change tools with respect to the second tool holder 63 are omitted.

### (Machining of Workpiece W Supported by Table 21 in Non-inclined state)

As exemplified in FIG. 17, "the table 21 in non-inclined state", as used in this specification, refers to a state in which the first axis AX1 is substantially perpendicular to a horizontal plane. It is to be noted that in a case that the table 21 is a table unturnable about the first axis AX1, "the table 21 in non-inclined state", as used in this specification, refers to a state in which the upper surface of the table is substantially parallel to a horizontal plane.

In the example illustrated in FIG. 27, the first machiner 3 and the first robot 5 are capable of simultaneously machining the workpiece W supported by the table 21 in non-inclined state. In other words, when the table 21 supporting the workpiece W is in non-inclined state, the first machiner 3 and the first robot 5 are capable of simultaneously machining the workpiece W supported by the table 21.

In the example illustrated in FIG. 27, the first machiner 3, the first robot 5, and the second robot 6 are capable of simultaneously machining the workpiece W supported by the table 21 in non-inclined state. In other words, when the table 21 supporting the workpiece W is in non-inclined state, the first machiner 3, the first robot 5, and the second robot 6 are capable of simultaneously machining the workpiece W supported by the table 21.

### (Machining of Workpiece W Supported by Table 21 in Inclined State)

As exemplified in FIG. 28, "the table 21 in inclined state", as used in this specification, refers to a state in which the first axis AX1 is non-parallel to the vertical direction. It is to be noted that in a case that the table 21 is a table unturnable about the first axis AX1, "the table 21 in inclined state", as used in this specification, refers to a state in which the upper surface of the table is inclined relative to a horizontal plane.

In the example illustrated in FIG. 28, the first machiner 3 and the first robot 5 are capable of simultaneously machining the workpiece W supported by the table 21 in inclined state. In other words, when the table 21 supporting the workpiece W is in inclined state, the first machiner 3 and the first robot 5 are capable of simultaneously machining the workpiece W supported by the table 21.

In the example illustrated in FIG. 28, the first machiner 3, the first robot 5, and the second robot 6 are capable of simultaneously machining the workpiece W supported by the table 21 in inclined state. In other words, when the table 21 supporting the workpiece W is in inclined state, the first machiner 3, the first robot 5, and the second robot 6 are capable of simultaneously machining the workpiece W supported by the table 21.

In the examples illustrated in FIGs. 27 and 28, both in a case that the table 21 supporting the workpiece W is non-inclined state and in a case that the table 21 supporting the workpiece W is in inclined state, the first machiner 3, the first robot 5, and the second robot 6 are capable of simultaneously machining the workpiece W supported by the table 21. This configuration ensures that the workpiece W can be efficiently machined into a complicated shape.

### (Controller 7)

In the example illustrated in FIG. 19, the controller 7 controls the work holder 2, the first machiner 3, and the first robot 5. In a case that the machine tool 1 includes the second robot 6, the controller 7 controls the second robot 6. In a case that the machine tool 1 includes at least one tool changer 8, the controller 7 control the at least one tool changer 8. In a case that the machine tool 1 includes the third driver 18, which moves the table assembly 20 in a direction parallel to the first direction *DR1*, the controller 7 controls the third driver 18. In a case that the machine tool 1 includes the fourth driver 19d (see FIG. 8), which moves the first machiner 3 in a direction parallel to the first direction *DR1*, the controller 7 controls the fourth driver 19d. Similarly to the first embodiment, the controller 7 may be implemented by a single computer or a plurality of computers. For example, the machine tool 1 may include a first computer that controls the first machiner 3 and the work holder 2, a second computer that controls the first robot 5, and a third computer that controls the second robot 6. These computers may cooperate to function as the controller 7 of the machine tool 1.

As exemplified in FIG. 29, the controller 7 includes a hardware processor 70 (hereinafter simply referred to as "processor 70"), the memory 72, a communication circuit 74, and an inputter 76 (for example, a touch panel-equipped display 762). The processor 70, the memory 72, the communication circuit 74, and the inputter 76 are connected to each other via a bus 78. Data necessary for the machining of the workpiece W (for example, workpiece data 726, which includes data regarding the shape of the workpiece W and data regarding the machining position at which to machine the workpiece W) may be input into the controller 7 via the inputter 76, or may be input into the controller 7 from another computer via the communication circuit 74. It is to be noted that the inputter 76 will not be limited to the touch panel-equipped display 762. For example, the controller 7 may include: an inputter 76 such as a button, a switch, a lever, a pointing device, and a keyboard; and a display that displays the data input to the inputter 76 or other information.

By executing the machining program 722, which is stored in the memory 72, the controller 7 generates a plurality of control commands. The communication circuit 74 transmits the plurality of control commands generated by the controller 7 to a plurality of control target instruments (for example, the work holder 2, the first machiner 3, the first robot 5, the second robot 6, the at least one tool changer 8, the third driver 18, and the fourth driver 19d illustrated in FIG. 8). In this manner, the controller 7 is capable of controlling a plurality of control target instruments.

In the example illustrated in FIG. 29, the controller 7 may transmit a turning command E1 to the first driver 23 of the work holder 2. Upon receipt of the turning command E1 from the controller 7, the first driver 23 turns the table 21 about the first axis AX1.

In the example illustrated in FIG. 29, the controller 7 may transmit the tilting command E2 to the second driver 26 of the work holder 2. Upon receipt of the tilting command E2 from the controller 7, the second driver 26 tilts the table 21 about the second axis AX2.

In the example illustrated in FIG. 29, the controller 7 may transmit the shifting command E3 to the plurality of linear movers 4 of the first machiner 3. Upon receipt of the shifting command E3 from the controller 7, the plurality of linear movers 4 move the machining head 30. More specifically, the controller 7 transmits the first linear mover 41 to the first shifting command E3-1. Upon receipt of the first shifting command E3-1, the first linear mover 41 moves the machining head 30 in a direction parallel to the Y axis (for example, in a direction parallel to the first rotation axis AD1). The controller 7 transmits a second shifting command E3-2 to the second linear mover 44. Upon receipt of the second shifting command E3-2, the second linear mover 44 moves the machining head 30 in a direction parallel to the Z axis (for example, in a direction parallel to the vertical direction). The controller 7 also transmits a third linear mover 47 to the third shifting command E3-3. Upon receipt of the third shifting command E3-3, the third linear mover 47 moves the machining head 30 in a direction parallel to the X axis (for example, in a direction perpendicular to both the Y axis and the Z axis).

In the example illustrated in FIG. 29, the controller 7 may transmit the first rotation command E4 to the first rotational driver 34 of the first machiner 3. Upon receipt of the first rotation command E4 from the controller 7, the first rotational driver 34 rotates the first rotation tool T1 about the first rotation axis AD1.

In the example illustrated in FIG. 29, the controller 7 may transmit the first motion command E5 to a plurality of arm drivers 59 (for example, a plurality of motors MT) of the first robot 5. Upon receipt of the first motion command E5 from the controller 7, the plurality of arm drivers 59 operate the plurality of respective joints of the multi-joint arm 50.

In the example illustrated in FIG. 29, the controller 7 may transmit the second rotation command E6 to the second rotational driver 54 of the tool holder 53. Upon receipt of the second rotation command E6 from the controller 7, the second rotational driver 54 rotates the second rotation tool T2 about the second rotation axis AD2.

In the example illustrated in FIG. 29, the controller 7 may transmit the tool shifting command E7 to the tool linear mover 55 of the tool holder 53. Upon receipt of the tool shifting command E7 from the controller 7, the tool linear mover 55 moves the second rotation tool T2 in a direction parallel to the second rotation axis AD2.

In the example illustrated in FIG. 29, the controller 7 may transmit a second motion command E8 to a plurality of arm drivers 69 (for example, a plurality of motors MT) of the second robot 6. Upon receipt of the second motion command E8 from the controller 7, the plurality of arm drivers 69 operate the plurality of respective joints of the second multi-joint arm 60.

In the example illustrated in FIG. 29, the controller 7 may transmit a third rotation command E9 to the third rotational driver 64 of the second tool holder 63. Upon receipt of the third rotation command E9 from the controller 7, the third rotational driver 64 rotates the third rotation tool T3 about the third rotation axis AD3.

In the example illustrated in FIG. 29, the controller 7 may transmit a second tool shifting command E10 to the second tool linear mover 65 of the second tool holder 63. Upon receipt of the second tool shifting command E10 from the controller 7, the second tool linear mover 65 moves the third rotation tool T3 in a direction parallel to the third rotation axis AD3.

In the example illustrated in FIG. 29, the controller 7 may transmit the table shifting command E11 to the third driver 18. Upon receipt of the table shifting command E11 from the controller 7, the third driver 18 moves the table assembly 20 in a direction parallel to the first direction *DR1.* Alternatively or additionally, the controller 7 may transmit the machiner shifting command E12 to the fourth driver 19d. Upon receipt of the machiner shifting command E12 from the controller 7, the fourth driver 19d moves the first machiner 3 in a direction parallel to the first direction *DR1.*

In the example illustrated in FIG. 29, the controller 7 may transmit a tool exchange command E13 to at least one tool changer 8. Upon receipt of the tool exchange command E13 from the controller 7, the at least one tool changer 8 may change the first rotation tool T1 held by the machining head 30 with another first rotation tool. Upon receipt of the tool exchange command E13 from the controller 7, the at least one tool changer 8 may change the second rotation tool T2 held by the multi-joint arm 50 with another second rotation tool. Upon receipt of the tool exchange command E13 from the controller 7, the at least one tool changer 8 may change the third rotation tool T3 held by the second multi-joint arm 60 with another third rotation tool.

For example, the controller 7 transmits a first tool exchange command E13-1 to the first tool changer 80a. Upon receipt of the first tool exchange command E13-1, the first tool changer 80a changes the first rotation tool T1 held by the machining head 30 with another first rotation tool. The controller 7 also transmits a second tool exchange command E13-2 to the second tool changer 80b. Upon receipt of the second tool exchange command E13-2, the second tool changer 80b changes the second rotation tool T2 held by the multi-joint arm 50 with another second rotation tool.

### (First Machining Mode M1)

The controller 7 is capable of performing first machining mode M1. The first machining mode M1 is to cause the workpiece W supported by the table 21 to be machined using the first rotation tool T1 held by the machining head 30, and includes: transmitting the shifting command E3 to the plurality of linear movers 4; and transmitting the first rotation command E4 to the first rotational driver 34. In the first machining mode M1, the first rotation tool T1 rotating about the first rotation axis AD1 is moved by the plurality of linear movers 4. This configuration enables the workpiece W to be machined highly accurately.

In a case that the first rotation tool T1 held by the machining head 30 is a surface working tool (for example, a milling tool), the controller 7 performs transmitting the shifting command E3 to the plurality of linear movers 4 and transmitting the first rotation command E4 to the first rotational driver 34 to cause the surface working tool to move in a direction substantially perpendicular to the first rotation axis AD1 in a state in which the surface working tool rotating about the first rotation axis AD1 is in contact with the workpiece W supported by the table 21. In this manner, the surface machining on the workpiece W is performed highly accurately.

In a case that the first rotation tool T1 held by the machining head 30 is a hole-opening tool (for example, a drill), the controller 7 performs transmitting the first shifting command E3-1 to the first linear mover 41 and transmitting the first rotation command E4 to the first rotational driver 34 to cause the hole-opening tool to move in a direction substantially parallel to the first rotation axis AD1 in a state in which the hole-opening tool rotating about the first rotation axis AD1 is in contact with the workpiece W supported by the table 21. Upon receipt of the first shifting command E3-1, the first linear mover 41 linearly moves the hole-opening tool in a direction substantially parallel to the first rotation axis AD1. In this manner, the machining to form a hole in the workpiece W is performed highly accurately.

In a case that the first rotation tool T1 held by the machining head 30 is a tapping tool, the controller 7 performs transmitting the first shifting command E3-1 to the first linear mover 41 and transmitting the first rotation command E4 to the first rotational driver 34 to cause the tapping tool to move in a direction substantially parallel to the first rotation axis AD1 in a state in which the tapping tool rotating about the first rotation axis AD1 is in contact with the workpiece W supported by the table 21. Upon receipt of the first shifting command E3-1, the first linear mover 41 linearly moves the tapping tool in a direction substantially parallel to the first rotation axis AD1. In this manner, a threaded hole is formed highly accurately in the workpiece W.

### (Second Machining Mode M2)

The controller 7 is capable of performing second machining mode M2. The second machining mode M2 is to cause the workpiece W supported by the table 21 to be machined using the second rotation tool T2 held by the multi-joint arm 50, and includes: transmitting the first motion command E5 to the plurality of arm drivers 59 of the first robot 5; transmitting the second rotation command E6 to the second rotational driver 54 of the tool holder 53; and transmitting the tool shifting command E7 to the tool linear mover 55 of the tool holder 53. In the second machining mode M2, the position and the orientation of the second rotation tool T2 are changed using the multi-joint arm 50 at a stage before the second rotation tool T2 contacts the workpiece W. This configuration ensures that the position and the orientation of the second rotation tool T2 can be set in any desired manner in accordance with the shape, size, orientation, posture, and other properties of the workpiece W.

In a case that the second rotation tool T2 held by the multi-joint arm 50 is a hole-opening tool (for example, a drill), the controller 7 performs transmitting the second rotation command E6 to the second rotational driver 54 and transmitting the tool shifting command E7 to the tool linear mover 55 to cause the hole-opening tool to move in a direction substantially parallel to the second rotation axis AD2 in a state in which the hole-opening tool rotating about the second rotation axis AD2 is in contact with the workpiece W supported by the table 21. Upon receipt of the tool shifting command E7, the tool linear mover 55 linearly moves the hole-opening tool in a direction substantially parallel to the second rotation axis AD2. In this manner, the machining to form a hole in the workpiece W is performed highly accurately.

In a case that the second rotation tool T2 held by the multi-joint arm 50 is a tapping tool, the controller 7 performs transmitting the second rotation command E6 to the second rotational driver 54 and transmitting the tool shifting command E7 to the tool linear mover 55 to cause the tapping tool to move in a direction substantially parallel to the second rotation axis AD2 in a state in which the tapping tool rotating about the second rotation axis AD2 is in contact with the workpiece W supported by the table 21. Upon receipt of the tool shifting command E7, the tool linear mover 55 linearly moves the tapping tool in a direction substantially parallel to the second rotation axis AD2. In this manner, a threaded hole is formed highly accurately in the workpiece W.

### (Third Machining Mode M3)

The controller 7 is capable of performing third machining mode M3. The third machining mode M3 is to cause the workpiece W supported by the table 21 to be machined using the third rotation tool T3 held by the second multi-joint arm 60, and at least includes: transmitting the second motion command E8 to the plurality of arm drivers 69 of the second robot 6; transmitting the third rotation command E9 to the third rotational driver 64 of the second tool holder 63; and transmitting the second tool shifting command E10 to the second tool linear mover 65 of the second tool holder 63. In the third machining mode M3, the position and the orientation of the third rotation tool T3 are changed using the second multi-joint arm 60 at a stage before the third rotation tool T3 contacts the workpiece W. This configuration ensures that the position and the orientation of the third rotation tool T3 can be set in any desired manner in accordance with the shape, size, orientation, posture, and other properties of the workpiece W.

In a case that the third rotation tool T3 held by the second multi-joint arm 60 is a hole-opening tool (for example, a drill), the controller 7 performs transmitting the third rotation command E9 to the third rotational driver 64 and transmitting the second tool shifting command E10 to the second tool linear mover 65 to cause the hole-opening tool to move in a direction substantially parallel to the third rotation axis AD3 in a state in which the hole-opening tool rotating about the third rotation axis AD3 is in contact with the workpiece W supported by the table 21. Upon receipt of the second tool shifting command E10, the second tool linear mover 65 linearly moves the hole-opening tool in a direction substantially parallel to the third rotation axis AD3. In this manner, the machining to form a hole in the workpiece W is performed highly accurately.

In a case that the third rotation tool T3 held by the second multi-joint arm 60 is a tapping tool, the controller 7 performs transmitting the third rotation command E9 to the third rotational driver 64 and transmitting the second tool shifting command E10 to the second tool linear mover 65 to cause the tapping tool to move in a direction substantially parallel to the third rotation axis AD3 in a state in which the tapping tool rotating about the third rotation axis AD3 is in contact with the workpiece W supported by the table 21. Upon receipt of the second tool shifting command E10, the second tool linear mover 65 linearly moves the tapping tool in a direction substantially parallel to the third rotation axis AD3. In this manner, a threaded hole is formed highly accurately in the workpiece W.

### (Turning Mode M4)

The controller 7 is capable of performing turning mode M4. The turning mode M4 is to cause the workpiece W supported by the table 21 to turn about the first axis AX1, and includes transmitting the turning command E1 to the first driver 23 of the work holder 2. The turning mode M4 may include: shifting the table assembly 20 from the proceeding position P2 to the withdrawal position P3; turning the table 21 supporting the workpiece W about the first axis AX1 in a state in which the table assembly 20 is at the withdrawal position P3; and returning the table assembly 20 to the proceeding position P2 from the withdrawal position P3. In this case, the controller 7 performs transmitting the table shifting command E11 to the third driver 18 and transmitting the turning command E1 to the first driver 23 of the work holder 2 to cause: the table assembly 20 to move from the proceeding position P2 to the withdrawal position P3; the workpiece W to turn about the first axis AX1; and the table assembly 20 to move from the withdrawal position P3 to the proceeding position P2. It is to be noted that in a case that the workpiece W is a small-size workpiece, it is not necessary to move the table assembly 20 between the proceeding position P2 and the withdrawal position P3 at the time of performing the turning mode M4.

In a case that the table 21 is in inclined state, the controller 7 may perform the turning mode M4 after the state of the table 21 has been changed from inclined state to non-inclined state. Alternatively, in a case that there is no interference between the workpiece W and surrounding structures even if the table 21 in inclined state is turned about the first axis AX1, the table 21 in inclined state may be caused to turn about the first axis AX1 in the turning mode M4.

The configuration in which the controller 7 is capable of performing the turning mode M4 enables the machine tool 1 to change the orientation of the workpiece W relative to the first machiner 3. This enables the first machiner 3 to easily machine the first side surface Wc of the workpiece W (for example, the left side surface of the workpiece W), the second main surface Wb of the workpiece W (for example, the rear surface of the workpiece W), and the second side surface Wd of the workpiece W (for example, the right side surface of the workpiece W), in addition to the first main surface Wa of the workpiece W (for example, the front surface of the workpiece W).

### (Tilting Mode M5)

The controller 7 is capable of performing tilting mode M5. The tilting mode M5 is to cause the workpiece W supported by the table 21 to tilt about the second axis AX2, and includes transmitting the tilting command E2 to the second driver 26 of the work holder 2.

The configuration in which the controller 7 is capable of performing the tilting mode M5 enables the machine tool 1 to change the posture of the workpiece W relative to the first machiner 3. This enables the first machiner 3 to easily machine the workpiece W into a complicated shape (see FIG. 28). The first machiner 3 is also able to machine the apex surface We of the workpiece W in inclined state.

In the example illustrated in FIG. 10, the first robot 5 includes the list 52. The list 52 is provided at the leading end portion of the multi-joint arm 50. In response to the second driver 26 changing the posture of the workpiece W about the second axis AX2, the controller 7 may transmit, to the first robot 5, a command to correct the position and the orientation of the list 52. For example, the controller 7 transmits the first motion command E5 to the plurality of arm drivers 59 of the first robot 5 to correct the position and the orientation of the list 52 following the tilting of the table 21 about the second axis AX2. Upon receipt of the first motion command E5, the plurality of arm drivers 59 correct the position and the orientation of the list 52 following the tilting of the table 21 about the second axis AX2.

The position and the orientation of the list 52 are corrected based on a change in the posture of the workpiece W. This configuration prevents unintended interference between the workpiece W and the first robot 5. The above configuration also ensures that after the posture of the workpiece W has been changed, the first robot 5 is able to quickly resume the machining of the workpiece W.

Alternatively or additionally, based on the first driver 23 causing the table 21 to turn about the first axis AX1, the controller 7 may transmit, to the first robot 5, a command to correct the position and the orientation of the list 52.

In the example illustrated in FIG. 20, the second robot 6 includes the second list 62. The second list 62 is provided at the leading end portion of the second multi-joint arm 60. In response to the second driver 26 changing the posture of the workpiece W about the second axis AX2, the controller 7 may transmit, to the first robot 5, a command to correct the position and the orientation of the second list 62. For example, the controller 7 transmits the second motion command E8 to the plurality of arm drivers 69 of the second robot 6 to cause the position and the orientation of the second list 62 to be corrected following the tilting of the table 21 about the second axis AX2. Upon receipt of the second motion command E8, the plurality of arm drivers 69 correct the position and the orientation of the second list 62 following the tilting of the table 21 about the second axis AX2.

The position and the orientation of the second list 62 are corrected based on a change in the posture of the workpiece W. This configuration prevents unintended interference between the workpiece W and the second robot 6. The above configuration also ensures that after the posture of the workpiece W has been changed, the second robot 6 is able to quickly resume the machining of the workpiece W.

Alternatively or additionally, based on the first driver 23 causing the table 21 to turn about the first axis AX1, the controller 7 may transmit, to the second robot 6, a command to correct the position and the orientation of the second list 62.

### (First Tool Change Mode M6)

The controller 7 is capable of performing first tool change mode M6. The first tool change mode M6 is to cause the first rotation tool T1 held by the machining head 30 to be changed to another first rotation tool, and includes transmitting the first tool exchange command E13-1 to the first tool changer 80a.

The configuration in which the controller 7 is capable of performing the first tool change mode M6 enables the first machiner 3 to perform a plurality of kinds of machining (for example, surface machining, hole opening, tapping, and friction stir welding) on a single workpiece W.

### (Second Tool Change Mode M7)

The controller 7 is capable of performing second tool change mode M7. The second tool change mode M7 is to cause the second rotation tool T2 held by the multi-joint arm 50 to be changed to another second rotation tool, and includes transmitting the second tool exchange command E13-2 to the second tool changer 80b.

The configuration in which the controller 7 is capable of performing the second tool change mode M7 enables the first robot 5 perform a plurality of kinds of machining (for example, hole-opening and tapping) on a single workpiece W.

### (Third Tool Change Mode M8)

The controller 7 is capable of performing third tool change mode M8. The third tool change mode M8 is to cause the third rotation tool T3 held by the second multi-joint arm 60 to be changed to another third rotation tool, and includes transmitting a third tool exchange command E13-3 to a tool changer different from the second tool changer 80b or the second tool changer 80b.

The configuration in which the controller 7 is capable of performing the third tool change mode M8 enables the second robot 6 to perform a plurality of kinds of machining (for example, hole-opening and tapping) on a single workpiece W.

At least one of the turning of the table 21 supporting the workpiece W about the first axis AX1 and the tilting of the table 21 supporting the workpiece W about the second axis AX2 is performed. Then, the machining of the workpiece W supported by the table 21 is performed using the first group of rotation tools sequentially held by the machining head 30. This cycle is defined as machining cycle. The controller 7 repeats the machining cycle "N" or more times by executing the machining program 722, which is stored in the memory 72. It is to be noted that "N" is, for example, 1, 2, 3, 4, 5, 6, 7, 8, 9, 10, or so forth.

For example, by executing the machining program 722, which is stored in the memory 72, the controller 7 may perform a plurality of machining cycles including a first machining cycle and a second machining cycle. In the first machining cycle, the controller 7 may simultaneously perform a part of the first machining mode M1 and a part of the second machining mode M2. Also in the first machining cycle, the controller 7 may simultaneously perform a part of the first machining mode M1, a part of the second machining mode M2, and a part of the third machining mode M3. In the second machining cycle, the controller 7 may simultaneously perform a part of the first machining mode M1 and a part of the second machining mode M2. Also in the second machining cycle, the controller 7 may simultaneously perform a part of the first machining mode M1, a part of the second machining mode M2, and a part of the third machining mode M3.

While the first machining cycle and/or the second machining cycle are being performed, the controller 7 may perform (1) transmitting a first group of control commands to the first machiner 3 to cause the first machiner 3 to machine the workpiece W using the first rotation tool T1 held by the machining head 30, (2) transmitting the first tool exchange command E13-1 to at least one tool changer 8 (for example, the first tool changer 80a) to change the first rotation tool T1 held by the machining head 30 to another first rotation tool, and (3) transmitting a second group of control commands to the first machiner 3 to cause the first machiner 3 to machine the workpiece W using another first rotation tool held by the machining head 30.

While the first machining cycle and/or the second machining cycle are being performed, the controller 7 may perform (1) transmitting a third group of control commands to the first robot 5 to cause the workpiece W to be machined using the second rotation tool T2 held by the multi-joint arm 50, (2) transmitting the second tool exchange command E13-2 to at least one tool changer 8 (for example, the second tool changer 80b) to cause the second rotation tool T2 held by the multi-joint arm 50 to be changed to another second rotation tool, and (3) transmitting a fourth group of control commands to the first robot 5 to cause the workpiece W to be machined using another second rotation tool held by the multi-joint arm 50.

While the first machining cycle and/or the second machining cycle are being performed, the controller 7 may perform (1) transmitting a fifth group of control commands to the second robot 6 to cause the workpiece W to be machined using the third rotation tool T3 held by the second multi-joint arm 60, (2) transmitting the third tool exchange command E13-3 to at least one tool changer 8 to cause the third rotation tool T3 held by the second multi-joint arm 60 to be changed to another third rotation tool, and (3) transmitting a sixth group of control commands to the second robot 6 to cause the workpiece W to be machined using another third rotation tool held by the second multi-joint arm 60.

The controller 7 performs at least one of the first machining mode M1, the second machining mode M2, the turning mode M4, and the tilting mode M5 in combination with the first tool change mode M6 and the second tool change mode M7. This configuration ensures that the workpiece can be efficiently machined into a complicated shape using a plurality of kinds of tools.

The controller 7 also performs at least one of the first machining mode M1, the second machining mode M2, the third machining mode M3, the turning mode M4, and the tilting mode M5 in combination with the first tool change mode M6, the second tool change mode M7, and the third tool change mode M8. This configuration ensures that the workpiece can be more efficiently machined into a complicated shape using a plurality of kinds of tools.

### (Machining Shared between First Machiner 3, First Robot 5, and Second Robot 6)

The controller 7, which executes the machining program 722, which is stored in the memory 72, may transmit a control command to the first machiner 3 to cause the first machiner 3 to perform all aspects of the surface machining on the workpiece W. The controller 7, which executes the machining program 722, which is stored in the memory 72, may also transmit a control command to each of the first machiner 3, the first robot 5, and the second robot 6 to cause the first machiner 3 to perform a part of the machining to form the plurality of holes HL in the workpiece W, cause the first robot 5 to perform another part of the machining to form the plurality of holes HL in the workpiece W, and cause the second robot 6 to perform still another part of the machining to form the plurality of holes HL in the workpiece W.

### (Method of Machining Workpiece)

Next, the method according to the second embodiment of machining a workpiece will be described. The method according to the second embodiment of machining a workpiece may be performed using the machine tool 1A according to the first embodiment, may be performed using the machine tool 1B according to the second embodiment, or may be performed using another machine tool.

At first step ST101, the workpiece W is directly or indirectly attached to the table 21 of the work holder 2. First step ST101 is an attaching step. The attaching step (first step ST101) is similar to the attaching step (first step ST1) according to the first embodiment, and a description of the attaching step (first step ST101) will be omitted where otherwise a repetition of description occurs.

At second step ST102, a determination is made as to whether it is necessary to change the posture of the workpiece W (see FIG. 37). Second step ST102 is a first determination step. The first determination step is performed by the controller 7. More specifically, based on the machining program 722, which is stored in the memory 72, the controller 7 determines whether it is necessary to change the posture of the workpiece W.

In the first determination step (second step ST102), in a case that the controller 7 has determined that it is necessary to change the posture of the workpiece W, at least one of the turning of the workpiece W about the first axis AX1 and the tilting of the workpiece W about the second axis AX2 (more specifically, at least one of the turning of the table 21 supporting the workpiece W about the first axis AX1 and the tilting of the table 21 supporting the workpiece W about the second axis AX2) is performed.

For example, in the first determination step (second step ST102), in a case that the controller 7 has determined that it is at least necessary to turn the workpiece W about the first axis AX1, the table 21 supporting the workpiece W is turned about the first axis AX1 (turning step: third step ST103).

For example, in the first determination step (second step ST102), in a case that the controller 7 has determined that it is at least necessary to tilt the workpiece W about the second axis AX2, the table 21 supporting the workpiece W is caused to tilt about the second axis AX2 (tilting step: fourth step ST104). The turning step (third step ST103) and the tilting step (fourth step ST104) will be hereinafter referred to comprehensively as posture changing step.

The posture changing step may be performed in combination with the shifting step of shifting the table assembly 20 (see FIG. 38). More specifically, in a case that the controller 7 has determined that it is necessary to both linearly move the workpiece W and change the posture of the workpiece W, the table assembly 20 is linearly moved and the table 21 is turned or tilt.

For example, in a case that it has been determined that it is necessary to both linearly move the workpiece W and change the posture of the workpiece W, after first step ST101 (attaching step) is performed, the table assembly 20 is linearly moved from the receiving position P1 to the proceeding position P2, and the posture of the workpiece W is changed from the posture of the workpiece W at the receiving position P1 to the posture of the workpiece W suitable for an initial stage of the workpiece machining. In contrast, in a case that it has been determined that it is only necessary to linearly move the workpiece W, after first step ST101 (attaching step) is performed, the table assembly 20 is linearly moved from the receiving position P1 to the proceeding position P2, and the posture of the workpiece W is maintained.

In a case that the controller 7 has determined that it is not necessary to change the posture of the workpiece W (second step ST102: No) or the change of the posture of the workpiece W has been completed, the procedure proceeds to fifth step ST105, sixth step ST106, and/or seventh step ST107.

At fifth step ST105, the workpiece W supported by the table 21 is machined using the first group of rotation tools (T1-3, T1-4, T1-5, and T1-6) sequentially held by the machining head 30. Fifth step ST105 is a first machining step. The number of machining target positions on the workpiece W machined by the first group of rotation tools may be 10 or more, 20 or more, or 30 or more.

In the examples illustrated in FIGs. 30, 31, and 34, the first group of rotation tools sequentially held by the machining head 30 include a hole-opening tool T1-3 (for example, a drill), a tapping tool T1-4, and a surface working tool T1-6 (for example, a milling tool). The first group of rotation tools sequentially held by the machining head 30 may include a friction stir welding tool T1-7 (see, if necessary, FIG. 24). The changing of the first rotation tool T1 (for example, the hole-opening tool T1-3, the tapping tool T1-4, or the hole-forming tool T1-5) held by the machining head 30 to another first rotation tool (for example, the surface working tool T1-6 or the friction stir welding tool T1-7) is performed using, for example, the first tool changer 80a (see FIG. 24). The first group of rotation tools may include a plurality of identical-kind tools with different tool diameters. For example, the first group of rotation tools may include a first drill having a first level of tool diameter and a second drill having a second level of tool diameter.

The first machining step (fifth step ST105) encompasses moving the machining head 30 using the plurality of linear movers 4 in a state in which any one of the first group of rotation tools is in contact with the workpiece W supported by the table 21. In a case that the machining of the workpiece W is performed by moving the machining head 30 using the plurality of linear movers 4, the workpiece W can be machined highly accurately.

While the workpiece W is being machined using the first group of rotation tools (in other words, while any one of the first group of rotation tools is in contact with the workpiece W), the angle position of the table 21 about the first axis AX1 is preferably fixed, and the angle position of the table 21 about the second axis AX2 is preferably fixed.

At sixth step ST106, the workpiece W supported by the table 21 is machined using the second group of rotation tools (T2-3, T2-4, and T2-5) sequentially held by the multi-joint arm 50. Sixth step ST106 is a second machining step. The number of machining target positions on the workpiece W machined by the second group of rotation tools may be 10 or more, 20 or more, or 30 or more.

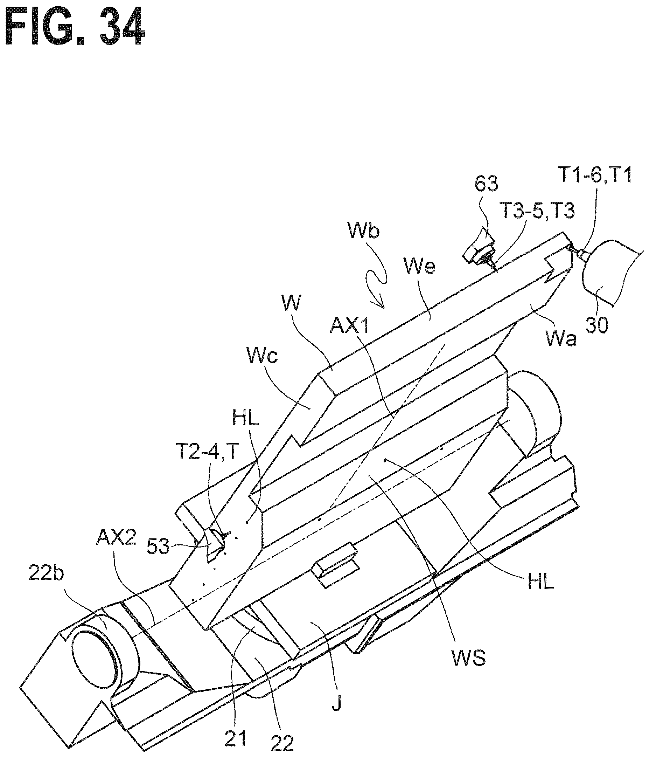

In the examples illustrated in FIGs. 33 and 34, the second group of rotation tools sequentially supported by the tool holder 53 of the first robot 5 include a hole-opening tool T2-3 (for example, a drill) and a tapping tool T2-4. The changing of the second rotation tool T2 (for example, the hole-opening tool T2-3) held by the multi-joint arm 50 to another second rotation tool (for example, the tapping tool T2-4) is performed using, for example, the second tool changer 80b (see FIG. 25). The second group of rotation tools may include a plurality of identical-kind tools with different tool diameters. For example, the second group of rotation tools may include a third drill having a third level of tool diameter and a fourth drill having a fourth level of tool diameter.

As exemplified in FIG. 11, the second machining step (sixth step ST106) may include such a step that the tool holder 53, which is mounted on the multi-joint arm 50, moves the second rotation tool T2, which rotates about the second rotation axis AD2, in a direction parallel to the second rotation axis AD2 using the tool linear mover 55. In a case that the second rotation tool T2 is moved using the tool linear mover 55, the second rotation tool T2 can be moved highly accurately.

While the workpiece W is being machined using the second group of rotation tools (in other words, while any one of the second group of rotation tools is in contact with the workpiece W), the angle position of the table 21 about the first axis AX1 is preferably fixed, and the angle position of the table 21 about the second axis AX2 is preferably fixed.

A part of the first machining step (fifth step ST105) and a part of the second machining step (sixth step ST106) may be simultaneously performed. A part of the first machining step (fifth step ST105) may be performed while the second machining step is not being performed. A part of the second machining step (sixth step ST106) may be performed while the first machining step is not being performed.

At seventh step ST107, the workpiece W supported by the table 21 is machined using the third group of rotation tools (T3-3, T3-4, and T3-5) sequentially held by the second multi-joint arm 60. Seventh step ST107 is a third machining step. The number of machining target positions on the workpiece W machined by the third group of rotation tools may be 10 or more, 20 or more, or 30 or more. It is to be noted that in a case that the machine tool 1 does not include the second robot 6, the third machining step (seventh step ST107) is omitted.

In the examples illustrated in FIGs. 30 and 31, the third group of rotation tools sequentially supported by the second tool holder 63 of the second robot 6 include a hole-opening tool T3-3 (for example, a drill) and a tapping tool T3-4. The changing of the third rotation tool T3 (for example, the hole-opening tool T3-3) held by the second multi-joint arm 60 to another third rotation tool (for example, the tapping tool T3-4) is performed using the second tool changer 80b (see FIG. 25) or a tool changer different from the second tool changer 80b. The third group of rotation tools may include a plurality of identical-kind tools with different tool diameters. For example, the third group of rotation tools may include a fifth drill having a fifth level of tool diameter and a sixth drill having a sixth level of tool diameter.

As exemplified in FIG. 21, the third machining step (seventh step ST107) may include causing the second tool holder 63, which is mounted on the second multi-joint arm 60, to move the third rotation tool T3 rotating about the third rotation axis AD3 in a direction parallel to the third rotation axis AD3 using the second tool linear mover 65. In a case that the third rotation tool T3 is moved using the second tool linear mover 65, the third rotation tool T3 can be moved highly accurately.

While the workpiece W being machined using the third group of rotation tools (in other words, while any one of the third group of rotation tools is in contact with the workpiece W), the angle position of the table 21 about the first axis AX1 is preferably fixed, and the angle position of the table 21 about the second axis AX2 is preferably fixed.

A part of the first machining step (fifth step ST105) and a part of the third machining step (seventh step ST107) may be simultaneously performed. A part of the first machining step (fifth step ST105) may be performed while the third machining step is not being performed. A part of the third machining step (seventh step ST107) may be performed while the first machining step is not being performed.

A part of the first machining step (fifth step ST105), a part of the second machining step (sixth step ST106), and a part of the third machining step (seventh step ST107) may be simultaneously performed.

At eighth step ST108, a determination is made as to whether the machining of the workpiece W has been completed. Eighth step ST108 is a second determination step. The second determination step is performed by the controller 7. More specifically, based on the machining program 722, which is stored in the memory 72, the controller 7 determines whether the machining of the workpiece W has been completed.

In the second determination step (eighth step ST108), in a case that the controller 7 has determined that the machining of the workpiece W is not completed yet (eighth step ST108: No), the procedure returns to second step ST102.

For example, after a part of the first machining step and a part of the second machining step have been performed (or a part of the first machining step, a part of the second machining step, and a part of the third machining step have been performed), at second step ST102, the controller 7 determines whether it is necessary to change the posture of the workpiece W. More specifically, based on the machining program 722, which is stored in the memory 72, the controller 7 determines whether it is necessary to change the posture of the workpiece W.

For example, in the first determination step (second step ST102), in a case that the controller 7 has determined that it is at least necessary to turn the workpiece W about the first axis AX1, the table 21 supporting the workpiece W is turned about the first axis AX1 (turning step: third step ST103). The turning step (in other words, turning the table 21 supporting the workpiece W about the first axis AX1) is performed using the first driver 23, which is included in the work holder 2. In other words, in the turning step (third step ST103), the first driver 23 turns the table 21 supporting the workpiece W about the first axis AX1.

For example, in the first determination step (second step ST102), in a case that the controller 7 has determined that it is at least necessary to tilt the workpiece W about the second axis AX2, the table 21 supporting the workpiece W is caused to tilt about the second axis AX2 (tilting step: fourth step ST104). The tilting step (in other words, the tilting of the table 21 supporting the workpiece W about the second axis AX2) is performed using the second driver 26, which is included in the work holder 2. In other words, in the tilting step (fourth step ST104), the second driver 26 causes the table 21 supporting the workpiece W to tilt about the second axis AX2.

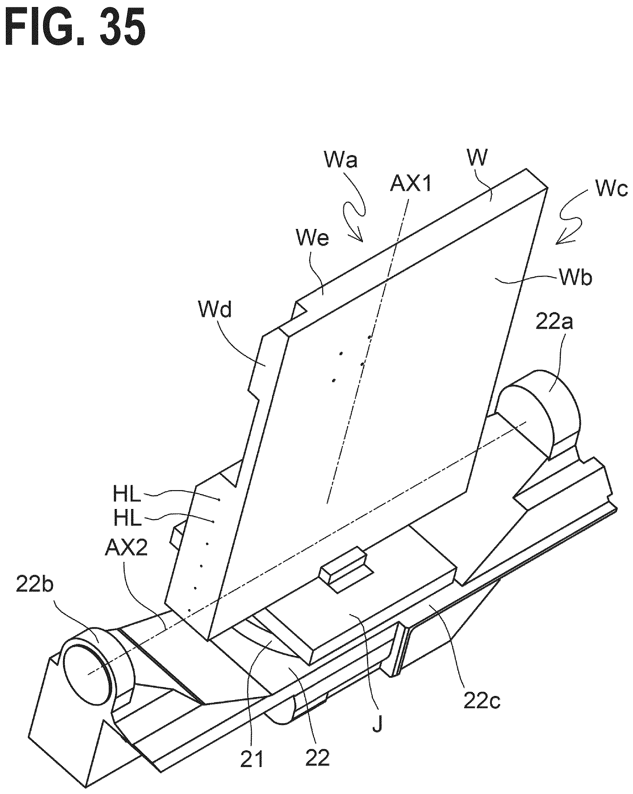

Both the turning step (third step ST103) and the tilting step (fourth step ST104) may be performed (see FIGs. 34 and 35). More specifically, in a case that the controller 7 has determined that it is at least necessary to both turn the workpiece W about the first axis AX1 and tilt the workpiece W about the second axis AX2, both the turning of the table 21 about the first axis AX1 and the tilting of the table 21 about the second axis AX2 are performed (turning-tilting step). In the turning-tilting step, either the turning of the table 21 or the tilting of the table 21 may be performed first. Also in the turning-tilting step, a part of the turning of the table 21 and a part of the tilting of the table 21 may be simultaneously performed.

The turning step (third step ST103) may be performed in combination with the shifting step of shifting the table assembly 20. The tilting step (fourth step ST104) may be performed in combination with the shifting step of shifting the table assembly 20. The turning-tilting step (third step ST103 and fourth step ST104) may be performed in combination with the shifting step of shifting the table assembly 20.

More specifically, in the first determination step (second step ST102), in a case that the controller 7 has determined that it is necessary to both linearly move the workpiece W and change the posture of the workpiece W, at least one of the turning of the workpiece W about the first axis AX1 and the tilting of the workpiece W about the second axis AX2 is performed in combination with the linear movement of the table assembly 20. It is to be noted that the table assembly 20 is linearly moved using the third driver 18.

For example, in the first determination step (second step ST102), in a case that the controller 7 has determined that it is at least necessary to linearly move the workpiece W and turn the workpiece W about the first axis AX1, (1) the table assembly 20 is linearly moved in the first direction *DR1* toward the withdrawal position P3 (see FIG. 5), (2) the table 21 supporting the workpiece W is turned about the first axis AX1 in a state in which the table assembly 20 is positioned at the withdrawal position P3 (see FIG. 6), and (3) the table assembly 20 is linearly moved in a direction opposite to the first direction *DR1* toward the proceeding position P2.

For example, in the first determination step (second step ST102), in a case that the controller 7 has determined that it is at least necessary to linearly move the workpiece W and tilt the workpiece W about the second axis AX2, (1) the table assembly 20 is linearly moved in a direction parallel to the first direction *DR1*, and (2) the table 21 supporting the workpiece W is caused to tilt about the second axis AX2.

It is to be noted that immediately before the table 21 supporting the workpiece W is turned about the first axis AX1, one of the table 21 and the first machiner 3 may be linearly moved in a direction away from the other of the table 21 and the first machiner 3; and immediately after the table 21 supporting the workpiece W has been turned about the first axis AX1, one of the table 21 and the first machiner 3 may be linearly moved in a direction toward the other of the table 21 and the first machiner 3. Moving one of the table 21 and the first machiner 3 in a direction away from the other of the table 21 and the first machiner 3 eliminates or minimizes interference between the first machiner 3 and the table 21 and between the first machiner 3 and the workpiece W during the turning of the table 21.

The turning step (third step ST103) may include causing the table 21 in inclined state to turn about the first axis AX1. Alternatively, the turning step (third step ST103) may include, after the state of the table 21 has been changed from inclined state to non-inclined state, causing the table 21 in non-inclined state to turn about the first axis AX1.

In the tilting step (fourth step ST104), in response to the second driver 26 changing the posture of the workpiece W about the second axis AX2, the controller 7 may transmit, to the first robot 5, a command to correct the position and the orientation of the list 52.

In the tilting step (fourth step ST104), the tilting of the table 21 supporting the workpiece W about the second axis AX2 may be performed with the table assembly 20 positioned at the withdrawal position P3 (see FIG. 19) or with the table assembly 20 positioned at the proceeding position P2 (see FIG. 19).

After the posture of the workpiece has been changed, the first machining step (fifth step ST105), the second machining step (sixth step ST106), and/or the third machining step (seventh step ST107) are performed again.

At eighth step ST108, a determination is made again as to whether the machining of the workpiece W has been completed (second determination step). In the second determination step (eighth step ST108), in a case that the controller 7 has determined that the machining of the workpiece W is not completed yet (eighth step ST108: No), the procedure returns to second step ST102.

In contrast, in the second determination step (eighth step ST108), in a case that the controller 7 has determined that the machining of the workpiece W is completed (eighth step ST108: Yes), the workpiece W is moved to the removal position P6 (see, if necessary, FIG. 16) (ninth step ST109). Ninth step ST109 is a workpiece movement step of moving the workpiece to the removal position.

The workpiece movement step of moving the workpiece to the removal position (ninth step ST109) includes shifting the table assembly 20 from the proceeding position P2 to the removal position P6 (see, if necessary, FIG. 16). The removal position P6 may be a position identical to the receiving position P1 (see FIG. 19) or may be a position different from the receiving position P1.

The workpiece movement step of moving the workpiece to the removal position (ninth step ST109) may include changing the posture of the workpiece W.

At tenth step ST110, the workpiece W is removed from the table 21. Tenth step ST110 is a removal step. The removal step (tenth step ST110) may include moving the door 12 from closed position to open position; and moving the workpiece W from the machining chamber CB to outside the machining chamber CB so as to cross the workpiece passage opening OP.

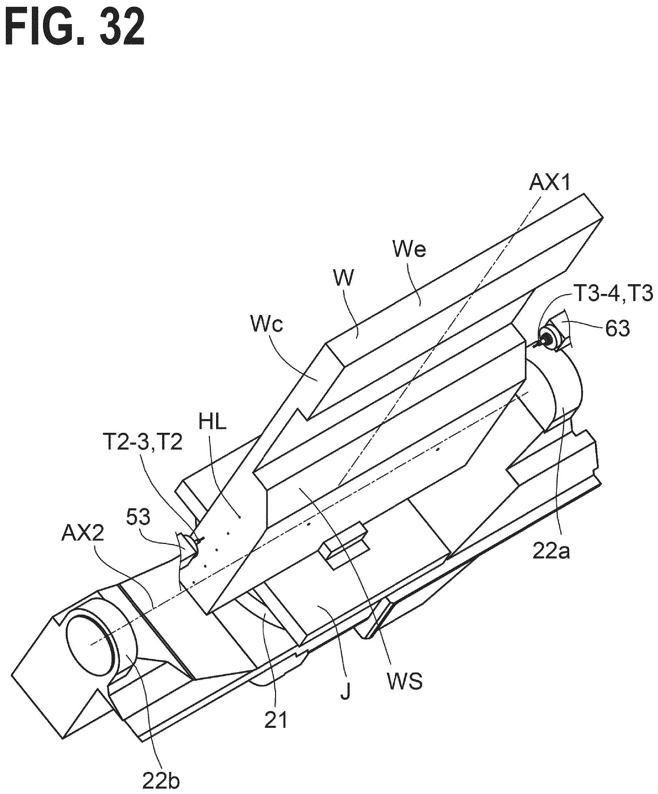

In the method according to the second embodiment of machining a workpiece, as exemplified in FIGs. 30 and 32, after a part of the first machining step (fifth step ST105) and a part of the second machining step (sixth step ST106) have been simultaneously performed, the table 21 supporting the workpiece W is caused to tilt about the second axis AX2. In other words, a part of the step of machining the workpiece W supported by the table 21 using the first group of rotation tools sequentially held by the machining head 30 and a part of the step of machining the workpiece W supported by the table 21 using the second group of rotation tools sequentially held by the multi-joint arm 50 are simultaneously performed before a single tilting step is performed (in other words, before the step of causing the table 21 supporting the workpiece W to tilt about the second axis AX2 is performed).

Also in the method according to the second embodiment of machining a workpiece, as exemplified in FIGs. 32 and 34, after the table 21 supporting the workpiece W has been caused to tilt about the second axis AX2, a part of the first machining step (fifth step ST105) and a part of the second machining step (sixth step ST106) are simultaneously performed. In other words, a part of the step of machining the workpiece W supported by the table 21 using the first group of rotation tools sequentially held by the machining head 30 and a part of the step of machining the workpiece W supported by the table 21 using the second group of rotation tools sequentially held by the multi-joint arm 50 are simultaneously performed after a single tilting step is performed (in other words, after the step of causing the table 21 supporting the workpiece W to tilt about the second axis AX2 is performed).

By simultaneously performing a part of the first machining step (fifth step ST105) and a part of the second machining step (sixth step ST106) before or after a single tilting step, the workpiece W can be machined more efficiently and in a shorter period of time. As exemplified in FIGs. 30, 32, and 34, before or after a single tilting step, a part of the first machining step (fifth step ST105), a part of the second machining step (sixth step ST106), and a part of the third machining step (seventh step ST107) may be simultaneously performed.

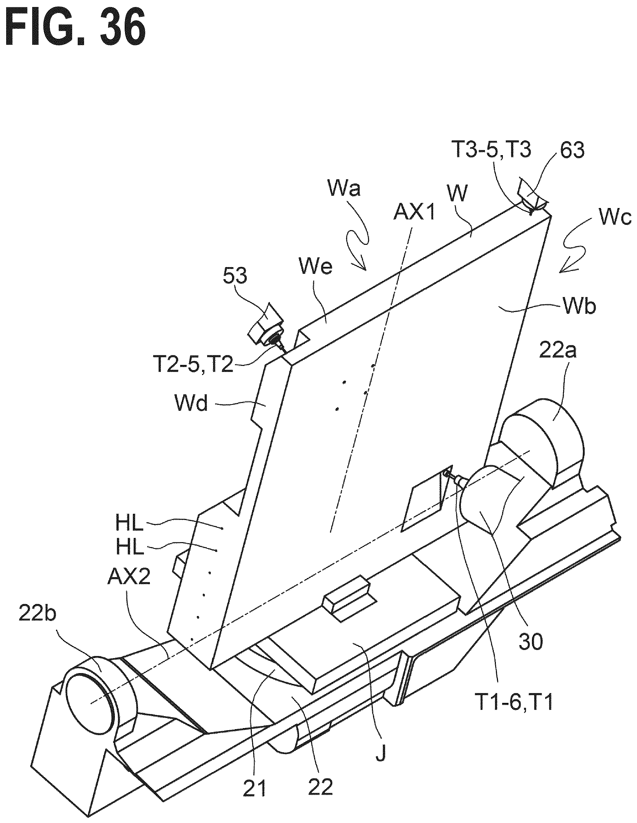

As exemplified in FIGs. 34 and 36, (1) a part of the first machining step (fifth step ST105), a part of the second machining step (sixth step ST106), and a part of the third machining step (seventh step ST107) may be simultaneously performed; (2) then, the table 21 may be caused to turn about the first axis AX1 and the table 21 may be caused to tilt about the second axis AX2; and (3) then, a part of the first machining step (fifth step ST105), a part of the second machining step (sixth step ST106), and a part of the third machining step (seventh step ST107) may be simultaneously performed.

At least one of the turning of the table 21 supporting the workpiece W about the first axis AX1 and the tilting of the table 21 supporting the workpiece W about the second axis AX2 is performed. Then, the machining of the workpiece W supported by the table 21 is performed using the first group of rotation tools sequentially held by the machining head 30. This cycle is defined as machining cycle. The method according to the second embodiment of machining a workpiece may include repeating the machining cycle "N" or more times. It is to be noted that "N" is, for example, 1, 2, 3, 4, 5, 6, 7, 8, 9, 10, or so forth.

For example, the method according to the second embodiment of machining a workpiece may include performing a plurality of machining cycles including the first machining cycle and the second machining cycle.

The first machining cycle may include machining the workpiece W supported by the table 21 by simultaneously using the first group of rotation tools sequentially held by the machining head 30 and the second group of rotation tools sequentially held by the multi-joint arm 50. Additionally, the first machining cycle may include machining the workpiece W supported by the table 21 by simultaneously using the first group of rotation tools sequentially held by the machining head 30, the second group of rotation tools sequentially held by the multi-joint arm 50, and the third group of rotation tools sequentially held by the second multi-joint arm 60.

The second machining cycle may include machining the workpiece W supported by the table 21 by simultaneously using the first group of rotation tools sequentially held by the machining head 30 and the second group of rotation tools sequentially held by the multi-joint arm 50. Additionally, the second machining cycle may include machining the workpiece W supported by the table 21 by simultaneously using the first group of rotation tools sequentially held by the machining head 30, the second group of rotation tools sequentially held by the multi-joint arm 50, and the third group of rotation tools sequentially held by the second multi-joint arm 60.

At least one of the first machining cycle and the second machining cycle may include: machining the workpiece W using the first rotation tool T1 held by the machining head 30; changing the first rotation tool T1 held by the machining head 30 to another first rotation tool; and machining the workpiece W using another first rotation tool held by the machining head 30.

At least one of the first machining cycle and the second machining cycle may include: machining the workpiece W using the second rotation tool T2 held by the multi-joint arm 50; changing the second rotation tool T2 held by the multi-joint arm 50 to another second rotation tool; and machining the workpiece W using another second rotation tool held by the multi-joint arm 50.

At least one of the first machining cycle and the second machining cycle may include: machining the workpiece W using the third rotation tool T3 held by the second multi-joint arm 60; changing the third rotation tool T3 held by the second multi-joint arm 60 to another third rotation tool; and machining the workpiece W using another third rotation tool held by the second multi-joint arm 60.

### (Machining Variations)

In the example illustrated in FIG. 30, the machine tool 1 is capable of simultaneously machining the first main surface Wa of the workpiece W using the first rotation tool T1 held by the machining head 30 and machining the first side surface Wc of the workpiece W using the second rotation tool T2 held by the multi-joint arm 50. More specifically, by executing the machining program 722, which is stored in the memory 72, the controller 7 transmits a control command to the first machiner 3 and the first robot 5 to simultaneously cause the first main surface Wa of the workpiece W to be machined by the first rotation tool T1 and cause the first side surface Wc of the workpiece W to be machined by the second rotation tool T2 held by the multi-joint arm 50.

In the examples illustrated in FIGs. 33 and 34, when the table 21 is in inclined state, the machine tool 1 is capable of simultaneously machining the workpiece W using the first rotation tool T1 held by the machining head 30 and machining the workpiece W using the second rotation tool T2 held by the multi-joint arm 50. More specifically, by executing the machining program 722, which is stored in the memory 72, the controller 7 transmits a control command to the first machiner 3 and the first robot 5 to cause the workpiece W supported by the table 21 in inclined state to be machined simultaneously by the first rotation tool T1 held by the machining head 30 and the second rotation tool T2 held by the multi-joint arm 50. As exemplified in FIG. 33, when the table 21 is in inclined state, the machine tool 1 may be capable of machining the inclined surface WS of the workpiece W using the first rotation tool T1 held by the machining head 30 (for example, the machine tool 1 may be capable of performing machining to form a hole in the inclined surface WS of the workpiece W). As exemplified in FIG. 34, when the table 21 is in inclined state, the machine tool 1 may be capable of machining the apex surface We of the workpiece W using the first rotation tool T1 held by the machining head 30 (for example, the machine tool 1 may be capable of performing surface machining on the apex surface We of the workpiece W).

In the example illustrated in FIG. 34 or 36, the machine tool 1 is capable of simultaneously performing surface machining on the workpiece W using the first rotation tool T1 (more specifically, the surface working tool T1-6) held by the machining head 30 and machining to form the hole HL in the workpiece W using the second rotation tool T2 (for example, the tapping tool T2-4 or the hole-opening tool T2-5) held by the multi-joint arm 50. Simultaneously with these machinings, the machine tool 1 may be capable of performing machining to form the hole HL in the workpiece W using the third rotation tool T3 held by the second multi-joint arm 60.

More specifically, by executing the machining program 722, which is stored in the memory 72, the controller 7 transmits a control command to the first machiner 3, the first robot 5, and the second robot 6 to cause the workpiece W supported by the table 21 to be machined simultaneously by the surface working tool T1-6 held by the machining head 30, the tapping tool T2-4 or the hole-opening tool T2-5 held by the multi-joint arm 50, and the tapping tool T3-4 or a hole-opening tool T3-5 held by the second multi-joint arm 60.

Alternatively, by executing the machining program 722, which is stored in the memory 72, the controller 7 may transmit a control command to the first machiner 3 and the first robot 5 to cause the workpiece W supported by the table 21 to be machined simultaneously by the friction stir welding tool T1-7 held by the machining head 30 (see FIG. 24) and the tapping tool T2-4 or the hole-opening tool T2-5 held by the multi-joint arm 50.

In the example illustrated in FIG. 34 or 36, the machine tool 1 is capable of simultaneously machining three different surfaces of the workpiece W using the first rotation tool T1 held by the machining head 30, the second rotation tool T2 held by the multi-joint arm 50, and the third rotation tool T3 held by the second multi-joint arm 60.

More specifically, by executing the machining program 722, which is stored in the memory 72, the controller 7 transmits a control command to the first machiner 3, the first robot 5, and the second robot 6 to cause three different surfaces of the workpiece W supported by the table 21 to be machined simultaneously by the first rotation tool T1 held by the machining head 30, the second rotation tool T2 held by the multi-joint arm 50, and the third rotation tool T3 held by the second multi-joint arm 60.

The present invention will not be limited to the above-described and/or modifications; it will be appreciated that the embodiments may be modified or changed in any manner deemed convenient within the technical spirit and scope of the present invention. Also, the various techniques used in each of the embodiments and/or modifications are applicable in other embodiments and/or modifications insofar as no technical contradiction occurs. Further, the optional configurations in the embodiments and/or modifications may be omitted in any manner deemed convenient.

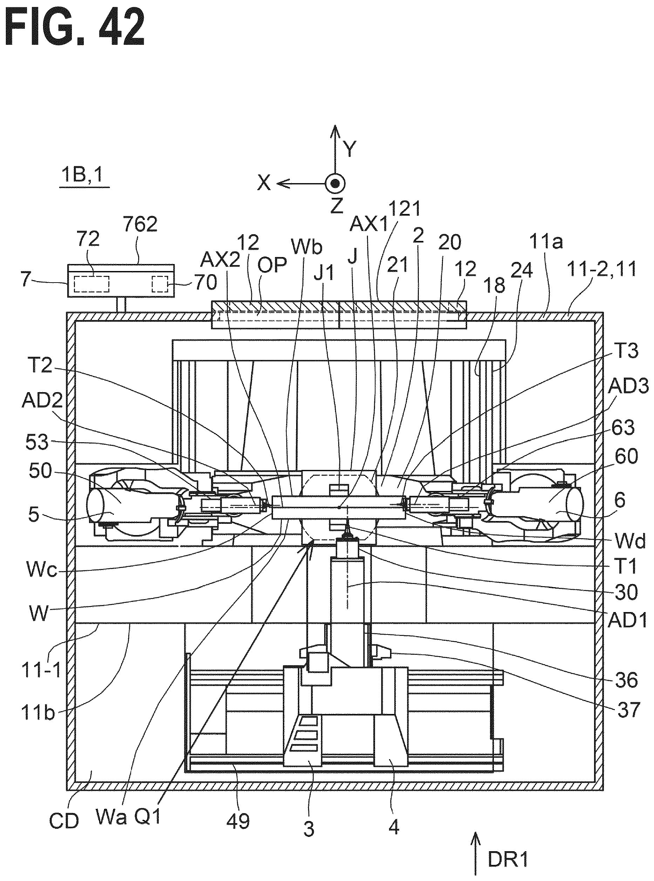

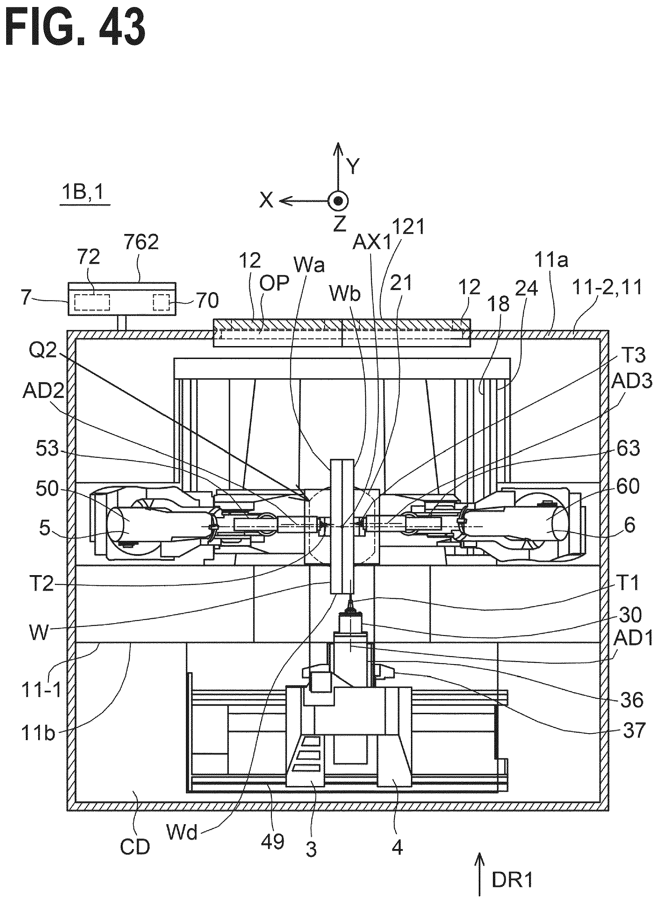

In the examples illustrated in FIGs. 40 and 41 (or in the examples illustrated in FIGs. 42 and 43), the work holder 2 is capable of indexing the table 21 to a plurality of different indexing angle positions (Q1 and Q2) about the first axis AX1. For example, the work holder 2 is capable of indexing the table 21 to a first indexing angle position Q1 about the first axis AX1 and capable of indexing the table 21 to a second indexing angle position Q2 about the first axis AX1. In the examples illustrated in FIGs. 40 and 41 (or in the examples illustrated in FIGs. 42 and 43), the second indexing angle position Q2 is a position different from the first indexing angle position Q1 by 90 degrees about the first axis AX1. Alternatively, the second indexing angle position Q2 may be a position different from the first indexing angle position Q1 by any predetermined angle about the first axis AX1. The work holder 2 may also be capable of indexing the table 21 to a plurality of indexing angle positions different from each other by at least 90 degrees about the first axis AX1. The work holder 2 may also be capable of indexing the table 21 to a plurality of indexing angle positions different from each other by at least 45 degrees about the first axis AX1.

In the examples illustrated in FIGs. 40 and 41, the machine tool 1 is capable of performing (1) machining the workpiece W supported by the table 21 simultaneously using two rotation tools respectively supported by the first machiner 3 and the first robot 5, (2) after the workpiece W has been machined by the two rotation tools, turning the table 21 supporting the workpiece W by a predetermined angle (for example, 90 degrees or 180 degrees) about the first axis AX1, and (3) after the table 21 has been turned by the predetermined angle about the first axis AX1, machining the workpiece W supported by the table 21 simultaneously using the two rotation tools or other two rotation tools supported anew by the first machiner 3 and the first robot 5 as a result of tool changing.

In the examples illustrated in FIGs. 42 and 43, the machine tool 1 is capable of performing (1) machining the workpiece W supported by the table 21 simultaneously using three rotation tools respectively supported by the first machiner 3, the first robot 5, and the second robot 6, (2) after the workpiece W has been machined by the three rotation tools, turning the table 21 supporting the workpiece W by a predetermined angle (for example, 90 degrees or 180 degrees) about the first axis AX1, and (3) after the table 21 has been turned by the predetermined angle about the first axis AX1, machining the workpiece W supported by the table 21 simultaneously using the three rotation tools or other three rotation tools supported anew by using the first machiner 3, the first robot 5, and the second robot 6 as a result of tool changing.

In the example illustrated in FIG. 42, the machine tool 1 is capable of simultaneously machining the first main surface Wa of the workpiece W, the first side surface Wc of the workpiece W, and the second side surface Wd of the workpiece W supported by the table 21 using three rotation tools respectively supported by the first machiner 3, the first robot 5, and the second robot 6. Also in the example illustrated in FIG. 43, the machine tool 1 is capable of simultaneously machining the first main surface Wa of the workpiece W, the second main surface Wb of the workpiece W, and a side surface of the workpiece W (for example, the second side surface Wd) supported by the table 21 using three rotation tools respectively supported by the first machiner 3, the first robot 5, and the second robot 6.

In the examples illustrated in FIGs. 40 and 41 (or in the examples illustrated in FIGs. 42 and 43), the first robot 5 and the first machiner 3 are provided at two different angle positions around the work holder 2 in a plan view. This makes it easier for the first machiner 3 and the first robot 5 to simultaneously machine the workpiece W without interference between the first machiner 3 and the first robot 5. This improves machining efficiency and eliminates or minimizes the expansion of the installation space of the machine tool 1. In the examples illustrated in FIGs. 40 and 41 (or in the examples illustrated in FIGs. 42 and 43), the machining head 30 and the multi-joint arm 50 are capable of approaching the workpiece W supported by the table 21 from angles different from each other by approximately 90 degrees in a plan view. This more effectively prevents interference between the first machiner 3 and the first robot 5.

In the examples illustrated in FIGs. 40 and 41 (or in the examples illustrated in FIGs. 42 and 43), the first robot 5, the first machiner 3, and the workpiece passage opening OP are provided at three different angle positions around the work holder 2 in a plan view. In this case, the workpiece W can be easily transferred into or out of the machining chamber CB. This also eliminates or minimizes the expansion of the installation space of the machine tool 1. Also, by looking at the inside of the machine tool 1 through the workpiece passage opening OP, the state of the plurality of tools, including the first rotation tool T1 and the second rotation tool T2, can be easily checked. It is to be noted that the door 12 is preferably provided with a window 121, through which the inside of the machining chamber CB is visually recognizable from outside the machining chamber CB. In this case, by looking at the inside of the machine tool 1 through the window 121, the state of the plurality of tools, including the first rotation tool T1 and the second rotation tool T2, can be easily checked.

In the examples illustrated in FIGs. 42 and 43, the first robot 5, the second robot 6, the first machiner 3, and the workpiece passage opening OP are provided at four different angle positions around the work holder 2 in a plan view. This makes it easier for the first machiner 3, the first robot 5, and the second robot 6 to simultaneously machine the workpiece W without interference between the first machiner 3, the first robot 5, and the second robot 6. This improves machining efficiency and eliminates or minimizes the expansion of the installation space of the machine tool 1. In the examples illustrated in FIGs. 42 and 43, the machining head 30 and the multi-joint arm 50 are capable of approaching the workpiece W supported by the table 21 from angles different from each other by approximately 90 degrees in a plan view. The machining head 30 and the second multi-joint arm 60 are capable of approaching the workpiece W supported by the table 21 from angles different from each other by approximately 90 degrees in a plan view. This more effectively prevents interference between the first machiner 3, the first robot 5, and the second robot 6.

The configuration in which the first robot 5, the second robot 6, the first machiner 3, and the workpiece passage opening OP are provided at four different angle positions around the work holder 2 in a plan view ensures that the workpiece W can be easily transferred into or out of the machining chamber CB. This also eliminates or minimizes the expansion of the installation space of the machine tool 1. Also, by looking at the inside of the machine tool 1 through the workpiece passage opening OP or the window 121, the state of the plurality of tools, including the first rotation tool T1, the second rotation tool T2, and the third rotation tool T3, can be easily checked.

In the examples illustrated in FIGs. 42 and 43, the work holder 2 is provided between the first robot 5 and the second robot 6 in a plan view. This makes it easier for the first robot 5 and the second robot 6 to simultaneously machine the workpiece W without interference between the first robot 5 and the second robot 6. This improves machining efficiency and eliminates or minimizes the expansion of the installation space of the machine tool 1.

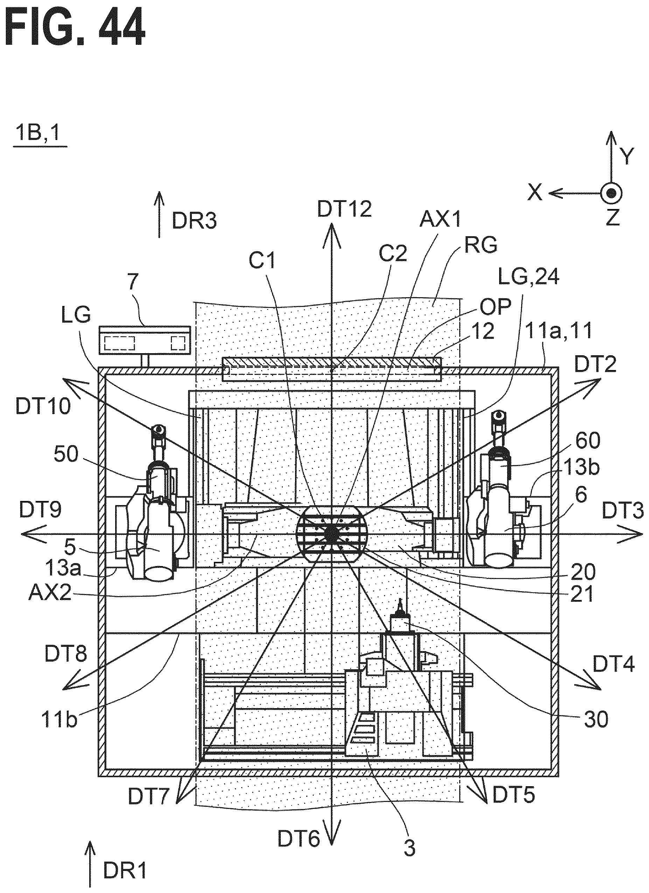

In the example illustrated in FIG. 44, the machine tool 1 includes linear guides LG (more specifically, the guide rails 24). The linear guides LG movably support the table assembly 20. As exemplified in FIG. 44, the direction in which the table assembly 20 is guided by the linear guides LG is defined as third direction *DR 3.* Also as exemplified in FIG. 44, the region formed by imaginarily extending the region occupied by the table assembly 20 in a direction parallel to the third direction *DR 3* is defined as imaginary region RG. In FIG. 44, to make the imaginary region RG easily recognizable, the imaginary region RG is hatched with dots. In the example illustrated in FIG. 44, the first machiner 3 is provided at a position at which the first machiner 3 overlaps the imaginary region RG in a plan view. The workpiece passage opening OP, which is formed in one wall 11, which defines the machining chamber CB, is provided at a position at which the workpiece passage opening OP overlaps the imaginary region RG in a plan view. The first robot 5 is provided at or near one edge of the imaginary region RG in a plan view. The second robot 6 is provided at another edge of the imaginary region RG in a plan view. In other words, the imaginary region RG extends between the first robot 5 and the second robot 6 in a plan view. In the example illustrated in FIG. 44, the support base 13a, which supports the first robot 5, is provided outside the imaginary region RG in a plan view. The support base 13b, which supports the second robot 6, is provided outside the imaginary region RG in a plan view. In the example illustrated in FIG. 44, the first robot 5 is provided at a position at which the first robot 5 faces the linear guides LG in a plan view. The second robot 6 is provided at a position at which the second robot 6 faces the linear guides LG in a plan view.

As exemplified in FIG. 44, when the table 21 is at a position closest to the first machiner 3, the area center of the table 21 (more specifically, when the table 21 is at a position closest to the first machiner 3, the area center of the upper surface of the table 21) is defined as first center C1. It is to be noted that the table 21 may be a table movable in a direction away from the first machiner 3, or may be a table unmovable in a direction away from the first machiner 3.

As exemplified in FIG. 44, in a plan view, the direction from the first center C1 toward a center C2 of the workpiece passage opening OP (more specifically, the area center of the workpiece passage opening OP in a plan view) is defined as 12 o'clock direction DT12. In a plan view, the first machiner 3 is provided so as to overlap, for example, at least one of a ray DT5, which extends in a 5 o'clock direction from the first center C1, a ray DT6, which extends in a 6 o'clock direction from the first center C1, and a ray DT7, which extends in a 7 o'clock direction from the first center C1. In a plan view, the first robot 5 is provided so as to overlap, for example, at least one of a ray DT2, which extends in a 2 o'clock direction from the first center C1, a ray DT3, which extends in a 3 o'clock direction from the first center C1, a ray DT4, which extends in a 4 o'clock direction from the first center C1, a ray DT8, which extends in a 8 o'clock direction from the first center C1, a ray DT9, which extends in a 9 o'clock direction from the first center C1, and a ray DT10, which extends in a 10 o'clock direction from the first center C1. In a plan view, the first robot 5 may be provided so as to overlap at least one of the ray DT8, which extends in the 8 o'clock direction from the first center C1, the ray DT9, which extends in the 9 o'clock direction from the first center C1, and the ray DT10, which extends in the 10 o'clock direction from the first center C1. In a plan view, the second robot 6 may be provided so as to overlap at least one of the ray DT2, which extends in the 2 o'clock direction from the first center C1, the ray DT3, which extends in the 3 o'clock direction from the first center C1, and the ray DT4, which extends in the 4 o'clock direction from the first center C1.

In the examples illustrated in FIGs. 1 and 17, the first rotation axis AD1, which is the rotation axis of the first rotation tool T1 held by the machining head 30, is substantially parallel to a horizontal plane. Alternatively, the first rotation axis AD1 may be substantially parallel to the vertical direction or may be inclined relative to both the horizontal plane and the vertical direction.

In the first and second embodiments, such an example has been described that the table 21 is turnable about the first axis AX1.

Alternatively, in each of the machine tool 1A according to the first embodiment and the machine tool 1B according to the second embodiment, the configuration in which the table 21 is turnable about the first axis AX1 may be an optional configuration.

In other words, the machine tool 1A according to the first embodiment and the machine tool 1B according to the second embodiment each include (1) the work holder 2, which includes the table 21, which holds a workpiece, (2) the first machiner 3, which includes: the machining head 30, which holds the first rotation tool T1, which machines the workpiece supported by the table 21; and the plurality of linear movers 4, which three-dimensionally move the machining head 30, and (3) the first robot 5, which includes the multi-joint arm 50, which changes the position and the orientation of the second rotation tool T2, the first robot 5 machining the workpiece supported by the table 21 using the second rotation tool T2. In contrast, among the plurality of configurations described in the first or second embodiment, configurations other than the configurations (1) to (3) may be employed or unemployed in the machine tool 1A according to the first embodiment or the machine tool 1B according to the second embodiment.

The method according to the first embodiment of machining a workpiece and the method according to the second embodiment of machining a workpiece each include (1) a step of mounting the workpiece W directly or indirectly on the table 21 of the work holder 2, (2) a step of machining the workpiece W supported by the table 21 using a first group of rotation tools sequentially held by the machining head 30 of the first machiner 3 (first machining step), and (3) a step of machining the workpiece W supported by the table 21 using a second group of rotation tools sequentially held by the multi-joint arm 50 of the first robot 5 (second machining step). In contrast, among the plurality of steps described in the first or second embodiment, steps other than the steps (1) to (3) may be employed or unemployed in the method according to the first embodiment of machining a workpiece or the method according to the second embodiment of machining a workpiece.

### Reference Signs List

1, 1A, 1B ... Machine tool, 2 ... Work holder, 3 ... First machiner, 4 ... Linear mover, 5 ... First robot, 6 ... Second robot, 7 ... Controller, 8 ... Tool changer, 10 ... Base, 11 ... Wall, 11-1 ... First wall, 11-2 ... Second wall, 11-3 ... Third wall, 11-4 ... Fourth wall, 11a ... Fix wall, 11b ... Movable wall, 11b-1 ... First movable wall, 11b-2 ... Second movable wall, 12 ... Door, 13a, 13b ... Support base, 18 ... Third driver, 19d ... Fourth driver, 19r ... Guide rail, 20 ... Table assembly, 21 ... Table, 22 ... Block, 22a ... First end portion, 22b ... Second end portion, 22c ... Center portion, 23 ... First driver, 24 ... Guide rail, 25 ... Support base, 25a ... First support base, 25b ... Second support base, 26 ... Second driver, 30 ... Machining head, 31 ... Spindle, 32 ... Support, 33 ... Bearing, 34 ... First rotational driver, 35 ... Tilting driver, 36 ... First movable part, 37 ... Second movable part, 38 ... Third movable part, 38c ... Column, 41 ... First linear mover, 42 ... Driver, 43 ... First linear guide, 44 ... Second linear mover, 45 ... Driver, 46 ... Second linear guide, 47 ... Third linear mover, 48 ... Driver, 49 ... Third linear guide, 50 ... Multi-joint arm, 51a ... First portion of multi-joint arm, 51b ... Second portion of multi-joint arm, 51c ... Third portion of multi-joint arm, 51d ... Fourth portion of multi-joint arm, 51e ... Fifth portion of multi-joint arm, 51f ... Sixth portion of multi-joint arm, 52 ... List, 53 ... Tool holder, 54 ... Second rotational driver, 55 ... Tool linear mover, 56 ... Fixed portion, 56r ... Linear guide, 57 ... Movable portion, 59 ... Arm driver, 60 ... Second multi-joint arm, 61a... first portion of second multi-joint arm, 61b ... Second portion of second multi-joint arm, 61c ... Third portion of second multi-joint arm, 61d ... Fourth portion of second multi-joint arm, 61e ... Fifth portion of second multi-joint arm, 61f ... Sixth portion of second multi-joint arm, 62 ... Second list, 63 ... Second tool holder, 64 ... Third rotational driver, 65 ... Second tool linear mover, 66 ... Fixed portion, 66r ... Linear guide, 67 ... Movable portion, 69 ... Arm driver, 70 ... Hardware processor, 72 ... Memory, 74 ... Communication circuit, 76 ... Inputter, 78 ... Bus, 80a ... First tool changer, 80b ... Second tool changer, 81a ... Tool change arm, 82a ... First gripper, 83a ... Second gripper, 84a ... Arm rotator, 85a ... Arm mover, 91 ... Coolant liquid supplier, 91n ... Emission nozzle, 93 ... Tool stocker, 100 ... Machine tool system, 101 ... Third robot, 102 ... Third multi-joint arm, 103 ... Gripper, 121 ... Window, 131a, 131b ... Upper surface of support base, 722 ... Machining program, 726 ... Workpiece data, 762 ... Touch panel-equipped display, CB ... Machining chamber, CD ... Second chamber, E 1 ... Turning command, E2 ... Tilting command, E3 ... Shifting command, E3-1 ... First shifting command, E3-2 ... Second shifting command, E3-3 ... Third shifting command, E4 ... First rotation command, E5 ... First motion command, E6 ... Second rotation command, E7 ... Tool shifting command, E8 ... Second motion command, E9 ... Third rotation command, E10 ... Second tool shifting command, E11 ... Table shifting command, E12 ... Machiner shifting command, E13 ... Tool exchange command, E13-1 ... First tool exchange command, E13-2 ... Second tool exchange command, E13-3 ... Third tool exchange command, HL ... Hole, J ... Jig, J1 ... Chuck, LG ... Linear guide, MT ... Motor, OP ... Workpiece passage opening, T1, T1-1, T1-2 ... First rotation tool, T1-3 ... Hole-opening tool, T1-4 ... Tapping tool, T1-5 ... Hole-forming tool, T1-6 ... Surface working tool, T1-7 ... Friction stir welding tool, T2, T2-1 and T2-2 ... Second rotation tool, T2-3 ... Hole-opening tool, T2-4 ... Tapping tool, T2-5 ... Hole-opening tool, T3, T3-1, T3-2 ... Third rotation tool, T3-3 ... Hole-opening tool, T3-4 ... Tapping tool, T3-5 ... Hole-opening tool, W ... Workpiece, WS ... Inclined surface of workpiece, Wa ... First main surface of workpiece, Wb ... Second main surface of workpiece, Wc ... First side surface of workpiece, Wd ... Second side surface of workpiece, We ... Apex surface of workpiece

## Claims

1. A machine tool comprising:
a work holder comprising a table configured to support a workpiece;
a first machiner comprising:
a machining head configured to hold a first rotation tool that is configured to machine the workpiece supported by the table; and
a plurality of linear movers configured to move the machining head three-dimensionally; and
a first robot comprising a multi-joint arm that is configured to change a position and an orientation of a second rotation tool, the first robot being configured to machine the workpiece supported by the table using the second rotation tool,
wherein the work holder comprises a first driver configured to turn the table about a first axis.

2. The machine tool according to claim 1, wherein the work holder comprises a second driver configured to tilt the table about a second axis different from the first axis.

3. The machine tool according to claim 1 or 2,
wherein the first machiner comprises a first rotational driver configured to rotate the first rotation tool about a first rotation axis, and
wherein the first axis is oriented in a direction substantially perpendicular to a direction parallel to the first rotation axis, or the table is tiltable to orient the first axis in the direction substantially perpendicular to the direction parallel to the first rotation axis.

4. The machine tool according to any one of claims 1 to 3, further comprising:
a wall defining a machining chamber in which the machining head and the multi-joint arm are provided; and
a coolant liquid supplier configured to supply coolant liquid toward the workpiece supported by the table.

5. The machine tool according to any one of claims 1 to 4,
wherein the work holder is configured to index the table to a plurality of different indexing angle positions about the first axis, and
wherein in a plan view, the first robot and the first machiner are provided at two different angle positions around the work holder.

6. The machine tool according to any one of claims 1 to 3, further comprising:
a wall defining a machining chamber; and
a door configured to open and close a workpiece passage opening formed in the wall,
wherein in a plan view, the work holder is provided between the first machiner and the workpiece passage opening, and
wherein in the plan view, the workpiece passage opening, the first robot, and the first machiner are provided around the work holder.

7. The machine tool according to claim 6,
wherein the work holder is configured to index the table to a plurality of different indexing angle positions about the first axis, and
wherein in the plan view, the first robot, the first machiner, and the workpiece passage opening are provided at three different angle positions around the work holder.

8. The machine tool according to claim 6, further comprising a second robot comprising a second multi-joint arm configured to change a position and an orientation of the third rotation tool, the second robot being configured to machine, using the third rotation tool, the workpiece supported by the table,
wherein in the plan view, the workpiece passage opening, the first robot, the first machiner, and the second robot are provided around the work holder.

9. The machine tool according to claim 8, wherein in the plan view, the work holder is provided between the first robot and the second robot.

10. The machine tool according to any one of claims 1 to 9, further comprising a third driver configured to move a table assembly including the table and the first driver in a direction parallel to a first direction, the first direction being defined as a direction from the first machiner toward the work holder in a plan view.

11. The machine tool according to claim 10,
wherein the table assembly is movable in the direction parallel to the first direction at least between a proceeding position and a withdrawal position,
wherein the proceeding position is a position at which the workpiece supported by the table can be machined using the first machiner, and
wherein the withdrawal position is a position at which the workpiece supported by the table can be turned about the first axis without interfering with the first machiner.

12. The machine tool according to any one of claims 1 to 9, further comprising a fourth driver configured to move the first machiner in a direction parallel to a first direction, the first direction being defined as a direction from the first machiner toward the work holder in a plan view.

13. The machine tool according to claim 12,
wherein the first machiner is movable in a direction parallel to the first direction between a proceeding position and a withdrawal position,
wherein the proceeding position is a position at which the workpiece supported by the table can be machined using the first machiner, and
wherein the withdrawal position is a position at which the workpiece supported by the table can be turned about the first axis without interfering with the first machiner.

14. The machine tool according to any one of claims 1 to 13,
wherein surface machining of the workpiece is performed using the first machiner alone, and
wherein machining to form a plurality of holes in the workpiece is shared between both the first machiner and the first robot.

15. The machine tool according to any one of claims 1 to 13, wherein surface machining of the workpiece using the first rotation tool held by the machining head and machining to form a hole in the workpiece using the second rotation tool held by the multi-joint arm can be performed simultaneously.

16. The machine tool according to claim 2, further comprising a controller configured to control the first robot,
wherein the first robot comprises a list provided at a leading end portion of the multi-joint arm, and
wherein the controller is configured to transmit, to the first robot, a command to correct a position and an orientation of the list upon the second driver changing a posture of the workpiece about the second axis.

17. The machine tool according to claim 2, further comprising a controller configured to control the second driver,
wherein the controller is configured to execute a machining program stored in a memory to transmit a tilting command to the second driver so as to change an inclined surface of the workpiece from a tilted posture to a perpendicular posture,
wherein in the tilted posture, the inclined surface of the workpiece is tilted relative to a first rotation axis, the first rotation axis being a rotation axis of the first rotation tool, and
wherein in the perpendicular posture, the inclined surface of the workpiece is substantially perpendicular to the first rotation axis.

18. The machine tool according to any one of claims 1 to 17,
wherein the first robot comprises a tool holder that is mounted on the multi-joint arm and that is configured to support the second rotation tool, and
wherein the tool holder comprises
a rotational driver configured to rotate the second rotation tool about a rotation axis, and
a tool mover configured to move the second rotation tool in a direction parallel to the rotation axis.

19. The machine tool according to any one of claims 1 to 9, further comprising a linear guide configured to movably support a table assembly including the table and the first driver,
wherein a direction in which the table assembly is guided by the linear guide is defined as a third direction, and a region formed by imaginarily extending a region occupied by the table assembly in a direction parallel to the third direction is defined as an imaginary region,
wherein in a plan view, the first machiner is provided so as to overlap the imaginary region, and
wherein in the plan view, the first robot is provided at an edge portion of the imaginary region.

20. The machine tool according to any one of claims 1 to 3, further comprising:
a wall defining a machining chamber; and
a door configured to open and close a workpiece passage opening formed in the wall,
wherein an area center of the table provided at a position closest to the first machiner is defined as a first center, and a direction from the first center toward a center of the workpiece passage opening in a plan view is defined as a 12 o'clock direction,
wherein in the plan view, the first machiner is provided so as to overlap at least one of a ray extending in a 5 o'clock direction from the first center, a ray extending in a 6 o'clock direction from the first center, and a ray extending in a 7 o'clock direction from the first center, and
wherein in the plan view, the first robot is provided so as to overlap at least one of a ray extending in a 2 o'clock direction from the first center, a ray extending in a 3 o'clock direction from the first center, a ray extending in a 4 o'clock direction from the first center, a ray extending in a 8 o'clock direction from the first center, a ray extending in a 9 o'clock direction from the first center, and a ray extending in a 10 o'clock direction from the first center.

21. A method of machining a workpiece, the method comprising:
a step of mounting a workpiece directly or indirectly on a table of a work holder;
a first machining step of machining the workpiece supported by the table using a first group of rotation tools sequentially held by a machining head of a first machiner;
a second machining step of machining the workpiece supported by the table using a second group of rotation tools sequentially held by a multi-joint arm of a first robot; and
a step of turning the table supporting the workpiece about a first axis,
wherein the first machining step comprises moving the machining head using a plurality of linear movers,
wherein after a part of the first machining step and a part of the second machining step have been simultaneously performed, the table supporting the workpiece is turned about the first axis, and
wherein after the table supporting the workpiece has been turned about the first axis, the part of the first machining step and the part of the second machining step are simultaneously performed.

22. The method of machining a workpiece, according to claim 21,
wherein after the part of the first machining step and the part of the second machining step have been simultaneously performed, the table supporting the workpiece is tilted about a second axis, and
wherein after the table supporting the workpiece has been tilted about the second axis, the part of the first machining step and the part of the second machining step are simultaneously performed.

23. The method of machining a workpiece, according to claim 21 or 22, further comprising:
a step of linearly moving one of the table and the first machiner in a direction away from the other of the table and the first machiner immediately before the table supporting the workpiece is turned about the first axis; and
a step of linearly moving the one of the table and the first machiner in a direction toward the other of the table and the first machiner immediately after the table supporting the workpiece is turned about the first axis.
